(19) Europäisches Patentamt
European Patent Office
Office européen des brevets

(11) **EP 4 174 101 A1**

(12) **EUROPEAN PATENT APPLICATION**
published in accordance with Art. 153(4) EPC

(43) Date of publication:
**03.05.2023 Bulletin 2023/18**

(21) Application number: **21833798.8**

(22) Date of filing: **30.06.2021**

(51) International Patent Classification (IPC):
**C08G 18/09** (2006.01)  **C08G 18/00** (2006.01)
**C08G 18/32** (2006.01)  **C08G 18/64** (2006.01)
**C08G 18/76** (2006.01)  **C08K 3/016** (2018.01)
**C08K 3/02** (2006.01)  **C08K 5/521** (2006.01)
**C08L 75/02** (2006.01)  **C08G 101/00** (2006.01)

(52) Cooperative Patent Classification (CPC):
**C08G 18/00; C08G 18/09; C08G 18/28;
C08G 18/32; C08G 18/64; C08G 18/76;
C08G 18/79; C08K 3/016; C08K 3/02; C08K 3/32;
C08K 5/521; C08L 75/02; C08L 75/04**

(86) International application number:
**PCT/JP2021/024879**

(87) International publication number:
**WO 2022/004832 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2020  JP 2020113559
31.03.2021  JP 2021062458**

(71) Applicant: **Inoac Technical Center Co., Ltd.
Nagoya-shi, Aichi 450-0003 (JP)**

(72) Inventors:
• **ITOU, Yoshitaka**
**Hadano-shi, Kanagawa 259-1304 (JP)**
• **MIYATA, Atsushi**
**Hadano-shi, Kanagawa 259-1304 (JP)**
• **OTA, Hideo**
**Hadano-shi, Kanagawa 259-1304 (JP)**

(74) Representative: **Hoffmann Eitle
Patent- und Rechtsanwälte PartmbB
Arabellastraße 30
81925 München (DE)**

(54) **UREA RESIN COMPOSITION AND POLYUREA FOAM**

(57)    A urea resin composition capable of providing a polyurea foam exhibiting excellent flame retardancy and shape retention during combustion, capable of suppressing deterioration over time in a wet-heat environment, exhibiting excellent adhesion to an adherend during coating, being hardly cracked even if flame contact occurs, and hardly allowing carbonization to proceed to a deep portion of the foam. A urea resin composition comprising a polyisocyanate compound (A), a polyamine compound (B), a trimerization catalyst, a foaming agent, a foam stabilizer, and a flame retardant.

**FIG. 1**

**Description**

Technical Field

The present invention relates to a urea resin composition and a polyurea foam.

A urethane foam is used as a heat retaining material or a heat insulating material of a building application, a marine vessel for carrying oil and gas, or an electric appliance such as a refrigerator. In particular, in construction of reinforced concrete, a method of applying a urethane foam by a spraying method is used because with such a method, heat insulating construction is easy. The spraying method is a method of spraying a stock solution of a urethane foam onto a building frame using a spraying device and simultaneously foaming the same to form a urethane foam heat insulating structure.

In general, a polyurethane resin is excellent in elasticity, flexibility, and tensile strength, and exhibits excellent performance in abrasion resistance and impact strength. However, since a urethane foam alone has a high flammability, there has been a study to improve the flame retardancy of a urethane foam.

As such a urethane foam, Patent Document 1 discloses a composition for forming a water-foamed rigid polyisocyanurate foam, comprising an organic polyphenylmethane polyisocyanate, a polyol, a trimerization catalyst, water as a foaming agent, a foam stabilizer, and a flame retardant. The invention of Patent Document 1 is characterized in that the polyol contains a chlorinated polyether polyol having a primary and/or secondary hydroxyl group obtained by carrying out the ring-opening polymerization of a chlorinated epoxy compound in the presence of an acid catalyst using an active hydrogen-containing compound as a polymerization initiator, and that the organic polyphenylmethane polyisocyanate and the polyol are blended so that the isocyanate index is 120 to 400. It has been shown that the urethane foam using the composition for forming a water-foamed rigid polyisocyanurate foam of Patent Document 1 does not adversely affect the working environment and the like and is excellent in flame retardancy.

Patent Document 2 discloses a flame-retardant urethane resin composition comprising a polyisocyanate compound, a polyol compound, a trimerization catalyst, a foaming agent, a foam stabilizer, and an additive, wherein the trimerization catalyst is at least one selected from the group consisting of a nitrogen-containing aromatic compound, an alkali metal carboxylate, a tertiary ammonium salt, and a quaternary ammonium salt, and the additive comprises red phosphorus as an essential component and at least one selected from the group consisting of a phosphoric acid ester, a phosphate-containing flame retardant, a bromine-containing flame retardant, a boron-containing flame retardant, an antimony-containing flame retardant, and a metal hydroxide in addition to red phosphorus. It has been shown that the urethane foam using the flame retardant urethane resin composition of Patent Document 2 can be easily handled, can exhibit excellent flame retardancy, and can form a foam that maintains a constant shape when heated.

Citation List

Patent Literature

Patent Document 1: JP-A-2013-023510

Patent Document 2: JP-A-2017-075326

Summary of Invention

Technical Problem

Although the invention disclosed in Patent Document 1 has improved flame retardancy due to a nurate bond, the flame retardancy is likely to be not sufficient because a large number of urethane bonds are formed. Further, although the invention of Patent Document 2 describes that the addition of red phosphorus (powder) as a flame retardant and the incorporation of an isocyanurate ring provide high flame retardancy, it is conceivable that the use of a powder flame retardant may cause poor adhesion(floating) to an adherend when, for example, spray coating is performed, and there is a possibility that the drop of a foam material and the deterioration of heat insulating performance may occur due to change over time. Patent Document 2 does not refer to these points. Further, the inventions of Patent Documents 1 and 2 have no verification on the deterioration with time due to temperature and humidity which is important when the inventions are used as a heat retaining material or a heat insulating material of a building application, a marine vessel for carrying oil and gas, an electric product such as a refrigerator, and the like. Thus, there may be a possibility that the properties deteriorate with time in a wet-heat environment. In addition to these points, the inventions of Patent Documents 1 and 2 may experience cracking or carbonization of the inside of the foam when the foam contacts flame due to a fire or the like in the case of, for example, being used in a building application, and there is a possibility that the strength is significantly reduced resulting in collapse of the building.

It is therefore an object of the present invention to provide a urea resin composition capable of providing a novel foam different from a urethane foam, and a foam thereof.

A second object of the present invention is to provide a urea resin composition capable of providing a polyurea foam, and a foam thereof, wherein the polyurea form exhibits excellent flame retardancy and shape retention during combustion, is capable of suppressing deterioration over time in a wet-heat environment, is excellent in adhesion to an adherend during coating, is hardly cracked even if it is brought into contact with a flame, and hardly allows carbonization by the flame contact to proceed from the surface to a deep portion.

Solution to Problem

The present inventors have made intensive studies for achieving the above-mentioned object, and have found that a polyurea foam formed by foaming a specific urea resin composition can solve the above-mentioned problems, and have completed the present invention. That is, the present invention is as follows.

The present invention (1) is a urea resin composition containing a polyisocyanate compound (A), a polyamine compound (B), a trimerization catalyst, a foaming agent, a foam stabilizer, and a flame retardant.

The present invention (2) is a polyurea foam containing a flame retardant and having an isocyanurate structure.

The present invention (3) is a urea resin composition containing a polyisocyanate compound (A), a polyamine compound (B), a trimerization catalyst, a foaming agent, and a foam stabilizer, wherein the urea resin composition does not contain a polyol compound or the content of the polyol compound is 1/5 or less by mass relative to the content of the polyamine compound (B).

The present invention (4) is a composition for producing a polyurea foam, which comprises a polyamine compound (B), a trimerization catalyst, a foaming agent, a foam stabilizer, and a flame retardant.

The present invention (5) is a composition for producing a polyurea foam comprising a polyamine compound (B), a trimerization catalyst, a foaming agent, and a foam stabilizer, wherein the composition does not contain a polyol compound, or the content of the polyol compound is 1/5 or less by mass relative to the content of the polyamine compound (B).

The present invention (6) is a urea resin composition comprising a polyisocyanate compound (A), a polyamine compound (B), a trimerization catalyst, a foaming agent, a foam stabilizer, and a flame retardant, wherein the content of the polyamine compound (B) is 2.0% by mass or more when the total amount of the urea resin composition is 100% by mass, and the content of the trimerization catalyst is 5 to 20 mass parts when the content of the polyamine compound (B) in the urea resin composition is 100 mass parts.

The present invention (7) is a polyurea foam obtained by foaming and curing the urea resin composition according to the invention (6).

The present invention (8) is a polyurea foam having an isocyanurate structure, wherein the polyurea foam has an isocyanurate ratio of 25 to 50%.

The isocyanurate ratio is a value calculated by the following formula (1) based on the absorption spectrum obtained by the infrared spectroscopic analysis method of the polyurea foam.

(Formula 1)

$$\text{Isocyanurate ratio(\%)} = P1/(P1+P2+P3+P4) \times 100$$

P1: peak area derived from the isocyanurate structure contained in the absorption spectrum of a polyurea foam obtained by infrared spectroscopic analysis
P2: peak area derived from C=O of the urea structure contained in the absorption spectrum of the polyurea foam obtained by infrared spectroscopic analysis
P3: peak area derived from C=O of the urethane structure and the isocyanurate structure contained in the absorption spectrum of the polyurea foam obtained by infrared spectroscopic analysis
P4: peak area derived from N-H contained in the urethane structure and the urea structure contained in the absorption spectrum of the polyurea foam obtained by infrared spectroscopic analysis

The present invention may also be the following invention.

The present invention (9) is a polyurea foam having an isocyanurate structure and having a 5% weight loss temperature of 175°C or higher. The 5% weight loss temperature is measured by observing the weight reduction behavior of a sample in a temperature range of 25 to 700°C under a temperature rising rate of 10°C/min and a dry air flow using a differential thermal and thermal gravimetric analyzer..

The present invention (10) is a urea resin composition comprising a polyisocyanate compound (A), a polyamine compound (B), a trimerization catalyst, a foaming agent, a foam stabilizer, and a flame retardant, wherein the content of the polyamine compound (B) is 2.0% by mass or more when the total amount of the urea resin composition is 100% by mass.

The present invention (11) is the urea resin composition according to the invention (10) characterized in that the amine value of the polyamine compound (B) is 50 to 1000 mgKOH/g.

The present invention (12) is the urea resin composition according to the invention (10) or (11), wherein the polyisocyanate compound (A) has an NCO% of 10 to 35%.

The present invention (13) is the urea resin composition according to any one of the inventions (10) to (12), wherein the polyisocyanate compound (A) is an aromatic isocyanate.

The present invention (14) is the urea resin composition according to any one of the inventions (10) to (13), wherein the flame retardant contains red phosphorus.

The present invention (15) is the urea resin composition according to any one of the inventions (10) to (14), wherein the flame retardant contains at least one selected from a phosphoric acid ester, a phosphate-containing flame retardant, a bromine-containing flame retardant, a boron-containing flame retardant, an antimony-containing flame retardant, and a metal hydroxide.

The present invention (16) is a polyurea foam obtained by foaming and curing the urea resin composition according to any one of the inventions (10) to (15).

The present invention (17) is the polyurea foam according to the invention (16), wherein the polyurea foam has a total calorific value of 8.5 MJ/m$^2$ or less after 20 minutes, measured in accordance with the test method of ISO-5660 and heated under the condition that a radiant heat intensity is 50 kW/m$^2$.

The present invention (18) is a polyurea foam having an isocyanurate structure.

The present invention (19) is the polyurea foam according to the invention (18), which comprises a flame retardant.

The present invention (20) is the polyurea foam according to the invention (18) or (19), which comprises red phosphorus.

The present invention (21) is the polyurea foam according to the invention (20), wherein the content of the red phosphorus is 1 to 30% by mass when the total mass of the polyurea foam is 100% by mass.

The present invention (22) is the polyurea foam according to any one of the inventions (18) to (21), wherein the polyurea foam has an isocyanurate ratio of 10 to 50%. The isocyanurate ratio is a value calculated by the following formula (1) based on the absorption spectrum obtained by the infrared spectroscopic analysis method of the polyurea foam.

(Formula 1)

$$\text{Isocyanurate ratio}(\%) = P1/(P1+P2+P3+P4) \times 100$$

P1: peak area derived from an isocyanurate structure contained in the absorption spectrum of a polyurea foam obtained by infrared spectroscopic analysis

P2: peak area derived from C=O of the urea structure contained in the absorption spectrum of the polyurea foam obtained by infrared spectroscopic analysis

P3: peak area derived from C=O of urethane and isocyanurate structures contained in the absorption spectrum of the polyurea foam obtained by infrared spectroscopic analysis

P4: peak area derived from N-H contained in the urethane structure and the urea structure contained in the absorption spectrum of the polyurea foam obtained by infrared spectroscopic analysis

The present invention (23) is the polyurea foam according to any one of the inventions (18) to (22), wherein the polyurea foam contains at least one selected from a phosphoric acid ester, a phosphate-containing flame retardant, a bromine-containing flame retardant, a boron-containing flame retardant, an antimony-containing flame retardant, and a metal hydroxide.

Advantageous Effects of Invention

According to the present invention, there can be provided a urea resin composition capable of providing a novel foam different from a urethane foam, and a foam thereof.

According to the present invention, there can be provided a urea resin composition capable of providing a foam exhibiting sufficient flame retardancy and compression performance, and a foam thereof.

Further, according to the present invention, there can be provided a urea resin composition capable of providing a polyurea foam, and a foam thereof, wherein the polyurea foam exhibits excellent flame retardancy and shape retention during combustion, is capable of suppressing deterioration over time in a wet-heat environment, exhibits excellent adhesion to an adherend during coating, is hardly cracked even if it is brought into contact with a flame, and hardly allows carbonization by the flame contact to proceed from the surface to a deep portion.

Brief Description of Drawings

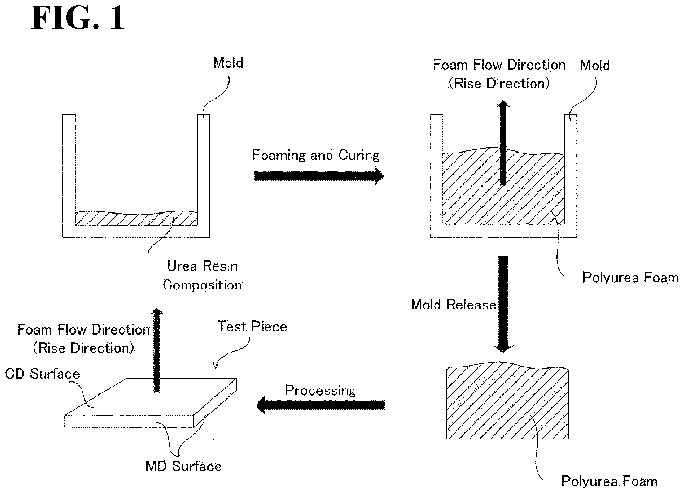

FIG. 1 is an explanatory view for explaining a mold for molding a polyurea foam for observing the shape and average bubble diameter of a bubble (cell) of the present invention and the flow direction of the foam.

Description of Embodiments

1. Urea resin composition

The polyurea foam of the present invention has an isocyanurate structure. The polyurea foam is obtained by foaming and curing a urea resin composition. The urea resin composition of the present invention is a urea resin composition containing a polyisocyanate compound (A), a polyamine compound (B), a trimerization catalyst, and a foaming agent, and preferably containing a foam stabilizer and a flame retardant. In the following description, when the upper limit value and the lower limit value are described separately, the upper limit value and the lower limit value can be freely combined into a new numerical value range.

The urea resin composition of the present invention is characterized in that the content of the polyamine compound (B) is 2.0% by mass or more when the total amount of the urea resin composition is 100% by mass.

The urea resin composition of the present invention can be foamed and cured to form a polyurea foam.

2. Raw materials for urea resin composition

2-1. Polyisocyanate compound (A)

The polyisocyanate compound (A) according to the present invention is not particularly limited as long as it does not inhibit the effects of the present invention. Examples of the polyisocyanate compound (A) include a monomeric polyisocyanate and a polymeric polyisocyanate. The monomeric polyisocyanate is a compound in which a plurality of isocyanate groups are present at the ends of the monomer structure. The polymeric polyisocyanate is a compound in which a plurality of isocyanate groups are present at the ends of the polymer structure. These polyisocyanate compounds (A) can be used alone or as a combination of two or more.

Examples of the monomeric polyisocyanates include: as a difunctional polyisocyanate compound, an aromatic polyisocyanate such as 2,4-toluene diisocyanate (2,4-TDI), 2,6-toluene diisocyanate (2,6-TDI), m-phenylene diisocyanate, p-phenylene diisocyanate, 4,4'-diphenylmethane diisocyanate (4,4'-MDI), 2,4'-diphenylmethane diisocyanate (2,4'-MDI), 2,2'-diphenylmethane diisocyanate (2,2'-MDI), hydrogenated MDI, xylylene diisocyanate, 3,3'-dimethyl-4,4'-biphenylene diisocyanate, 3,3'-dimethoxy-4,4'-biphenylene diisocyanate, polymethylene polyphenyl polyisocyanate, 1,5-naphthalene diisocyanate, xylylene diisocyanate (XDI), hydrogenated XDI, tetramethylxylene diisocyanate (TMXDI), and the like, an alicyclic polyisocyanate such as cyclohexane-1,4-diisocyanate, isophorone diisocyanate, dicyclohexylmethane-4,4'-diisocyanate, methylcyclohexane diisocyanate, and the like, and an alkylene polyisocyanate such as butane-1,4-diisocyanate, hexamethylene diisocyanate, lysine diisocyanate, and the like; and

as a trifunctional or higher polyisocyanate, 1-methylbenzol-2,4,6-triisocyanate, 1,3,5-trimethylbenzol-2,4,6-triisocyanate, biphenyl-2,4,4'-triisocyanate, diphenylmethane-2,4,4'-triisocyanate, methyldiphenylmethane-4,6,4'-triisocyanate, 4,4'-dimethyldiphenylmethane-2,2',5,5'-tetraisocyanate, triphenylmethane-4,4',4"-triisocyanate, polymeric MDI, lysine ester triisocyanate, 1,3,6-hexamethylene triisocyanate, 1,6,11-undecane triisocyanate, bicycloheptane triisocyanate, 1,8-diisocyanatomethyloctane and the like.

Further examples thereof include modified products and derivatives and the like of these compounds. Examples of the modified products and the derivatives include an isocyanurate compound of a diisocyanate compound, an adduct compound of a diisocyanate compound, a burette compound of a diisocyanate compound, an allophanate compound of a diisocyanate compound, and a carbodiimide-modified compound of a diisocyanate compound.

These polyisocyanate compounds can be used alone or as a combination of two or more.

The monomeric polyisocyanate compound forms the urea backbone of the polyurea foam and can therefore be freely selected in consideration of the desired properties of the polyurea foam. Among these monomeric polyisocyanates, aromatic isocyanates are preferable, MDI or a modified product or derivative of MDI is more preferable, and monomeric MDI and crude MDI are still more preferable in terms of excellent reactivity. These suitable aromatic isocyanates are preferable from the viewpoint of the working environment safety because they have excellent reactivity when used as a polyurea foam for the spraying method. In addition, in the case of monomeric MDI and crude MDI having the same NCO %, the crude MDI containing a polynuclear body has excellent isocyanurate ratio, and therefore exhibits excellent flame retardancy.

The polymeric polyisocyanate compound includes an active hydrogen compound having two or more active hydrogen groups, for example, a prepolymerized compound obtained by reacting a polyol compound and a polyamine compound (D) with the polyisocyanate compound (C) in an excess amount. The polyamine compound (D) and the polyisocyanate compound (C) are raw materials for preparing a polymeric polyisocyanate, and are not included in the polyamine compound (B) and the polyisocyanate compound (A), respectively, which are raw materials of the urea resin composition according to the present invention. Here, the polyisocyanate compound (C) may be the same as or different from the polyisocyanate compound (A).

Examples of such a polyol compound include a polyester polyol, and a polyether polyol. Examples of the polyester polyol include those obtained by a condensation reaction between a polyhydric alcohol and a polyvalent carboxylic acid. Examples of the polyhydric alcohol include ethylene glycol, propylene glycol, butanediol, butylene glycol, glycerin, and trimethylolpropane. Examples of the polyvalent carboxylic acid include glutaric acid, adipic acid, maleic acid, phthalic acid, terephthalic acid, and isophthalic acid. These compounds can be used alone or as a combination of two or more. Further, there can be mentioned a polyester polyol obtained by ring-opening condensation of caprolactone, methylvalerolactone and the like.

Examples of the polyether polyol include those obtained by addition polymerization of an oxide such as ethylene oxide, propylene oxide, trimethylene oxide, or butylene oxide with a polyhydric alcohol such as ethylene glycol, propylene glycol, diethylene glycol, glycerin, trimethylolpropane, or sorbitol. These compounds can be used alone or as a combination of two or more.

The polyisocyanate compound (B) to be reacted with these polyol compounds is not particularly limited as long as the effects of the present invention are not inhibited, and examples thereof include aliphatic or aromatic polyisocyanates, mixtures thereof, and modified polyisocyanates obtained by modifying them.

The polyamine compound (D) is not particularly limited as long as it does not inhibit the effects of the present invention. Examples of the polyamine compound (D) include an aliphatic polyamine such as triethylene tetramine, an aromatic polyamine such as metaphenylene diamine, and an alicyclic polyamine such as isophorone diamine. Specific examples thereof include 4,4'-diamino-3,3'-dichlorodiphenyl methane, trimethylene-bis(4-aminobenzoate), 4,4'-diamino-3,3'-diethyl 5,5'-dimethyldiphenylmethane, polytetramethylene oxide-di-p-aminobenzoate, 2,2',6,6'-tetraethyl-4,4'-methylenedianiline, 4,4'-methylenebis(2-isopropyl-6-methylaniline), 4,4'-methylenebis(2,6-diisopropylaniline), 4,4'-methylenebis(3-chloro-2,6-diethylaniline), 3,5-diethyltoluene-2,4-diamine, and dimethylthiotoluene diamine.

These compounds can be used alone or as a combination of two or more. The polyamine compound (D) may be the same as or different from the polyamine compound (B) described later.

The NCO % of the polyisocyanate compound (A) is not limited as long as the effects of the present invention are not inhibited, and may be, for example, 5 to 40%, preferably 10 to 35%, and more preferably 15 to 35%. When the NCO % of the polyisocyanate compound (A) is increased, a polyurea foam can be obtained which exhibits shape retention during combustion and low thermal conductivity, and which can suppress deterioration over time in a wet-heat environment. That is, a polyurea foam exhibiting excellent flame retardancy and shape retention during combustion and excellent adhesion to an adherend during coating which can suppress deterioration over time in a wet-heat environment can be obtained.

The NCO % (isocyanate content) of the polyisocyanate compound (A) is measured in accordance with the method A (toluene/dibutylamine, hydrochloric acid method) of JIS K1603-1: 2007 "Plastics-Aromatic isocyanates for use in the production of polyurethanes-Part 1 : Determination of isocyanate content".

2-2. Polyamine compound (B)

The polyamine compound reacts with an isocyanate to form a urea bond. The urea bond has characteristics of excellent water resistance, corrosion resistance, and chemical resistance such as acid and alkali.

The polyamine compound (B) is not particularly limited as long as it does not inhibit the effects of the present invention. Examples of the polyamine compound (B) include an aliphatic polyamine such as triethylene tetramine, an aromatic polyamine such as metaphenylene diamine, and an alicyclic polyamine such as isophorone diamine. Specifically, 4,4'-diamino-3,3'-dichlorodiphenylmethane, trimethylene-bis(4-aminobenzoate), 4,4'-diamino-3,3'-diethyl-5,5'-dimethyldiphenylmethane, polytetramethylene oxide-di-p-aminobenzoate, 2,2',6,6'-tetraethyl-4,4'-methylenedianiline, 4,4'-methylenebis(2-isopropyl-6-methylaniline), 4,4'-methylenebis(2,6-diisopropylaniline), 4,4'-methylenebis(3-chloro-2,6-diethylaniline), 3,5-diethyltoluene-2,4-diamine, and dimethylthiotoluene diamine can be exemplified, and examples of commercially available products include Iharacuamine MT, Iharacuamine M liquid product, CUA-4, CureHard MED, Elasmer 250P, and Elasmer 1000P, manufactured by Kumiai Chemical Industry Co., Ltd.; Lonzacure M-DEA, Lonzacure M-MIPA, Lonzacure M-DIPA, and Lonzacure M-CDEA, manufactured by Lonza K.K.; Ethacure 100, Ethacure 300, Ethacure 410, and Ethacure 420, manufactured by Albemarle Corporation; VERSALINK740 manufactured by Evonik Nutation & Care; and ANCAMINE2049 manufactured by Evonik. These compounds can be used alone or as a combination of two or more.

The amine value of the polyamine compound (B) is not particularly limited as long as it does not inhibit the effects of the present invention, but may be, for example, 50 to 1000 mgKOH/g, preferably 200 to 1000 mgKOH/g, more preferably 450 to 1000 mgKOH/g, and still more preferably 500 to 1000 mgKOH/g. When the amine value of the polyamine compound is in such a range, it is possible to obtain a urea resin composition capable of providing a polyurea foam which exhibits excellent flame retardancy and shape retention during combustion, which can suppress deterioration over time in a wet-heat environment, which exhibits excellent adhesion to an adherend during coating, which is hardly cracked even if it is brought into contact with a flame, and which hardly allows carbonization by the flame contact to proceed from the surface to the deep portion. In a total calorific value test by a cone calorimeter according to the ISO-5660 standard (which is a test showing flame retardancy and may be abbreviated as a conecalo total calorific value test hereinafter), a volume change rate at 600°C (a test showing shape retention), and a flame contact test, which are described in detail below, a charred layer is formed on the foam surface, and the excellent effect is obtained in that it is possible to prevent entry of fire into the deep portion of the foam.

The amine value of the polyamine compound (B) can be measured by the method for measuring a total amine value described in JIS K1557-7: 2011 "Plastics-Polyols for use in the production of polyurethanes-Part 7: Determination of basicity expressed as percent nitrogen and total amine value".

In addition to the polyamine compound (B) of the present invention, an active hydrogen compound can be added as long as the effects of the present invention are not inhibited. Examples of the active hydrogen compound include alcohols such as a primary alcohol, a secondary alcohol, and a tertiary alcohol, a monool, a polyol compound, and a thiol compound. Alcohols and polyol compounds can react with the polyisocyanate compound (A) to form urethane bonds and form part of the backbone of the polyurea foam. However, since the urethane bond is more combustible than the urea bond, the flame retardancy of the polyurea foam may be lowered. For this reason, the content of the polyol compound can be set to 1/5 or less, preferably 1/10 or less, with respect to the content of the polyamine compound (B) and more preferably no polyol compound is contained.

2-3. Trimerization catalyst

The trimerization catalyst according to the present invention is not particularly limited as long as it does not inhibit the effects of the present invention. By using a trimerization catalyst, an isocyanurate structure can be formed in the polyurea foam when the polyamine compound (B) is used to produce the polyurea foam. Examples of the trimerization catalyst include metal oxides such as lithium oxide, sodium oxide, and potassium oxide;

alkoxides such as methoxysodium, ethoxysodium, propoxysodium, butoxysodium, methoxypotassium, ethoxypotassium, propoxypotassium, and butoxypotassium; organometallic salts such as potassium acetate, potassium octylate, potassium caprylate, and iron oxalate;

tertiary amines such as 2,4,6-tris(dimethylaminomethyl)phenol, N,N',N"-tris(dimethylaminopropyl)hexahydrotriazine, triethylene diamine, and 1,3,5-tris(dimethylaminopropyl)hexahydro-s-triazine; derivatives of ethyleneimine; chelates of acetylacetone with alkali metals, aluminum, and transition metals; quaternary ammonium salts; and 1,8-diazabicyclo[5.4.0]undec-7-ene(DBU).

These compounds can be used alone or as a combination of two or more. Among these, it is more preferable to use tertiary amines, organometallic salts, and 1,8-diazabicyclo[5.4.0]undec-7-ene, and it is more preferable to use tertiary amines and 1,8-diazabicyclo[5.4.0]undec-7-ene. By using these suitable trimerization catalysts, it is possible to obtain a polyurea foam which exhibits excellent flame retardancy and shape retention during combustion, which can suppress deterioration over time in a wet-heat environment, and which exhibits excellent adhesion to an adherend during coating.

2-4. Foaming agent

The foaming agent according to the present invention is not particularly limited as long as the effects of the present invention are not inhibited. Examples of the foaming agent include water, hydrocarbons (preferably C4 to C6), hydrofluoroolefins, and carbon dioxide. Specific examples thereof include cyclopentane, HFO(1336mzz), and HFO(1233zd). These compounds can be used alone or as a combination of two or more.

2-5. Foam stabilizer

The foam stabilizer according to the present invention is not particularly limited as long as the effects of the present invention are not inhibited. Examples of the foam stabilizer include a silicone-based compound and a nonionic surfactant. These can be used alone or in combination of multiple.

2-6. Flame retardant

The urea resin composition according to the present invention may contain a flame retardant. The flame retardant is not particularly limited as long as the effects of the present invention are not inhibited, but examples thereof include red phosphorus, a phosphoric acid ester, a phosphate-containing flame retardant, a bromine-containing flame retardant, a boron-containing flame retardant, an antimony-containing flame retardant, and a metal hydroxide. These compounds can be used alone or as a combination of two or more. Among them, it is preferable to include at least one selected from red phosphorus or a phosphoric acid ester, a phosphate-containing flame retardant, a bromine-containing flame retardant, a boron-containing flame retardant, an antimony-containing flame retardant, and a metal hydroxide. It is more preferable to include red phosphorus, and it is further more preferable to include at least one selected from a phosphoric acid ester, a phosphate-containing flame retardant, a bromine-containing flame retardant, a boron-containing flame retardant, an antimony-containing flame retardant, and a metal hydroxide in addition to red phosphorus. It is particularly preferable to include red phosphorus and a phosphoric acid ester and further at least one selected from a chlorine-containing phosphoric acid ester, a phosphate-containing flame retardant, a bromine-containing flame retardant, a boron-containing flame retardant, an antimony-containing flame retardant, and a metal hydroxide, and it is particularly preferable to include red phosphorus, phosphoric acid ester and a bromine-containing flame retardant. When the urea resin composition according to the present invention contains these flame retardants, it is possible to obtain a polyurea foam which exhibits excellent flame retardancy and shape retention during combustion, which can suppress deterioration over time in a wet-heat environment, and which exhibits excellent adhesion to an adherend during coating. Further, other flame retardants than these flame retardants may be included.

The phosphoric acid ester according to the present invention is not particularly limited as long as it does not inhibit the effects of the present invention. Examples of the phosphoric acid ester include aromatic phosphoric acid esters such as triphenylphosphate, cresyl diphenyl phosphate, tricresyl phosphate, trixylenyl phosphate, tris(t-butylated phenyl) phosphate, tris(i-propylated phenyl) phosphate, and 2-ethylhexyl diphenyl phosphate; aromatic condensed phosphoric acid esters such as 1,3-phenylenebis(diphenyl phosphate), 1,3-phenylenebis(dioxylenyl) phosphate, resorcinol bis(diphenyl phosphate), and bisphenol A bis(diphenyl phosphate); halogen phosphoric acid esters such as tris(dichloropropyl) phosphate, tris($\beta$-chloropropyl) phosphate, and tris(chloroethyl) phosphate; and halogen-containing condensed phosphoric acid esters such as 2,2-bis(chloromethyl)trimethylene bis(bis(2-chloroethyl) phosphate), and polyoxyalkylene bisdichloroalkyl phosphate. These compounds can be used alone or as a combination of two or more.

The phosphate-containing flame retardant according to the present invention is not particularly limited as long as it does not inhibit the effects of the present invention. Examples of the phosphate-containing flame retardant as monophosphate include: ammonium salts such as ammonium phosphate, ammonium dihydrogen phosphate, and diammonium hydrogen phosphate; sodium salts such as monosodium phosphate, disodium phosphate, trisodium phosphate, monosodium phosphite, disodium phosphite, and sodium hypophosphite; potassium salts such as monopotassium phosphate, dipotassium phosphate, tripotassium phosphate, monopotassium phosphite, dipotassium phosphite, and potassium hypophosphite; lithium salts such as monolithium phosphate, dilithium phosphate, trilithium phosphate, monolithium phosphite, dilithium phosphite, and lithium hypophosphite; barium salts such as barium dihydrogen phosphate, barium hydrogen phosphate, tribarium phosphate, and barium hypophosphite; magnesium salts such as magnesium monohydrogen phosphate, magnesium hydrogen phosphate, trimagnesium phosphate, and magnesium hypophosphite; calcium salts such as calcium dihydrogen phosphate, calcium hydrogen phosphate, tricalcium phosphate, and calcium hypophosphite; zinc salts such as zinc phosphate, zinc phosphite, and zinc hypophosphite; and aluminum salts such as monobasic aluminum phosphate, dibasic aluminum phosphate, tribasic aluminum phosphate, aluminum phosphite, and aluminum hypophosphite.

Examples of the polyphosphate include ammonium polyphosphate, piperazine polyphosphate, melamine polyphosphate, ammonium polyphosphate amide, and aluminum polyphosphate. These compounds can be used alone or as a combination of two or more.

The bromine-containing flame retardant according to the present invention is not particularly limited as long as it does not inhibit the effects of the present invention. Examples of the bromine-containing flame retardant include pentabromodiphenyl ether; octabromodiphenyl ether; decabromodiphenyl ether; a BBA compound such as tetrabromobisphenol A (TBBA), a TBBA-epoxy oligomer, a TBBA-polycarbonate oligomer, a TBBA-bis(dibromopropyl ether), and a TBBA-bis(aryl ether); a polybenzene ring compound such as bispheniy pentamethane, 1,2-bis(2,4,6-tribromophenoxy)ethane, 2,4,6-tris(2,4,6-tribromophenoxy)-1,3,5-triazine, 2,6-dibromophenol, and 2,4-dibromophenol; a brominated styrene compound such as brominated polystyrene and polybrominated styrene; a phthalic acid compound such as ethylene bistetrabromophthalimide; a cyclic aliphatic compound such as hexabromocyclododecane; and a polyacrylic acid brominated aromatic ester compound such as poly(pentabromophenyl acrylate). These compounds can be used alone or as a combination of two or more.

The boron-containing flame retardant according to the present invention is not particularly limited as long as it does not inhibit the effects of the present invention. Examples of the boron-containing flame retardant include borax; boron oxide such as diboron trioxide, boron trioxide, diboron dioxide, tetraboron trioxide, and tetraboron pentoxide; and a boric acid compound such as boric acid, lithium borate, sodium borate, potassium borate, cesium borate, magnesium borate, calcium borate, barium borate, zirconium borate, zinc borate, aluminum borate, and ammonium borate.

The antimony-containing flame retardant according to the present invention is not particularly limited as long as it does not inhibit the effects of the present invention. Examples of the boron-containing flame retardant include antimony oxide such as antimony trioxide and antimony pentoxide; antimonates such as sodium antimonate and potassium antimonate; and pyroantimonates such as sodium pyroantimonate and potassium pyroantimonate. These compounds can be used alone or as a combination of two or more.

The metal hydroxide according to the present invention is not particularly limited as long as it does not inhibit the effects of the present invention. Examples of the metal hydroxide include aluminum hydroxide and magnesium hydroxide. These compounds can be used alone or as a combination of two or more.

As the other flame retardant, any known flame retardant can be used. Examples of the other flame retardants include a chlorine compound such as chlorinated paraffins; a nitrogen compound such as a hindered amine and melamine cyanurate; and cellulose. These compounds can be used alone or as a combination of two or more.

2-7. Other additives

In the resin composition according to the present invention, other additives can be added in addition to the above-described additives, as long as the effects of the present invention are not inhibited. As the other additives, those known as additives such as a resin (urea) conversion catalyst, a foaming catalyst, a balance catalyst, an antioxidant, an ultraviolet absorber, an antimicrobial agent, and a dispersant can be added.

3. Properties of urea resin composition

The cream time of the urea resin composition according to the present invention at 5°C can be 1 to 120 seconds, and preferably 2 to 70 seconds. In the case where the cream time of the urea resin composition at 5°C is in such a range, the urea resin composition exhibits a superior effect in that the fluidity of the liquid and the wettability and adhesiveness to a frame are sufficiently exhibited. Here, the term "cream time" refers to the time from the time when the polyisocyanate compound (A) is mixed with a mixture (hereinafter, sometimes referred to as a composition for producing a polyurea foam) of all other compositions except for the polyisocyanate compound (A) in the urea resin composition to the time immediately before the mixture starts foaming, becomes a cream-like liquid, and starts expansion. The color of the solution of the mixture is measured by the naked eye as the time at which the discoloration starts. Here, 5°C indicates that the polyisocyanate compound (A) and the composition for producing a polyurea foam are mixed while being each kept at 5°C.

The cream time of the urea composition of the present invention at 20°C can be 0.5 to 90 seconds, preferably 0.7 to 60 seconds. In the case where the cream time of the urea resin composition at 20°C is in such a range, the urea resin composition exhibits a superior effect in that the liquid mixed before the foaming agent volatilizes at a practical liquid temperature is thickened and the cell is efficiently foamed without being broken. The cream time of the urea composition at 20°C is measured by the same measuring method as that of the cream time at 5°C except that the polyisocyanate compound (A) and the composition for producing a polyurea foam are each kept at 20°C and mixed.

4. Properties of polyurea foam

4-1. Isocyanurate ratio

The polyurea foam of the present invention comprises an isocyanurate structure. The isocyanurate structure is formed by trimerization of the polyisocyanate compound (A), which is a raw material of the urea resin composition, by a trimerization catalyst. The isocyanurate structure can be detected by infrared spectroscopic analysis. The rate (isocyanurate ratio) at which the polyisocyanate compound (A) has been isocyanurated is calculated by the following formula (1) based on the absorption spectrum obtained by the infrared spectroscopic analysis method. The isocyanurate ratio is not particularly limited as long as the effects of the present invention are not inhibited, but may be, for example, 10 to 50%, preferably 20 to 45%, and more preferably 25 to 40%. The lower limit may be 10% or more, 20% or more, 25% or more, or 28% or more, and the upper limit may be 50% or less, 45% or less, 43% or less, or 40% or less. If the isocyanurate ratio is within such a range, the polyurea foam exhibits excellent flame retardancy.

$$\text{(Formula 1)}$$

$$\text{Isocyanurate ratio (\%)} = P1/(P1+P2+P3+P4)\times100$$

P1: peak area derived from the isocyanurate structure contained in the absorption spectrum of a polyurea foam obtained by infrared spectroscopic analysis

P2: peak area derived from C=O of the urea structure contained in the absorption spectrum of the polyurea foam obtained by infrared spectroscopic analysis

P3: peak area derived from C=O of the urethane structure and the isocyanurate structure contained in the absorption spectrum of the polyurea foam obtained by infrared spectroscopic analysis

P4: peak area derived from N-H contained in the urethane structure and the urea structure contained in the absorption spectrum of the polyurea foam obtained by infrared spectroscopic analysis

P1 is the area of the peak derived from the isocyanurate structure contained in the absorption spectrum of the polyurea foam obtained by infrared spectroscopic analysis, and is the area of the peak derived from the nurate ring near a wave number of 1410 cm$^{-1}$. P1 is a peak area in the range of the wave number of 1380 to 1430 cm$^{-1}$. P1 represents the content of the isocyanurate structure formed by the reaction of the isocyanate group of the polyisocyanate compound (A) as the raw material.

P2 is the area of the peak derived from C=O of the urea structure contained in the absorption spectrum of the polyurea foam obtained by the infrared spectroscopic analysis, and is the area of the peak derived from C=O of the urea bond near a wave number of 1595 cm$^{-1}$. P2 is a peak area in the range of the wave number of 1550 to 1640 cm$^{-1}$. P2 represents the content of the urea structure formed by the reaction of the isocyanate groups of the polyisocyanate compound (A) as the raw material.

P3 is the area of the peak derived from C=O of the urethane structure and the isocyanurate structure contained in the absorption spectrum of the polyurea foam obtained by the infrared spectroscopic analysis, and is the area of the peak of the C=O bond near a wave number of 1710cm$^{-1}$. P3 is a peak area in the range of the wave number of 1680 to 1730 cm$^{-1}$. P3 represents the contents of the urethane structure and the isocyanurate structure formed by the reaction of the isocyanate group of the polyisocyanate compound (A) as the raw material.

P4 is the area of the peak derived from N-H contained in the urethane structure and the urea structure contained in the absorption spectrum of the polyurea foam obtained by the infrared spectroscopic analysis, and is the area of the peak derived from N-H near a wave number of 1510 cm$^{-1}$. P4 is a peak area in the range of the wave number of 1470 to 1550 cm$^{-1}$. P4 represents the content of the urethane structure and the urea structure contained in the polyurea foam, and represents the content of the urethane structure and the urea structure formed by the reaction of the isocyanate group of the polyisocyanate compound (A) as the raw material.

Therefore, the sum of P1 to P4 represents the total number of isocyanate groups reacted in the raw polyisocyanate compound (A). Therefore, the isocyanurate ratio is a value indicating the proportion of the isocyanate groups forming the isocyanurate structure to the isocyanate groups of the polyisocyanate compound (A) which are the reacted raw materials.

4-2. Density

The density of the polyurea foam is not particularly limited as long as it does not inhibit the effects of the present invention, but can be 10 to 200 kg/m$^3$, preferably 10 to 100 kg/m$^3$, and more preferably 10 to 55 kg/m$^3$. When the density of the polyurea foam is in such a range, the polyurea foam exhibiting excellent thermal conductivity and excellent flame retardancy can be obtained. The density of the polyurea foam is measured according to JIS K7222: 2005 "Cellular plastics and rubbers-Determination of apparent (bulk) density".

4-3. Average cell (bubble) diameter and cell shape

The average cell diameter and shape of the bubbles (cells) contained in the polyurea foam are observed and measured using an optical microscope (for example, a digital microscope) with a length measuring function after the following test pieces are prepared. The test piece is prepared by pouring a urea resin composition into a box-shaped mold (for example, a mold for forming a foam into a rectangular parallelepiped shape), foaming and curing the same to obtain a molded polyurea foam, and cutting the molded polyurea foam into a length of 50 mm × a width of 50 mm × a thickness of 20 mm. Here, the sample piece is cut out so that the flow direction of foaming (the direction in which the urea resin composition expands by foaming and which is a direction vertically upward from the bottom surface of the mold. Hereinafter, this direction is referred to as a rise direction)) when the composition is foamed in the mold, becomes the thickness direction of the test piece. A plane with the rise direction of the taken out test piece being a normal line is defined as a CD plane. A plane perpendicular to the CD plane of the test piece is defined as an MD plane. The CD plane is observed with an optical microscope (including a digital microscope) to confirm its shape. In this case, 10 bubbles in the CD plane are randomly selected, and a difference (DR=R1-R2) between the longest diameter (denoted as R1) in the CD plane of each bubble and the diameter (denoted as R2) in a direction orthogonal to the longest diameter is obtained. When the average of the DRs of all the selected bubbles exceeds 5 mm, the shape is determined to be an elliptical shape.

In addition, the shape with the average falling in the range of 0 mm or more and 5 mm or less is determined to be a circular shape.

In addition, 10 bubbles in the CD plane and MD plane are randomly selected, and the length of the long axis thereof is measured. The averages are referred as the average cell diameter in the CD plane and the average cell diameter in the CD plane. The ratio of the average cell diameter in the MD plane to the average cell diameter in the CD plane (average cell diameter in the MD plane/average cell diameter in the CD plane) can be 0.7 to 1.8, and is preferably 0.8 to 1.3. When these values are in such ranges, superior performance polyurea foams can be obtained.

4-4. Closed cell rate

The bubbles included in the polyurea foam are not particularly limited as long as they do not inhibit the effects of the present invention, and may include any of closed cells, open cells, and semi-open cells. Here, the semi-open cell structure means a structure having small pores in the cell, unlike the closed cell, and a structure in which the pores between adjacent cells are smaller than those of the open cell structure.

The closed cell rate of the polyurea foam can be, for example, 75% or more, and preferably 80% or more. In such a range, excellent performance polyurea foams can be obtained.

The closed cell rate is calculated by the following method. The polyurea foam is processed into a test piece having a length of 30 mm $\times$ a width of 30mm $\times$ a thickness of 20 mm, the length of each side is accurately measured, and the apparent volume (V) of the test piece is calculated. The mass (W) of the test piece is measured. The true volume (V1) of the test piece is measured using a dry automatic density meter. The value calculated by the following Formulas 2 to 4 is taken as the closed cell rate. Each measurement is performed under an environment of a temperature of $23\pm5°C$ and a relative humidity of 40 to 70%.

$$\text{(Formula 2)}$$
$$\text{Open cell rate (\%): } Oc=(V-V1)/V\times100$$

$$\text{(Formula 3)}$$
$$\text{Resin amount of polyurea foam: } S=W/(V\times D)\times100$$

D is the density of the resin itself of the polyurea foam.

$$\text{(Formula 4)}$$
$$\text{Closed cell rate: } Cc=100-Oc-S$$

4-5. 5% weight loss temperature

The 5% weight loss temperature of the polyurea foam may be, for example, 120 to 320°C, and preferably 150 to 280°C. When the 5% weight loss temperature is in such a range, a polyurea foam exhibiting the effects of the present invention can be obtained. The 5% weight loss temperature is measured by observing the weight loss behavior of the polyurea foam in a temperature range of 25 to 700°C using a differential thermal and thermal gravimetric analyzer (TG/DTA) to determine a temperature at which the weight of the sample reduced by 5% by weight. The measurement is performed under a dry air flow (flow rate: 250 mm/min) with a temperature rising rate of 10°C/min.

4-6. Measurement of ash amount (600°C and 700°C)

The amount of ash of the polyurea foam when heated to 600°C can be, for example, 5 to 60% by weight, and preferably 10% by weight or more. The amount of ash of the polyurea foam when heated to 700°C can be, for example, 3% by weight or more, and preferably 5% by weight or more. When these values are in such ranges, a polyurea foam exhibiting the effects of the present invention can be obtained. The ash amount when heated to 600°C and 700°C is an ash amount (% by weight) at 600°C or 700°C obtained by observing the weight loss behavior of the polyurea foam for a temperature region of 25 to 600°C or 25 to 700°C using a differential thermal and thermal gravimetric analyzer (TG/DTA), measuring the residual weight of the polyurea foam at 600°C or 700°C, and dividing it by the initial weight of the polyurea foam. The measurement is performed under a dry air flow (flow rate: 250 mm/min) with a temperature rising rate of 10°C/min.

4-7. Held residual amount (at 300°C for 30 minutes, 500°C for 30 minutes)

The residual amount of the polyurea foam held after the heating treatment at 300°C for 30 minutes can be, for example, 30 to 95% by weight, and preferably 55 to 95% by weight. The residual amount of the polyurea foam held after the heat treatment at 500°C for 30 minutes can be, for example, 15 to 65% by weight, and preferably 25 to 65% by weight. When these values are in such ranges, a polyurea foam exhibiting the effects of the present invention can be obtained. The residual weight of the polyurea foam held when heated at 300°C and 500°C for 30 minutes is determined by measuring a residual weight of the polyurea foam, using a differential thermal and thermal gravimetric analyzer (TG/DTA), after the temperature is raised to 300°C or 500°C and the temperature is further held for 30 minutes , and dividing the residual weight by the initial weight of the polyurea foam to obtain a held residual weight (% by weight). The measurement is carried out under a dry air stream (flow rate: 250 mm/min) with the temperature rising rate being 10°C/min and the temperature that is raised to and held at a predetermined temperature.

4-8. Compressive strength

The compressive strength of the polyurea foam may be, for example, 300 to 800 kPa, and preferably 350 to 800 kPa. When the compressive strength is in such a range, a polyurea foam exhibiting the effects of the present invention can be obtained. The compressive strength is measured by the method described in JIS K7220: 2006 "Rigid cellular plastics-Determination of compression properties".

4-9. Adhesive strength

The adhesive strength of the polyurea foam to a wooden board may be, for example, 50 to 250 kPa, and preferably 70 to 250 kPa. When the adhesive strength is in such a range, a polyurea foam exhibiting the effects of the present invention can be obtained. The adhesive strength is measured by the method described in JIS A9526: 2015 "Spray-applied rigid polyurethane foam for thermal insulation".

4-10 Thermal conductivity

The thermal conductivity of the polyurea foam is not particularly limited as long as it does not inhibit the effects of the present invention, but may be, for example, 0.015 to 0.040 W/(m K), and 0.015 to 0.026 W/(m·K) is preferable. When the thermal conductivity is in such a range, a polyurea foam exhibiting the effects of the present invention can be obtained. The thermal conductivity is measured by the method described in JIS A1412-1 "Test method for thermal resistance and related properties of thermal insulations-Part 1: Guarded hot plate apparatus".

4-11. Compressive modulus

The compressive modulus of the polyurea foam may be, for example, 8 to 30 MPa, and preferably 10 to 30 MPa. When the compression modulus is in such a range, a polyurea foam exhibiting the effects of the present invention can be obtained. The compression modulus is measured by the method described in JIS K7220: 2006 "Rigid cellular plastics-Determination of compression properties".

4-12. Moisture permeability coefficient (water vapor transmission)

The moisture permeability coefficient of the polyurea foam can be, for example, 2.5 to 9.5 ng/(m$^2$·s·Pa), and 2.5 to 8.5 ng/(m$^2$·s·Pa) is preferable. When the moisture permeability is in such a range, a polyurea foam exhibiting the effects of the present invention can be obtained. The transmission coefficient is measured by a method described in JIS K7225: 2018 "Rigid cellular plastics-Determination of water vapour transmission properties".

4-13. Tensile strength

The tensile strength of the polyurea foam can be, for example, 0.5 to 2.0MPa, and 0.6 to 2.0MPa is preferred. When the tensile strength is in such a range, a polyurea foam exhibiting the effects of the present invention can be obtained. The tensile strength is measured by a method described in JIS A9511: 2017 "Preformed cellular plastics thermal insulation materials".

4-14. Tensile elongation

The tensile elongation of the polyurea foam may be, for example, 45 to 220%, and preferably 55 to 180%. When the tensile elongation is in such a range, a polyurea foam exhibiting the effects of the present invention can be obtained. In the tensile elongation, a test piece is prepared in accordance with JIS A9511: 2017 "Preformed cellular plastics thermal insulation materials", and two gauge lines having a distance therebetween of 50 mm in the tensile direction are drawn in parallel. The test piece is tested using a material tester at a tensile rate of 500 mm/min, and the distance between the gauge lines is measured at the time when the test piece is broken. The tensile elongation is calculated as the measurement result (the distance between the gauge lines at break)/50 mm (the distance between the gauge lines before the test)$\times$ 100.

4-15. Flexural strength

The flexural strength of the polyurea foam can be, for example, 0.02 to 0.15MPa, with 0.025 to 0.15Mpa being preferred. When the flexural strength is in such a range, a polyurea foam exhibiting the effects of the present invention can be obtained. The flexural strength is measured by the method described in JIS K7221-2: 2006 "Rigid cellular plastics- Determination of flexural properties-Part 2: Determination of flexural strength and apparent flexural modulus of elasticity".

4-16. Charpy impact strength

The Charpy impact strength of the polyurea foam may be, for example, 1.0 to 3.0 kg·cm/cm$^3$, with 1.2 to 3.0 kg·cm/cm$^3$ being preferred. When the Charpy impact strength is in such a range, a polyurea foam exhibiting the effects of the present invention can be obtained. The Charpy impact strength is measured by the method described in JIS K7111-1: 2012 "Plastics-Determination of Charpy impact properties- Part 1: Non-instrumented impact test".

4-17. Water absorption rate

The water absorption rate of the polyurea foam may be, for example, 0.012 to 0.050%, and preferably 0.015 to 0.045%. When the water absorption rate is in such a range, a polyurea foam exhibiting the effects of the present invention can be obtained. The water absorption rate is calculated by dividing the water absorption amount measured by the method B described in JIS A9511: 2017 "Preformed cellular plastics thermal insulation materials" by the initial weight of the polyurea foam.

4-18. Punching shear strength

The punching shear strength of the polyurea foam can be, for example, 7 to 30 N/cm$^2$, with 8 to 25 N/cm$^2$ being preferred. When the punching shear strength is within such a range, a polyurea foam exhibiting the effects of the present invention can be obtained. The punching shear strength is measured by a method described in JIS K7214: 1985 "Testing Methods for Shear Strength of Plastics by Punch Tool".

4-19. Durometer hardness (C hardness)

The durometer hardness (C hardness) of the polyurea foam may be, for example, 25 to 65, and preferably 30 to 60. When the durometer hardness (C hardness) is within such a range, a polyurea foam exhibiting the effects of the present invention can be obtained. The durometer hardness (C hardness) is measured by a method described in JIS K7215: 1986 "Testing Methods for Durometer Hardness of Plastics".

4-20. Specific heat

The specific heat of the polyurea foam can be, for example, 0.15 to 0.35 kJ/(kg·°C), with 0.17 to 0.30 kJ/(kg·°C) being preferred. When the specific heat is in such a range, a polyurea foam exhibiting the effects of the present invention can be obtained. The specific heat is measured by the input-compensated differential scanning calorimetry described in JIS K7123: 1987 "Testing Methods for Specific Heat Capacity of Plastics".

4-21. Cone calorimeter measurement(total calorific value)

The total calorific value of the polyurea foam is measured according to the test method of ISO-5660 using a cone calorimeter under conditions of heating with a radiant heat intensity of 50 kW/m$^2$. The total calorific value after 10 minutes can be 15 MJ/m$^2$ or less, and preferably 10 MJ/m$^2$ or less. The total calorific value after 20 minutes can be 15 MJ/m$^2$ or less, preferably 10 MJ/m$^2$ or less, and more preferably 8 MJ/m$^2$ or less. When the total calorific value of the polyurea foam is within such a range, the polyurea foam is particularly excellent in flame retardancy.

5. Method for producing a polyurea foam

The urea resin composition of the present invention is prepared by mixing in advance the polyisocyanate compound (A), the polyamine compound (B), a catalyst, a foaming agent, a foam stabilizer, red phosphorus, other flame retardants, and other additives. As a mixing method of the urea resin composition, a known method can be used. Specifically, raw materials other than the polyisocyanate (A) are mixed in a mixer (for example, a stirrer equipped with a propeller type stirrer) (for example, the mixture is stirred at 2000 rpm for 5 minutes using the stirrer) to prepare a composition for producing a polyurea foam. Subsequently, the polyisocyanate (A) and the composition for producing a polyurea foam are each cooled to a predetermined temperature (for example, 10±1°C). Thereafter, the polyisocyanate (A) and the composition for producing a polyurea foam can be mixed (for example, stirred at 2000rpm for 5 seconds using the stirrer) to obtain a urea resin composition. Furthermore, the urea resin composition can be foamed and cured to obtain a polyurea foam.

In the case of use in the spraying method, the composition for producing a polyurea foam, in which the raw materials other than a polyisocyanate have been mixed in advance, and the polyisocyanate compound (A) are supplied to a spray gun by using a pump or the like (at this time, a nozzle of the spray gun is opened), and the composition for producing a polyurea foam and the polyisocyanate compound (A) are mixed in a chamber in the spray gun, and sprayed onto a frame, whereby the polyurea foam can be obtained. The composition for producing a polyurea foam, in which the raw materials other than the polyisocyanate compound (A) have been mixed in advance, and the polyisocyanate compound (A) can be treated as a two-part system liquid. The flame retardant, the foam stabilizer, the foaming agent, the dispersant, and other additives that do not react with the polyisocyanate compound (A) may be mixed with the polyisocyanate compound (A) and treated as a system liquid.

The content of the polyamine compound (B) in the urea resin composition is 2.0% by mass or more, preferably 5.0% by mass or more, and more preferably 8.0% by mass or more, based on 100% by mass of the total amount of the urea resin composition. The upper limit of the content of the polyamine compound (B) may be, for example, 40.0% by mass or less, preferably 30.0% by mass or less, and more preferably 20.0% by mass or less. The content of the polyamine compound (B) in the urea resin composition may be such that the isocyanate index of the urea resin composition is 200 to 600, and more preferably 200 to 500, from another viewpoint. Here, the isocyanate index refers to a value obtained by multiplying the ratio of the number of moles of isocyanate groups in the polyisocyanate compound (A) to the number of moles of all active hydrogen atoms in the resin composition, which is the total raw material formulation,by 100 (the number of moles of NCO/the number of moles of active hydrogen atoms × 100). When the isocyanate index of the resin composition is in such a range, a sufficient isocyanurate structure is formed, and the isocyanurate ratio can be made appropriate. Therefore, the flame retardancy of the polyurea foam can be made excellent.

When the composition for producing a polyurea foam, in which raw materials other than the polyisocyanate compound (A) are mixed, and the polyisocyanate compound (A) are treated as a two-part system liquid, the content of the polyamine compound (B) in the composition for producing a polyurea foam is 2.0% by mass or more, preferably 5.0% by mass or more, and more preferably 8.0% by mass or more, based on 100% by mass of the sum of the composition for producing a polyurea foam and the polyisocyanate compound (A). The upper limit of the content of the polyamine compound (B) may be, for example, 40.0% by mass or less, preferably 30.0% by mass or less, and more preferably 20.0% by mass or less. The content of the polyamine compound (B) in the composition for producing a polyurea foam can be formulated such that the isocyanate index when the composition for producing a polyurea foam and the polyisocyanate compound (A) are mixed is 200 to 600, and more preferably 200 to 500.

The amount of the polyisocyanate compound (A) in the urea resin composition can be set to 100 to 1000 parts by mass, based on 100 parts by mass of the total amount of the polyamine compound (B) in the urea resin composition.

When the composition for producing a polyurea foam and the polyisocyanate compound (A) are treated as a two-part system liquid, the amount of the polyisocyanate compound (A) in the composition for producing a polyurea foam can be set to 100 to 1000 parts by mass, based on 100 parts by mass of the total amount of the polyamine compound (B).

The content of the foam stabilizer in the urea resin composition or in the composition for producing a polyurea foam can be 0.1 to 20 parts by mass when the total content of the polyamine compound (B) in the urea resin composition or in the composition for producing a polyurea foam is 100 parts by mass. The content of the foam stabilizer contained in the polyurea foam can be 0.1 to 20% by mass, and preferably 0.5 to 15% by mass, based on 100% by mass of the total mass of the polyurea foam.

The content of the flame retardant in the urea resin composition or in the composition for producing a polyurea foam may be 10 to 200 parts by mass, preferably 30 to 150 parts by mass, and more preferably 50 to 100 parts by mass, based on 100 parts by mass of the total content of the polyamine compound (B) in the urea resin composition or in the composition for producing a polyurea foam. When the content of the flame retardant is in such a range, a polyurea foam exhibiting excellent flame retardancy can be obtained. The content of the flame retardant contained in the polyurea foam can be 1 to 60% by mass, and preferably 2 to 45% by mass, based on 100% by mass of the total mass of the polyurea foam.

The content of red phosphorus in the urea resin composition or in the composition for producing a polyurea foam can be 100 parts by mass or less, preferably 5 to 40 parts by mass, and more preferably 25 to 40 parts by mass, based on 100 parts by mass of the total content of the polyamine compound (B) in the urea resin composition or in the composition for producing a polyurea foam. The content of red phosphorus in the polyurea foam can be 0 to 30% by mass, preferably 1 to 30% by mass, and more preferably 2 to 25% by mass, based on 100% by mass of the total mass of the polyurea foam. When the content of red phosphorus is in such a range, a polyurea foam exhibiting higher flame retardancy can be obtained, and deterioration with time in a wet-heat environment can be suppressed. In particular, an increase in ash after pyrolysis of the foam and formation of an incombustible charred layer at the beginning of the flame contact in the flame contact evaluation described later can prevent the progress of combustion to deep portions of the foam.

The total content of the flame retardant selected from a phosphoric acid ester, a phosphate-containing flame retardant, a bromine-containing flame retardant, a boron-containing flame retardant, a antimony-containing flame retardant, and a metal hydroxide can be set to 10 to 200 parts by mass when the total content of the polyamine compound (B) in the urea resin composition is 100 parts by mass. The ratio (Fp/Ft) of the content (Fp) of red phosphorus in the urea resin composition to the total content (Ft) of the flame retardant selected from a phosphoric acid ester, a phosphate-containing flame retardant, a bromine-containing flame retardant, a boron-containing flame retardant, an antimony-containing flame retardant, and a metal hydroxide is not particularly limited, but may be, for example, 0.0 to 1.0, preferably 0.0 to 0.8, more preferably 0.09 to 0.73, and still more preferably 0.45 to 0.73. In the case where the blending ratio of the flame retardant is within such a range, a polyurea foam can be obtained which exhibits excellent flame retardancy and shape retention during combustion and which can suppress deterioration with time in a wet-heat environment.

The content of the trimerization catalyst in the urea resin composition or in the composition for producing a polyurea foam can be 0.1 to 30 parts by mass, preferably 1 to 20 parts by mass, more preferably 5 to 20 parts by mass, and still more preferably 10 to 20 parts by mass, based on 100 parts by mass of the total content of the polyamine compound (B) in the resin composition or in the composition for producing a polyurea foam. When the content of the trimerization catalyst is in such a range, the isocyanuration is sufficiently achieved, and a polyurea foam exhibiting excellent flame retardancy and shape retention during combustion and capable of suppressing deterioration over time in a wet-heat environment can be obtained. The content of the trimerization catalyst contained in the polyurea foam can be 0.01 to 20% by mass, and preferably 0.05 to 15% by mass, based on 100% by mass of the total mass of the polyurea foam.

The content of the foaming agent in the urea resin composition or in the composition for producing a polyurea foam may be 1 to 60 parts by mass, and preferably 5 to 50 parts by mass, based on 100 parts by mass of the total content of the polyamine compound (B) in the resin composition or in the composition for producing a polyurea foam. When the content of the foaming agent is in such a range, a polyurea foam exhibiting excellent flame retardancy and shape retention during combustion and capable of suppressing deterioration with time in a wet-heat environment can be obtained. The content of the foaming agent contained in the polyurea foam can be 1 to 40% by mass, and preferably 3 to 30% by mass, based on 100% by mass of the total mass of the polyurea foam.

In the case where a catalyst other than a trimerization catalyst (a resinification catalyst, a foaming catalyst, or the like) is blended, the content of the catalyst other than the trimerization catalyst can be set to 1 to 10 parts by mass when the total content of the polyamine compound (B) in the urea resin composition or the composition for producing a polyurea foam is 100 parts by mass. The compound having both the action of the resinification catalyst and the action of the foaming catalyst is blended as a resinification catalyst. The content of the catalyst other than the trimerization catalyst contained in the polyurea foam can be 0 to 20% by mass, preferably 0.5 to 15% by mass, when the total mass of the polyurea foam is 100% by mass.

6. Use application of polyurea foam

The polyurea foam of the present invention is used for building applications (walls, ceiling, roof, floor, etc.),

fittings (windows, sliding paper doors, doors, Fusuma doors, transoms, etc.), petroleum and gas carrying vessels and storage tanks, vehicles (engines, batteries, ceiling, floor, door panels, etc.), aircraft, transport machines, drug carrying cold-storage bags, refrigeration and refrigeration compartments, plant facilities, and electrical appliances such as refrigerators, heat retaining materials, heating materials, heat insulating materials, cold resistance moderators, subsurface filling reinforcements during ground-subsidence prevention construction and road construction, injection repair materials for civil engineering applications such as tunnels, bridges, and floating piers, structural part fillers for unnecessary basements, energy absorbing materials, waterproof materials, water stop materials, and buoyancy materials. Further, the foam can be used as a polyurea foam for the spraying method because the foam facilitates heat insulating construction in buildings made of wood or reinforced concrete.

Examples

<<Preparation of resin composition>>

<Raw material>

(Polyamine compound (B))
Ethacure 420 (Amine Value: 562 mgKOH/G, manufactured by Albemarle Corporation) Elastomer 250P (Amine Value: 254 mgKOH/g, manufactured by Kumiai Chemical Industry Co., Ltd.)
ANCAMINE2049 (Amine Value: 484 mgKOH/g, manufactured by Evonik)
Elasmer 1000P (Amine Value: 93mgKOH/g, manufactured by Kumiai Chemical Industry Co., Ltd.)
(Polyol compound)
Maximol RLK-505 (Hydroxyl Value: 250 mgKOH/g, manufactured by Kawasaki Kasei Chemicals,)
(Flame retardant)
Tris(2-chloropropyl) phosphate (TMCPP, chlorine-containing phosphoric acid ester) Resorcinol bis(diphenyl) phosphate (PFR, phosphoric acid ester)
Red phosphorus
Ammonium polyphosphate (phosphate-containing flame retardant)
Aluminum hypophosphite (phosphinate-containing flame retardant)
Sodium hypophosphite (phosphinate-containing flame retardant)
Decabromodiphenyl oxide (bromine-containing flame retardant)
Zinc borate (boron-containing flame retardant)
Antimony trioxide (antimony-containing flame retardant)
Aluminum hydroxide (metal hydroxide flame retardant)
Expanded graphite
DOWSIL TM-4 7081 (acrylic modified silicone resin, silicone flame retardant, manufactured by Dow Toray Co., Ltd.)
(Foam stabilizer)
SF2937F (silicone-based surfactant manufactured by Dupont Toray Specialty Materials K.K.)
Disparlon SEI-1501 (acrylic polymer, organic surfactant, manufactured by Kusumoto Chemicals, Ltd.)
(Catalyst)
Bismuth 2-ethylhexanoate (bismuth-based catalyst)
Dibutyltin dimercaptide (tin-based catalyst)
N,N-dimethylaminoethanol (bubbling catalyst)
Titanium-tetra (2-ethylhexoside) (titanium-based catalyst)
TEDA (triethylenediamine, amine-based catalyst)
BDMAEE (bis(dimethylaminoethyl)ether)
1,2-dimethylimidazole
PMDETA (pentamethyldiethyltriamine)
TOYOCAT-TRX (a trimerization catalyst manufactured by Tosoh Corporation)
U-CAT 18X (quaternary ammonium salt, trimerization catalyst, manufactured by Sun-Apro Ltd.) Diazabicycloundecene (trimerization catalyst)
1,3,5-tris(dimethylaminopropyl) hexahydro-s-triazine (trimerization catalyst) Potassium octylate (trimerization catalyst)
(Foaming agent)
Opteon1100 (manufactured by Chemours-Mitsui Fluoroproducts Co., Ltd., HFO-1336mzZ, boiling point: 33°C)
Opteon1150 (boiling point: 7°C, manufactured by Chemours-Mitsui Fluoroproducts Co., Ltd.)

Cyclopentane (boiling point 49°C)
Water (boiling point 100°C)
(Polyisocyanate compound (A))
Millionate MR-200 (manufactured by Tosoh Corporation, NCO %: 30.9%, Crude MDI) Foamlite MI (manufactured by BASF INOAC Polyurethane Ltd., NCO %: 33.3%, Monomeric MDI)
Comonate TM-50 (manufactured by Mitsui Chemicals & SKC Polyurethanes Inc., NCO %: 39.5%, TDI/MDI mixture)
Urethane prepolymer (NCO %: 27.0%, isocyanate-group-terminated urethane prepolymer) manufactured in-house

The urethane prepolymer manufactured in-house was prepared by the following method.

A predetermined amount of crude MDI (Millionate MR-200, manufactured by Tosoh Corporation) was charged into a 5L polyethylene vessel equipped with a mechanical stirrer, an anchor type stirring blade, and a nitrogen introduction pipe, and the liquid temperature of the isocyanate (crude MDI) was set to 25°C. Herein, a predetermined amount of polypropylene glycol (manufactured by Mitsui Chemicals & SKC Polyurethanes Inc., Actcol D2000, hydroxyl value: 55.1) was stepwisely charged as the polyol so that the liquid temperature did not exceed 80°C. After the completion of the addition of polypropylene glycol, the mixture was stirred at a stirring rate of 60 rpm for 2 hours to react the above isocyanate with the polyol, thereby obtaining an isocyanate-terminated prepolymer. The NCO group content of the obtained prepolymer was measured in accordance with JIS K1603-1 (method A) to confirm that the prepolymer had a predetermined NCO group content.

<Preparation of Foam>

(Preparation of mixed liquid and foam used for evaluation other than adhesion evaluation)

The polyamine compound, the polyol compound, the trimerization catalyst, the flame retardant, the foaming agent, the foame stabilizer, and other additives in respective contents of each of Examples and Comparative Examples shown in Tables 1 to 7 were weighed in a 500mL polypropylene disposable cup to prepare a mixed liquid of each of Examples and Comparative Examples. Each mixed liquid was stirred and mixed for 5 minutes at 2000 rpm using a stirrer equipped with a propeller type stirring blade to obtain the composition for producing a polyurea foam and the polyol mixture of each of Examples and Comparative Examples. Polyamine mixed liquids cooled in a cooling furnace at 10°C and the weighed polyisocyanates having the contents listed in Tables 1 to 7 were individually cooled to 10±1°C. The polyamine mixed liquid and the polyol mixed liquid of each of Examples and Comparative Examples, and the polyisocyanate were stirred and mixed for 5 seconds at 2000 rpm using a stirrer equipped with a propeller type stirring blade to foam and cure the resulting mixture, thereby obtaining the foam of each of Examples and Comparative Examples.

In the adhesion evaluation, the polyamine mixed liquid and the polyol mixed liquid of each of Examples and Comparative Examples and the weighed polyisocyanate having the content shown in Tables 1 to 7 were individually cooled to 10±1°C, and mixed by a hand spray for spraying a rigid urethane foam, which will be described later, and sprayed onto an object to form a foam for adhesion evaluation.

«Evaluation»

The following evaluations were performed on the foam of each of the Examples and the Comparative Examples. Each foam was cured in an environment of a temperature of 23±5°C and a relative humidity of 50±20% for 24 hours after foaming. The evaluation described as "after wet heat treatment" indicates that the foams of the respective Examples and Comparative Examples after curing were subjected to wet heat treatment for one month in an environment of 80°C and RH85%, and were measured as measurement samples after wet heat treatment of the respective Examples and Comparative Examples. The measurement method is the same as the measurement method in the case where the "wet heat treatment" is not performed.

<Measurement of isocyanurate ratio >

The foam of each of the examples and the comparative examples was measured for infrared absorption spectra using a Fourier transform infrared spectrometer (FT-IR, model FT/IR-4200 manufactured by JASCO Corporation). The measurement was performed by the ATR method using a diamond prism, and the number of integrated times for measurement was 50. The isocyanurate ratio in the foam was calculated from Formula 1. The measurements were performed at three points, i.e., the top, the center, and the bottom, with respect to the rising direction of the foam, and were averaged. The measurement results are shown in Tables 1 to 7.

(Observation peak)

P1: peak area derived from the isocyanurate structure contained in the absorption spectrum of the foam obtained by infrared spectroscopic analysis (observation range: 1380 to 1430 cm$^{-1}$)
P2: peak area derived from C=O of the urea structure contained in the absorption spectrum of the polyurea foam obtained by infrared spectroscopic analysis (observation range: 1550 to 1640 cm$^{-1}$)
P3: peak area derived from C=O of the urethane structure and the isocyanurate structure contained in the absorption spectrum of the foam obtained by infrared spectroscopic analysis (observation range: 1680 to 1730 cm$^{-1}$)
P4: peak area derived from N-H contained in the polyurea structure and the urea structure contained in the absorption spectrum of the foam obtained by infrared spectroscopic analysis (observation range: 1470 to 1550 cm$^{-1}$)

(Formula 1)

$$\text{Isocyanurate ratio} = P1/(P1+P2+P3+P4)\times100$$

<Density>

The apparent density of the foam of each of Examples and Comparative Examples was measured by the method described in JIS K7222: 2005 "Cellular plastics and rubbers-Determination of apparent (bulk) density". The results are shown in Tables 8 to 14.

<Average cell (bubble) diameter and cell shape>

The composition for producing a polyurea foam and the polyol mixture of each of Examples and Comparative Examples were mixed with the polyisocyanate by the above-described method, and the resultant was foamed and cured in a mold to obtain the foam of each of Examples and Comparative Examples. A test piece having a length of 50 mm × a width of 50 mm × a thickness of 20 mm was cut out from each of the obtained foams, and bubbles in the CD and MD planes were observed using a digital microscope (manufactured by Keyence Corporation, VHX-800), and the shape thereof was confirmed. In this case, 10 bubbles in the CD plane were randomly selected, a difference (DR=R1-R2) between the longest diameter (denoted as R1) of each bubble in the CD plane and a diameter (denoted as R2) in a direction perpendicular to the longest diameter was obtained, and when the average of the DRs of all the selected bubbles exceeds 5 mm, the shape was determined to be an elliptical shape. In addition, the shape with the average falling in the range of 0 mm or more and 5 mm or less was determined to be a circular shape .
In addition, 10 bubbles in the CD plane and MD plane were randomly selected, and the length of the long axis thereof was measured. The averages were referred to as the average cell diameter in the CD plane and the average cell diameter in the CD plane. The ratio of the average cell diameter in the MD plane to the average cell diameter in the CD plane (average cell diameter in the MD plane/average cell diameter in the CD plane) was calculated. The results are shown in Tables 8 to 14.

<Closed cell rate>

The closed cell rate of the foam of each of Examples and Comparative Examples was measured by the following method. The foam of each of Examples and Comparative Examples was processed into a test piece having a length of 30 mm × a width of 30 mm × a thickness of 20 mm, and the lengths of respective sides were accurately measured to calculate the apparent volume (V) of the test piece. The mass (W) of the test piece was measured. The true volume (V1) of the test piece was measured using a dry automatic density meter (Micromeritics AccuPyc II 1340, manufactured by Shimadzu Corporation). Using these values, values calculated by the following Formulas 2 to 4 were used as the closed cell rate. Each measurement was performed under an environment of a temperature of 23±5°C and a relative humidity of 40 to 70%.

(Formula 2)

$$\text{Open cell rate (\%): } Oc=(V-V1)/V\times100$$

(Formula 3)

Resin amount of polyurea foam: $S = W/(V \times D) \times 100$

D is the density of the resin itself of the polyurea foam.

(Formula 4)

Closed cell rate: $Cc = 100 - Oc - S$ The results are shown in Tables 8 to 14.

<5% weight loss temperature>

About 10 mg of each of the foams of Examples and Comparative Examples was collected, and the temperature at which the weight of the sample decreased by 5% by weight was measured when the temperature was raised to 25 to 600°C using a thermal gravimetric analyzer (abbreviated as TGA). The measurements were carried out under measurement conditions of an air flow of 200 milliliters/minute at a temperature rising rate of 10°C/minute. The results are shown in Tables 8 to 14. The foam after the wet heat treatment was also measured, and the results are shown in Tables 15 to 21.

<Measurement of ash amount (600°C and 700°C)>

3 to 5 mg samples were collected from the center of each of the foams of Examples and Comparative Examples. The sample was filled in an aluminum pan (for measurement at 600°C) or a platinum pan (for measurement at 700°C), the weight loss behavior of the sample was observed for a temperature range of 25 to 600°C or 25 to 700°C using a TG/DTA meter (model TG/DTA7200 manufactured by SII), and the ash amount (%) of each foam was determined from the residual weight of the sample remaining at 600°C or 700°C. The measurement was performed under a dry air flow (flow rate: 250 mm/min) with a temperature rising rate of 10°C /min. The results are shown in Tables 8 to 14. The foam after the wet heat treatment was also measured, and the results are shown in Tables 15 to 21.

<Held residual amount (at 300°C for 30 minutes, 500°C for 30 minutes)>

The foam of each of Examples and Comparative Examples was heated to 300°C or 500°C using a differential thermal and thermal gravimetric analyzer (TG/DTA), and the residual weight of each foam after holding for 30 minutes was measured, and divided by the initial weight of the polyurea foam to obtain a held residual weight (% by weight). In the measurement, the temperature rising rate was set to 10°C/min, and the temperature was raised to and held at a predetermined temperature. The evaluation was performed under a dry air stream (flow rate: 250 mm/min). The results are shown in Tables 8 to 14. The foam after the wet heat treatment was also measured, and the results are shown in Tables 15 to 21.

<Compression strength>

The compressive strength of the foam of each of Examples and Comparative Examples was measured by the method described in JIS K7220: 2006 "Rigid cellular plastics-Determination of compression properties". The results are shown in Tables 8 to 14. The foam after the wet heat treatment was also measured, and the results are shown in Tables 15 to 21.

<Adhesive strength >

The adhesive strength of the foam of each of Examples and Comparative Examples was measured by the method described in JIS A9526: 2015 "Spray-applied rigid polyurethane foam for thermal insulation". The results are shown in Tables 8 to 14. The foam after the wet heat treatment was also measured, and the results are shown in Tables 15 to 21.

<Measurement of thermal conductivity>

The thermal conductivity of the foam of each of Examples and Comparative Examples was measured according to JIS A1412-1: 2016 "Test method for thermal resistance and related properties of thermal insulations-Part 1: Guarded hot plate apparatus". The results are shown in Tables 8 to 14. The foam after the wet heat treatment was also measured, and the results are shown in Tables 15 to 21.

<Compressive modulus>

The compressive modulus of the foam of each of Examples and Comparative Examples was measured by the method described in JIS K7220: 2006 "Rigid cellular plastics-Determination of compression properties". The results are shown in Tables 8 to 14. The foam after the wet heat treatment was also measured, and the results are shown in Tables 15 to 21.

<Moisture permeability coefficient (water vapor transmission)>

The moisture permeability coefficient of the foam of each of Examples and Comparative Examples was measured by the method described in JIS K7225: 2018 "Rigid cellular plastics-Determination of water vapour transmission properties". The results are shown in Tables 8 to 14.

<Tensile strength>

The tensile strength of the foam of each of Examples and Comparative Examples was measured by the method described in JIS A9511: 2017 "Preformed cellular plastics thermal insulation". The results are shown in Tables 8 to 14.

<Tensile elongation>

The tensile elongation of the foam of each of Examples and Comparative Examples was measured by the following method. A test piece was prepared in accordance with JIS A9511: 2017 "Preformed cellular plastics thermal insulation materials", and two gauge lines were drawn in parallel so that the distance therebetween in the tensile direction was 50 mm. This test piece was tested using a material tester at a tensile rate of 500 mm/min, and the distance between the gauge lines was measured at the time when the test piece was broken. The tensile elongation was calculated as the measurement result (the distance between the gauge lines at break)/50 mm (the distance between the gauge lines before test)$\times$100, and the results are shown in Tables 8 to 14.

<Flexural strength>

The flexural strength of the foam of each of Examples and Comparative Examples was measured by the method described in JIS K7221-2: 2006 "Rigid cellular plastics-Determination of flexural properties-Part 2: Determination of flexural strength and apparent flexural modulus of elasticity". The results are shown in Tables 8 to 14.

<Charpy impact strength>

The Charpy impact strength of the foam of each of Examples and Comparative Examples was measured by the method described in JIS K7111-1: 2012 "Plastics-Determination of Charpy impact properties- Part 1: Non-instrumented impact test". The results are shown in Tables 8 to 14.

<Water absorption rate>

The water absorption rate of each of the foams of Examples and Comparative Examples was calculated by dividing the water absorption amount measured by the method B described in JIS A9511: 2017 "Preformed cellular plastics thermal insulation materials" by the initial weight of each foam. The results are shown in Tables 8 to 14.

<Punching shear strength>

The punching shear strength of the foam of each of Examples and Comparative Examples was measured by the method described in JIS K7214: 1985 "Testing Methods for Shear Strength of Plastics by Punch Tool". The results are shown in Tables 8 to 14.

<Durometer hardness (C hardness)>

The durometer hardness (C hardness) of the foam of each of Examples and Comparative Examples was measured by the method described in JIS K7215: 1986 "Testing Methods for Durometer Hardness of Plastics". The results are shown in Tables 8 to 14.

<Specific heat>

The specific heat of the foam of each of Examples and Comparative Examples was measured by the input-compensated differential scanning calorimetry described in JIS K7123: 1987 "Testing Methods for Specific Heat Capacity of Plastics". The results are shown in Tables 8 to 14.

<Dimensional change before and after wet heat treatment>

The foam of each of Examples and Comparative Examples was subjected to wet heat treatment for one month in an environment of 80°C and RH85%, and the rate of change in dimension before and after the wet heat treatment was measured. The measurement sample of the foam was 100 mm in length, 100 mm in width, and 20 mm in thickness, and the measurement sample was measured using a vernier caliper. The results are shown in Tables 15 to 21.

<Volume change rate (at 600°C)

A sample was cut out from the center of the foam of each of Examples and Comparative Examples so as to have a length of 5 cm × a width of 5 cm × a thickness of 5 cm, and left to stand in an electric furnace heated to 600°C for 5 minutes, and the volume change rate was measured. The volume before heating was set to 100%, the volume after heating was measured, and the value obtained by subtracting the volume before heating from the volume after heating was divided by the volume before heating and multiplied by 100. The resulting value was set as the volume change rate. When the sample was expanded, the value exhibits a positive value, and when the sample was shrunk, it exhibits a negative value. The results are shown in Tables 15 to 21.

<Adhesion>

The polyamine mixed liquid and the polyol mixture of each of Examples and Comparative Examples and the weighed polyisocyanate having the content listed in Tables 1 to 7 were individually cooled to 10±1°C, and then mixed and sprayed onto the surface of a wooden plate having a surface temperature of 15°C using a hand spray for spraying a rigid urethane foam (manufactured by ADY Ltd.), and foamed on the wooden plate surface. Thereafter, the foam was cured for 24 hours. The wooden plate and the foam were evaluated as one point without peeling or floating at the bonding interface, and as 0 point with peeling or floating. The results are shown in Tables 15 to 21.

<Flame contact test>

A sample was cut out from the foam of each of Examples and Comparative Examples after 24 hours from the foaming so as to form a rectangular parallelepiped having a length of 10 cm, a width of 10 cm, and a thickness of 5 cm. Each of the obtained samples was placed on a wire mesh having a length of 10 cm, a width of 10 cm, and a thickness of 1 mm, and flame was applied to the surface of the sample for 3 minutes by a gas burner. As the combustion gas, a methane gas having a purity of 99.5% or more was used, and the combustion gas was supplied at 0.2 MPa to obtain a blue-white flame. The height of the flame was 5 cm, and the distance between the flame and the sample surface was 1 cm. After the flame contact, the sample was cut in half, and the presence or absence of cracks in the cross section was visually observed. The maximum distance of the blackened charred portion in the cross section (the length of the charred portion from the side surface of the cross section) was measured as the depth of the charred layer. The results are shown in Tables 1-3. The evaluation was determined by the following evaluation criteria, and the results are shown in Tables 15 to 21. The unmeasurable state in the table indicates that the flame has penetrated through the sample when the flame is brought into contact with the sample and thus the charred layer could not be measured.

<Measurement of total calorific value (50 kW × 10 minutes, 20 minutes)>

A sample was cut from the center of the foam of each of Examples and Comparative Examples so as to have a length of 10 cm, a width of 10 cm, and a thickness of 5 cm, and a total calorific value test of the foam using a cone calorimeter was performed according to ISO-5660 (the Building Standards Act No. 2), and the total calorific value and the maximum heat generation rate of the samples were measured. The measurement was conducted by setting the radiant heat amount to 50 kW/m$^2$ and the measurement time to 10 minutes and 20 minutes. The results are shown in Tables 15 to 21. The unmeasurable state in the table indicates that the sample expanded in the test had come into contact with the tip of the spark plug of the corn calorimeter and no spark occurred, and so normal measurement had not been possible.

The foam of each of Examples and Comparative Examples was subjected to a flame retardant testing of UL94 according to Standard 5VA to measure the combustion distance, the combustion time, the presence or absence of drip and cotton ignition, the presence or absence of penetration of the flame, and the size of the through hole.

<Evaluation by actual machine (Spray)>

A polyamine compound, a flame retardant, a catalyst, a foam stabilizer, and a foaming agent were weighed in a pail container according to the formulations of Examples 1, 18, and 92 described in Tables 1, 2, and 7, and were stirred at room temperature with a power mixer (Model No. PM-1511, manufactured by Ryobi Ltd.) for 5 minutes to prepare an amine mixed liquid (system liquid). A spray gun (manufactured by Graco Inc., Fusion Gun) was provided in an apparatus main body (manufactured by Graco Inc., HR-V), and the temperature control of the pump and the hose was set to 40°C. The pump was operated to adjust the amine mixed liquid (system liquid) and the polyisocyanate which had been sufficiently stirred separately so that the difference in liquid pressure of the liquid feed was within 2.0 MPa. The nozzle of the spray gun was opened, the amine mixed liquid (system liquid) and the isocyanate were mixed in the chamber in the gun and sprayed to a frame to prepare the foams of Examples 1, 18, 92, and the same evaluations as the method without the spray described above were performed. Foams of the same formulations as Examples 1, 18, and 92 gave similar results to the evaluation results of Examples 1, 18, and 92, respectively.

Table 1

| Type | Product Name | Example 1 | | Example 2 | | Example 3 | | Example 4 | | Example 5 | | Example 6 | | Example 7 | | Example 8 | | Example 9 | | Example 10 | | Example 11 | | Example 12 | | Example 13 | | Example 14 | | Example 15 | |
|---|---|---|---|---|---|---|---|---|---|---|---|---|---|---|---|---|---|---|---|---|---|---|---|---|---|---|---|---|---|---|---|
| | | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% |
| Polyamine Compound | ETHACURE 420 (Amine Value: 562 mgKOH/g) | 100 | 20.7 | 100 | 20.7 | 100 | 18.3 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 |
| | ELASMER 250P (Amine Value: 254 mgKOH/g) | | | | | | | | | | | | | | | | | | | | | | | | | | | | | | | |
| | ANCAMINE 2049 (Amine Value: 484 mgKOH/g) | | | | | | | | | | | | | | | | | | | | | | | | | | | | | | | |
| | ELASMER 1000P (Amine Value: 93 mgKOH/g) | | | | | | | | | | | | | | | | | | | | | | | | | | | | | | | |
| Polyisocyanate | MILLIONATE MR-200 (NCO%: 30.9%, Crude MDI) | 383 | 79.3 | 383 | 79.3 | 416 | 81.7 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 |
| | FOAMLITE MI (NCO%: 33.3%, Monomeric MDI) | | | | | | | | | | | | | | | | | | | | | | | | | | | | | | | |
| | TM-50 (NCO%: 39.5%, TDI+MDI Mixed product) | | | | | | | | | | | | | | | | | | | | | | | | | | | | | | | |
| | Company Prepolymer (NCO: 27.0%, NCO-terminated prepolymer) | | | | | | | | | | | | | | | | | | | | | | | | | | | | | | | |
| Polyol Compound | MAXIMOL RLK-505 (Hydroxyl Value: 250 mgKOH/g) | | | | | | | | | | | | | | | | | | | | | | | | | | | | | | | |
| Subtotal | | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 |
| INDEX | | | 300 | | 300 | | 300 | | 300 | | 300 | | 300 | | 300 | | 300 | | 300 | | 300 | | 300 | | 300 | | 300 | | 300 | | 300 |
| Flame Retardant | Red Phosphorus | 32.9 | 6.8 | 32.9 | 6.8 | 37.1 | 6.8 | 32.8 | 6.8 | 32.8 | 6.8 | 32.8 | 6.8 | 32.8 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 |
| | TMCPP (Chlorine-containing Phosphate) | 13.1 | 2.7 | 13.1 | 2.7 | 14.7 | 2.7 | 13.0 | 2.7 | 13.0 | 2.7 | 13.0 | 2.7 | 13.0 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 |
| | PFR (Phosphate Ester) | 65.7 | 13.6 | 65.7 | 13.6 | 74.2 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 |
| | APP (Ammonium Polyphosphate) | | | | | | | | | | | | | | | | | | | | | | | | | | | | | | | |
| | Aluminum Hypophosphite (Phosphinate) | | | | | | | | | | | | | | | | | | | | | | | | | | | | | | | |
| | Sodium Hypophosphite (Phosphinate) | | | | | | | | | | | | | | | | | | | | | | | | | | | | | | | |
| | Decabromodiphenyl Oxide (Bromine system) | | | | | | | | | | | | | | | | | | | | | | | | | | | | | | | |
| | Zinc Borate | | | | | | | | | | | | | | | | | | | | | | | | | | | | | | | |
| | Antimony Trioxide | | | | | | | | | | | | | | | | | | | | | | | | | | | | | | | |
| | Aluminium Hydroxide | | | | | | | | | | | | | | | | | | | | | | | | | | | | | | | |
| | Expanded Graphite | | | | | | | | | | | | | | | | | | | | | | | | | | | | | | | |
| | DOWSIL TM4-7081 (Methacrylate-modified Polysiloxane) | | | | | | | | | | | | | | | | | | | | | | | | | | | | | | | |
| Foam Stabilizer | Silicon-based Surfactant (PDMS-PEG/PPG Graft Polymer) | 28.6 | 5.9 | 28.6 | 5.9 | 32.2 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 |
| | Organic Surfactant (Acrylic-PEG Copolymer) | | | | | | | | | | | | | | | | | | | | | | | | | | | | | | | |
| Catalyst — Resinization Catalyst | Bismuth 2-ethylhexanoate (Bi-based catalyst) | | | | | | | | | | | | | | | | | | | | | | | | | | | | | | | |
| | Dibutyltin Dimercaptide (Sn-based catalyst) | 14.3 | 3.0 | | | | | | | | | | | | | | | | | | | | | | | | | | | | | |
| | Titanium-tetra (2-ethylhexoside) (Ti-based catalyst) | | | | | | | | | | | | | | | | | | | | | | | | | | | | | | | |
| | N,N-dimethylaminoethanol | | | | | | | | | | | | | | | | | | | | | | | | | | | | | | | |
| | TEDA (Triethylenediamine) | | | | | | | | | | | | | | | | | | | | | | | | | | | | | | | |
| | DDMAEE (Bis(dimethylaminoethyl) ether) | | | | | | | | | | | | | | | | | | | | | | | | | | | | | | | |
| | 1,2-Dimethylimidazole | | | | | | | | | | | | | | | | | | | | | | | | | | | | | | | |
| | PMDETA (Pentamethyldiethyltriamine) | | | | | | | | | | | | | | | | | | | | | | | | | | | | | | | |
| Catalyst — Trimerization catalyst | TOYOCAT TRX (Quaternary ammonium salt) | | | | | 11.4 | 2.1 | | | | | | | | | | | | | | | | | | | | | | | | | |
| | U-CAT 18X (Quaternary ammonium salt) | 5.7 | 1.2 | 10.0 | 2.1 | | | 10.0 | 2.1 | | | | | | | 1.4 | 0.3 | 2.9 | 0.6 | 14.3 | 3.0 | 28.6 | 5.9 | 42.9 | 8.9 | 57.1 | 11.8 | 71.4 | 14.8 | | |
| | DBU | | | | | | | | | 10.0 | 2.1 | | | | | | | | | | | | | | | | | | | | |
| | 1,3,5-tris(dimethylaminopropyl) hexahydro-s-triazine | | | | | | | | | | | 10.0 | 2.1 | | | | | | | | | | | | | | | | | | | |
| | Potassium Octylate | | | | | | | | | | | | | 10.0 | 2.1 | | | | | | | | | | | | | | | 0.3 | 0.1 |
| Foaming Agent | HFO (b.p. 33°C) | 80.0 | 16.6 | 80.0 | 16.6 | 80.0 | 14.7 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 |
| | HFO (b.p. 7°C) | | | | | | | | | | | | | | | | | | | | | | | | | | | | | | | |
| | Cyclopentane (b.p. 49°C) | | | | | | | | | | | | | | | | | | | | | | | | | | | | | | | |
| | Water (b.p. 100°C) | | | | | | | | | | | | | | | | | | | | | | | | | | | | | | | |

# Table 2

| Type | Product Name | Example 16 | | Example 17 | | Example 18 | | Example 19 | | Example 20 | | Example 21 | | Example 22 | | Example 23 | | Example 24 | | Example 25 | | Example 26 | | Example 27 | | Example 28 | | Example 29 | | Example 30 | |
|---|---|---|---|---|---|---|---|---|---|---|---|---|---|---|---|---|---|---|---|---|---|---|---|---|---|---|---|---|---|---|---|
| | | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% |
| Polyamine Compound | ETHACURE 420 (Amine Value: 562 mgKOH/g) | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 |
| | ELASMER 250P (Amine Value: 254 mgKOH/g) | | | | | | | | | | | | | | | | | | | | | | | | | | | | | | | |
| | ANCAMINE 2049 (Amine Value: 464 mgKOH/g) | | | | | | | | | | | | | | | | | | | | | | | | | | | | | | | |
| | ELASMER 1000P (Amine Value: 93 mgKOH/g) | | | | | | | | | | | | | | | | | | | | | | | | | | | | | | | |
| Polyisocyanate | MILLIONATE MT-200 (NCO%: 30.9%, Crude MDI) | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 |
| | FOAMLITE MI (NCO%: 33.3%, Monomeric MDI) | | | | | | | | | | | | | | | | | | | | | | | | | | | | | | | |
| | TM-50 (NCO%: 39.5%, TDI+MDI Mixed product) | | | | | | | | | | | | | | | | | | | | | | | | | | | | | | | |
| | Company Prepolymer (NCO: 27.0%, NCO-terminated prepolymer) | | | | | | | | | | | | | | | | | | | | | | | | | | | | | | | |
| Polyol Compound | MAXIMOL RLK-505 (Hydroxyl Value: 250 mgKOH/g) | | | | | | | | | | | | | | | | | | | | | | | | | | | | | | | |
| | Subtotal | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 |
| | INDEX | 300 | | 300 | | 300 | | 300 | | 300 | | 300 | | 300 | | 300 | | 300 | | 300 | | 300 | | 300 | | 300 | | 300 | | 300 | |
| Flame Retardant | Red Phosphorus | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 |
| | TMCPP (Chlorine-containing Phosphate) | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 |
| | PER (Phosphate Ester) | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 |
| | APP (Ammonium Polyphosphate) | | | | | | | | | | | | | | | | | | | | | | | | | | | | | | | |
| | Aluminum I hypophosphite (Phosphinate) | | | | | | | | | | | | | | | | | | | | | | | | | | | | | | | |
| | Sodium Hypophosphite (Phosphinate) | | | | | | | | | | | | | | | | | | | | | | | | | | | | | | | |
| | Decabromodiphenyl Oxide (Bromine system) | | | | | | | | | | | | | | | | | | | | | | | | | | | | | | | |
| | Zinc Borate | | | | | | | | | | | | | | | | | | | | | | | | | | | | | | | |
| | Antimony Trioxide | | | | | | | | | | | | | | | | | | | | | | | | | | | | | | | |
| | Aluminium Hydroxide | | | | | | | | | | | | | | | | | | | | | | | | | | | | | | | |
| | Expanded Graphite | | | | | | | | | | | | | | | | | | | | | | | | | | | | | | | |
| Foam Stabilizer | DOWSIL TM4-7081 (Methacrylate-modified Polysiloxane) | 28.5 | 5.9 | 28.5 | 5.9 | 28.5 | 5.9 | | | | | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 |
| | Silicoat-based Surfactant (PDMS-PEG/PPG Graft Polymer) | | | | | | | 14.3 | | | | | | | | | | | | | | | | | | | | | | | | |
| | Organic Surfactant (Acrylic-PEG Copolymer) | | | | | | | | | 14.3 | | | | | | | | | | | | | | | | | | | | | | |
| Catalyst | Bismuth 2-ethylhexanoate (Bi-based catalyst) | | | | | | | | | | | 14.3 | 3.0 | | | | | | | | | | | | | | | | | | | |
| | Dibutyltin Dimercaptide (Sn-based catalyst) | | | | | | | | | | | | | 14.3 | 3.0 | | | | | | | | | | | | | | | | | |
| | Titanium-tetra (2-ethylhexoxide) (Ti-based catalyst) | | | | | | | | | | | | | | | 14.3 | 3.0 | | | | | | | | | | | | | 2.9 | 0.6 | 8.6 | 1.8 |
| Resinization Catalyst | N,N-dimethylaminoethanol | | | | | | | | | | | | | | | | | 14.3 | 3.0 | | | | | | | | | | | | | |
| | TEDA (Triethylenediamine) | | | | | | | | | | | | | | | | | | | 14.3 | 3.0 | | | | | | | | | | | |
| | BDMAEE (Bis(dimethylaminoethyl) ether) | | | | | | | | | | | | | | | | | | | | | 14.3 | 3.0 | | | | | | | | | |
| | 1,2-Dimethylimidazole | | | | | | | | | | | | | | | | | | | | | | | 14.3 | 3.0 | | | | | | | |
| | PMDETA (Pentamethyldiethyltriamine) | | | | | | | | | | | | | | | | | | | | | | | | | 14.3 | 3.0 | | | | | |
| | TOYOCAT TRX (Quaternary ammonium salt) | | | | | | | | | | | | | | | | | | | | | | | | | | | | | | | |
| Trimerization catalyst | U-CAT 18X (Quaternary ammonium salt) | | | 0.1 | 0.0 | 0.6 | 0.1 | 2.9 | 0.6 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 |
| | DBU | | | | | | | | | | | | | | | | | | | | | | | | | | | | | | | |
| | 1,3,5-tris(dimethylaminopropyl) hexahydro-s-triazine | | | | | | | | | | | | | | | | | | | | | | | | | | | | | | | |
| | Potassium Octylate | 20.0 | 4.1 | 1.4 | 0.3 | 5.7 | 1.2 | 28.6 | 5.9 | | | | | | | | | | | | | | | | | | | | | | | |
| Foaming Agent | HFO (b.p. 33°C) | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 | 80.0 | 16.6 |
| | HFO (b.p. 7°C) | | | | | | | | | | | | | | | | | | | | | | | | | | | | | | | |
| | Cyclopentane (b.p. 49°C) | | | | | | | | | | | | | | | | | | | | | | | | | | | | | | | |
| | Water (b.p. 100°C) | | | | | | | | | | | | | | | | | | | | | | | | | | | | | | | |

Table 3

| Type | Product Name | Example 31 pbw | Example 31 wt% | Example 32 pbw | Example 32 wt% | Example 33 pbw | Example 33 wt% | Example 34 pbw | Example 34 wt% | Example 35 pbw | Example 35 wt% | Example 36 pbw | Example 36 wt% | Example 37 pbw | Example 37 wt% | Example 38 pbw | Example 38 wt% | Example 39 pbw | Example 39 wt% | Example 40 pbw | Example 40 wt% | Example 41 pbw | Example 41 wt% | Example 42 pbw | Example 42 wt% | Example 43 pbw | Example 43 wt% | Example 44 pbw | Example 44 wt% | Example 45 pbw | Example 45 wt% |
|---|---|---|---|---|---|---|---|---|---|---|---|---|---|---|---|---|---|---|---|---|---|---|---|---|---|---|---|---|---|---|---|
| Polyamine Compound | ETHACURE 420 (Amine Value: 562 mgKOH/g) | 100 | 20.7 | 100 | 20.7 | 100 | 20.7 | | | | | | | 90.0 | 18.4 | 80 | 16.5 | 90 | 20.7 | 80 | 18.7 | 100 | 20.7 | 100 | 21.7 | 100 | 24.6 | 100 | 19.3 | 100 | 33.7 |
| | H-ASMER 250P (Amine Value: 254 mgKOH/g) | | | | | | | 100 | 34.3 | | | | | 10.0 | 2.0 | 20 | 4.1 | | | | | | | | | | | | | | |
| | ANCAMINE 2049 (Amine Value: 484 mgKOH/g) | | | | | | | | | 100 | 20.7 | | | | | | | | | | | | | | | | | | | | |
| | ELASMER 1000P (Amine Value: 90 mgKOH/g) | | | | | | | | | | | 100 | 56.9 | | | | | 10 | 2.3 | 20 | 4.7 | | | | | | | | | | |
| Polyisocyanate | MILLIONATE MR-200 (NCO%: 30.9%, Crude MDI) | 383 | 79.3 | 383 | 79.3 | 383 | 79.3 | 191 | 65.7 | 383 | 79.3 | 76 | 43.1 | 389 | 79.5 | 386 | 79.4 | 334 | 77.0 | 329 | 76.7 | 383 | 79.3 | | | | | | | 197 | 66.3 |
| | FOAMLITE MI (NCO%: 33.3%, Monomeric MDI) | | | | | | | | | | | | | | | | | | | | | | | 360 | 78.3 | | | | | | |
| | TM-50 (NCO%: 39.5%, TDI+MDI Mixed product) | | | | | | | | | | | | | | | | | | | | | | | | | 306 | 75.4 | | | | |
| | Company Prepolymer (NCO: 27.0%, NCO-terminated prepolymer) | | | | | | | | | | | | | | | | | | | | | | | | | | | 417 | 80.7 | | |
| Polyol Compound | MAXIMOL RLK-505 (Hydroxyl Value: 250 mgKOH/g) | | | | | | | | | | | | | | | | | | | | | | | | | | | | | | |
| | Subtotal | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 |
| | INDEX | | 300 | | 300 | | 300 | | 300 | | 300 | | 300 | | 300 | | 300 | | 300 | | 300 | | 300 | | 300 | | 300 | | 300 | | 150 |
| Flame Retardant | Red Phosphorus | 32.9 | 6.8 | 32.9 | 6.8 | 32.9 | 6.8 | 19.8 | 6.8 | 32.8 | 6.8 | 11.9 | 6.8 | 33.2 | 6.8 | 33.0 | 6.8 | 29.5 | 6.8 | 29.1 | 6.8 | 32.8 | 6.8 | 31.3 | 6.8 | 27.6 | 6.8 | 35.2 | 6.8 | 20.2 | 6.8 |
| | TMCPP (Chlorine-containing Phosphate) | 13.1 | 2.7 | 13.1 | 2.7 | 13.1 | 2.7 | 7.9 | 2.7 | 13.0 | 2.7 | 4.7 | 2.7 | 13.2 | 2.7 | 13.1 | 2.7 | 11.7 | 2.7 | 11.6 | 2.7 | 13.0 | 2.7 | 12.4 | 2.7 | 11.0 | 2.7 | 14.0 | 2.7 | 8.0 | 2.7 |
| | DER (Phosphate Ester) | 65.7 | 13.6 | 65.7 | 13.6 | 65.7 | 13.6 | 39.6 | 13.6 | 65.7 | 13.6 | 23.9 | 13.6 | 66.4 | 13.6 | 66.1 | 13.6 | 59.1 | 13.6 | 58.3 | 13.6 | 65.7 | 13.6 | 62.6 | 13.6 | 55.2 | 13.6 | 70.3 | 13.6 | 40.4 | 13.6 |
| | APP (Ammonium Polyphosphate) | | | | | | | | | | | | | | | | | | | | | | | | | | | | | | |
| | Aluminum Hypophosphite (Phosphinate) | | | | | | | | | | | | | | | | | | | | | | | | | | | | | | |
| | Sodium Hypophosphite (Phosphinate) | | | | | | | | | | | | | | | | | | | | | | | | | | | | | | |
| | Decabromodiphenyl Oxide (Bromine system) | | | | | | | | | | | | | | | | | | | | | | | | | | | | | | |
| | Zinc Borate | | | | | | | | | | | | | | | | | | | | | | | | | | | | | | |
| | Antimony Trioxide | | | | | | | | | | | | | | | | | | | | | | | | | | | | | | |
| | Aluminium Hydroxide | | | | | | | | | | | | | | | | | | | | | | | | | | | | | | |
| | Expanded Graphite | | | | | | | | | | | | | | | | | | | | | | | | | | | | | | |
| | DOWSIL TM4-7081 (Methacrylate-modified Polysiloxane) | | | | | | | | | | | | | | | | | | | | | | | | | | | | | | |
| Foam Stabilizer | Silicon-based Surfactant (PDMS-PEG/PPG Graft Polymer) | 28.5 | 5.9 | 28.5 | 5.9 | 28.5 | 5.9 | 17.2 | 5.9 | 28.5 | 5.9 | 10.4 | 5.9 | 28.8 | 5.9 | 28.7 | 5.9 | 25.6 | 5.9 | 25.3 | 5.9 | 28.5 | 5.9 | 27.1 | 5.9 | 23.9 | 5.9 | 30.5 | 5.9 | 17.5 | 5.9 |
| | Organic Surfactant (Acrylic-PEG Copolymer) | | | | | | | | | | | | | | | | | | | | | | | | | | | | | | |
| Catalyst (Resinization Catalyst) | Bismuth 2-ethylhexanoate (Bi-based catalyst) | | | | | | | | | | | | | | | | | | | | | | | | | | | | | | |
| | Dibutyltin Dimercaptide (Sn-based catalyst) | | | | | | | | | | | | | | | | | | | | | | | | | | | | | | |
| | Titanium-tetra (2-ethylhexoside) (Ti-based catalyst) | 14.3 | 3.0 | 28.6 | 5.9 | 57.1 | 11.8 | | | | | | | | | | | | | | | | | | | | | | | | |
| | N,N-dimethylaminoethanol | | | | | | | | | | | | | | | | | | | | | | | | | | | | | | |
| | TEDA (Triethylenediamine) | | | | | | | | | | | | | | | | | | | | | | | | | | | | | | |
| | BDMAEE (Bis(dimethylaminoethyl) ether) | | | | | | | | | | | | | | | | | | | | | | | | | | | | | | |
| | 1,2-Dimethylimidazole | | | | | | | | | | | | | | | | | | | | | | | | | | | | | | |
| | PMDETA (Pentamethyldiethyltriamine) | | | | | | | | | | | | | | | | | | | | | | | | | | | | | | |
| | TOYOCAT TRX (Quaternary ammonium salt) | | | | | | | | | | | | | | | | | | | | | | | | | | | | | | |
| Catalyst (Trimerization catalyst) | U-CAT 18X (Quaternary ammonium salt) | 10.0 | 2.1 | 10.0 | 2.1 | 10.0 | 2.1 | 10.0 | 3.4 | 10.0 | 2.1 | 10.0 | 5.7 | 10.0 | 2.0 | 10.0 | 2.1 | 10.0 | 2.3 | 10.0 | 2.3 | 10.0 | 2.1 | 10.0 | 2.2 | 10.0 | 2.5 | 10.0 | 1.9 | 10.0 | 3.4 |
| | DBU | | | | | | | | | | | | | | | | | | | | | | | | | | | | | | |
| | 1,3,5-tris(dimethylaminopropyl) hexahydro-s-triazine | | | | | | | | | | | | | | | | | | | | | | | | | | | | | | |
| | Potassium Octylate | | | | | | | | | | | | | | | | | | | | | | | | | | | | | | |
| Foaming Agent | HFO (b.p. 33°C) | 80.0 | 16.6 | 80.0 | 16.6 | 80.0 | 16.6 | 48.6 | 16.7 | 80.0 | 16.6 | 28.6 | 16.3 | 28.6 | 5.8 | 28.6 | 5.9 | 28.6 | 6.6 | 28.6 | 6.7 | 28.6 | 5.9 | 28.6 | 6.2 | 28.6 | 7.0 | 28.6 | 5.5 | 28.6 | 9.6 |
| | HFO (b.p. 7°C) | | | | | | | | | | | | | | | | | | | | | | | | | | | | | | |
| | Cyclopentane (b.p. 49°C) | | | | | | | | | | | | | | | | | | | | | | | | | | | | | | |
| | Water (b.p. 100°C) | | | | | | | | | | | | | | | | | | | | | | | | | | | | | | |

Table 4

Table 4

EP 4 174 101 A1

| Type | Product Name | Example 46 | | Example 47 | | Example 48 | | Example 49 | | Example 50 | | Example 51 | | Example 52 | | Example 53 | | Example 54 | | Example 55 | | Example 56 | | Example 57 | | Example 58 | | Example 59 | | Example 60 | |
|---|---|---|---|---|---|---|---|---|---|---|---|---|---|---|---|---|---|---|---|---|---|---|---|---|---|---|---|---|---|---|---|
| | | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% |
| Polyamine Compound | ETHACURE 420 (Amine Value: 562 mgKOH/g) | 100 | 27.8 | 100 | 20.7 | 100 | 16.1 | 100 | 13.3 | 100 | 11.3 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 |
| | ELASMER 250P (Amine Value: 254 mgKOH/g) | | | | | | | | | | | | | | | | | | | | | | | | | | | | | | |
| | ANCAMINE 2049 (Amine Value: 484 mgKOH/g) | | | | | | | | | | | | | | | | | | | | | | | | | | | | | | |
| | ELASMER 1000P (Amine Value: 93 mgKOH/g) | | | | | | | | | | | | | | | | | | | | | | | | | | | | | | |
| Polyisocyanate | MILLIONATE MR-200 (NCO% 30.9%, Crude MDI) | 260 | 72.2 | 383 | 79.3 | 523 | 83.9 | 651 | 86.7 | 783 | 88.7 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 |
| | FOAMLITE MI (NCO% 33.3%, Monomeric MDI) | | | | | | | | | | | | | | | | | | | | | | | | | | | | | | |
| | TM-50 (NCO% 39.5%, TDI+MDI Mixed product) | | | | | | | | | | | | | | | | | | | | | | | | | | | | | | |
| | Company Prepolymer (NCO 27.0%, NCO-terminated prepolymer) | | | | | | | | | | | | | | | | | | | | | | | | | | | | | | |
| Polyol Compound | MAXIMOL RLK-505 (Hydroxyl Value: 250 mgKOH/g) | | | | | | | | | | | | | | | | | | | | | | | | | | | | | | |
| | Subtotal | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 |
| | INDEX | | 200 | | 300 | | 400 | | 500 | | 600 | | 300 | | 300 | | 300 | | 300 | | 300 | | 300 | | 300 | | 300 | | 300 | | 300 |
| Flame Retardant | Red Phosphorus | 24.5 | 6.8 | 32.8 | 6.8 | 42.4 | 6.8 | 51.1 | 6.8 | 60.0 | 6.8 | 34.3 | 7.1 | 34.3 | 7.1 | 34.3 | 7.1 | 34.3 | 7.1 | 34.3 | 7.1 | 34.3 | 7.1 | 34.3 | 7.1 | 34.3 | 7.1 | | | 14.3 | 3.0 |
| | TMCPP (Chlorine-containing Phosphate) | 9.7 | 2.7 | 13.0 | 2.7 | 16.8 | 2.7 | 20.3 | 2.7 | 23.8 | 2.7 | 68.6 | 14.2 | 68.6 | 14.2 | 68.6 | 14.2 | 68.6 | 14.2 | 68.6 | 14.2 | 68.6 | 14.2 | 68.6 | 14.2 | 68.6 | 14.2 | 68.6 | 14.2 | 68.6 | 14.2 |
| | PFR (Phosphate Ester) | 49.0 | 13.6 | 65.7 | 13.6 | 84.7 | 13.6 | 102.2 | 13.6 | 120.1 | 13.6 | 22.9 | 4.7 | 22.9 | 4.7 | 22.9 | 4.7 | 22.9 | 4.7 | 22.9 | 4.7 | 22.9 | 4.7 | 22.9 | 4.7 | 22.9 | 4.7 | 22.9 | 4.7 | 22.9 | 4.7 |
| | APP (Ammonium Polyphosphate) | | | | | | | | | | | | | | | | | | | | | | | | | | | | | | |
| | Aluminum Hypophosphite (Phosphinate) | | | | | | | | | | | | | | | | | | | | | | | | | | | | | | |
| | Sodium Hypophosphite (Phosphinate) | | | | | | | | | | | | | | | | | | | | | | | | | | | | | | |
| | Decabromodiphenyl Oxide (Bromine system) | | | | | | | | | | | | | | | | | | | | | | | | | | | | | | |
| | Zinc Borate | | | | | | | | | | | | | | | | | | | | | | | | | | | | | | |
| | Antimony Trioxide | | | | | | | | | | | | | | | | | | | | | | | | | | | | | | |
| | Aluminium Hydroxide | | | | | | | | | | | | | | | | | | | | | | | | | | | | | | |
| | Expanded Graphite | | | | | | | | | | | | | | | | | | | | | | | | | | | | | | |
| | DOWSIL TM4-7081 (Methacrylate-modified Polysiloxane) | | | | | | | | | | | | | | | | | | | | | | | | | | | | | | |
| Foam Stabilizer | Silicon-based Surfactant (PDMS-PEG/PPG Graft Polymer) | 21.2 | 5.9 | 28.5 | 5.9 | 36.7 | 5.9 | 44.3 | 5.9 | 52.1 | 5.9 | 28.6 | 5.9 | | | 2.9 | 0.6 | 8.6 | 1.8 | 14.3 | 3.0 | 28.6 | 5.9 | 42.9 | 8.9 | 57.1 | 11.8 | 28.5 | 5.9 | 28.5 | 5.9 |
| | Organic Surfactant (Acrylic-PEG Copolymer) | | | | | | | | | | | | | 28.6 | 5.9 | | | | | | | | | | | | | | | | |
| Catalyst | Resinization Catalyst — Bismuth 2-ethylhexanoate (Bi-based catalyst) | | | | | | | | | | | | | | | | | | | | | | | | | | | | | | |
| | Dibutyltin Dimercaptide (Sn-based catalyst) | | | | | | | | | | | | | | | | | | | | | | | | | | | | | | |
| | Titanium-tetra (2-ethylhexoside) (Ti-based catalyst) | | | | | | | | | | | | | | | | | | | | | | | | | | | | | | |
| | N,N-dimethylaminoethanol | | | | | | | | | | | | | | | | | | | | | | | | | | | | | | |
| | TEDA (Triethylenediamine) | | | | | | | | | | | | | | | | | | | | | | | | | | | | | | |
| | BDMAEE (Bis(dimethylaminoethyl) ether) | | | | | | | | | | | | | | | | | | | | | | | | | | | | | | |
| | 1,2-Dimethylimidazole | | | | | | | | | | | | | | | | | | | | | | | | | | | | | | |
| | PMDETA (Pentamethyldiethyltriamine) | | | | | | | | | | | | | | | | | | | | | | | | | | | | | | |
| | Trimerization catalyst — TOYOCAT TRX (Quaternary ammonium salt) | | | | | | | | | | | | | | | | | | | | | | | | | | | | | | |
| | U-CAT 18X (Quaternary ammonium salt) | 10.0 | 2.8 | 10.0 | 2.1 | 10.0 | 1.6 | 10.0 | 1.3 | 10.0 | 1.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 |
| | DBU | | | | | | | | | | | | | | | | | | | | | | | | | | | | | | |
| | 1,3,5-tris(dimethylaminopropyl) hexahydro-s-triazine | | | | | | | | | | | | | | | | | | | | | | | | | | | | | | |
| | Potassium Octylate | | | | | | | | | | | | | | | | | | | | | | | | | | | | | | |
| Foaming Agent | HFO (b.p. 33°C) | 28.6 | 7.9 | 28.6 | 5.9 | 28.6 | 4.6 | 28.6 | 3.8 | 28.6 | 3.2 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 |
| | HFO (b.p. 7°C) | | | | | | | | | | | | | | | | | | | | | | | | | | | | | | |
| | Cyclopentane (b.p. 49°C) | | | | | | | | | | | | | | | | | | | | | | | | | | | | | | |
| | Water (b.p. 100°C) | | | | | | | | | | | | | | | | | | | | | | | | | | | | | | |

28

Table 5

Table 5

EP 4 174 101 A1

| Type | Product Name | Example 61 | | Example 62 | | Example 63 | | Example 64 | | Example 65 | | Example 66 | | Example 67 | | Example 68 | | Example 69 | | Example 70 | | Example 71 | | Example 72 | | Example 73 | | Example 74 | | Example 75 | |
|---|---|---|---|---|---|---|---|---|---|---|---|---|---|---|---|---|---|---|---|---|---|---|---|---|---|---|---|---|---|---|---|
| | | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% | pbw | wt% |
| Polyamine Compound | ETHACURE 420 (Amine Value: 562 mgKOH/g) | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 |
| | ELASMER 250P (Amine Value: 254 mgKOH/g) | | | | | | | | | | | | | | | | | | | | | | | | | | | | | | | |
| | ANCAMINE 2049 (Amine Value: 484 mgKOH/g) | | | | | | | | | | | | | | | | | | | | | | | | | | | | | | | |
| | ELASMER 1000P (Amine Value: 93 mgKOH/g) | | | | | | | | | | | | | | | | | | | | | | | | | | | | | | | |
| Polyisocyanate | MILLIONATE MR-200 (NCO%: 30.9%, Crude MDI) | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 |
| | FOAMLITE M (NCO%: 33.3%, Monomeric MDI) | | | | | | | | | | | | | | | | | | | | | | | | | | | | | | | |
| | TM-50 (NCO%: 39.5%, TDI+MDI Mixed product) | | | | | | | | | | | | | | | | | | | | | | | | | | | | | | | |
| | Company Prepolymer (NCO: 27.0%, NCO-terminated prepolymer) | | | | | | | | | | | | | | | | | | | | | | | | | | | | | | | |
| Polyol Compound | MAXIMOL RLK-505 (Hydroxyl Value: 250 mgKOH/g) | | | | | | | | | | | | | | | | | | | | | | | | | | | | | | | |
| Subtotal | | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 |
| INDEX | | | 300 | | 300 | | 300 | | 300 | | 300 | | 300 | | 300 | | 300 | | 300 | | 300 | | 300 | | 300 | | 300 | | 300 | | 300 |
| Flame Retardant | Red Phosphorus | 28.6 | 5.9 | 57.1 | 11.8 | 85.7 | 17.8 | 114.3 | 23.7 | 14.3 | 3.0 | 28.6 | 5.9 | 42.9 | 8.9 | 57.1 | 11.8 | | | | | | | 32.9 | 6.8 | 32.9 | 6.8 | 32.9 | 6.8 | 32.9 | 6.8 |
| | TMCPP (Chlorine-containing Phosphate) | 68.6 | 14.2 | 68.6 | 14.2 | 68.6 | 14.2 | 68.6 | 14.2 | | | | | | | | | | | | | | | | | 13.1 | 2.7 | 13.1 | 2.7 | 13.1 | 2.7 |
| | PFR (Phosphate Ester) | 22.9 | 4.7 | 22.9 | 4.7 | 22.9 | 4.7 | 22.9 | 4.7 | | | | | | | | | | | | | | | 65.7 | 13.6 | | | | | | |
| | APP (Ammonium Polyphosphate) | | | | | | | | | | | | | | | | | 83.7 | 17.3 | | | | | | | | | | | | |
| | Aluminum Hypophosphite (Phosphinate) | | | | | | | | | | | | | | | | | | | 83.7 | 17.3 | | | | | | | | | | |
| | Sodium Hypophosphite (Phosphinate) | | | | | | | | | | | | | | | | | | | | | 83.7 | 17.3 | | | | | | | | |
| | Decabromodiphenyl Oxide (Bromine system) | | | | | | | | | | | | | | | | | | | | | | | 13.1 | 2.7 | | | | | | |
| | Zinc Borate | | | | | | | | | | | | | | | | | | | | | | | | | 65.7 | 13.6 | | | | |
| | Antimony Trioxide | | | | | | | | | | | | | | | | | | | | | | | | | | | 65.7 | 13.6 | | |
| | Aluminium Hydroxide | | | | | | | | | | | | | | | | | | | | | | | | | | | | | 65.7 | 13.6 |
| | Expanded Graphite | | | | | | | | | | | | | | | | | | | | | | | | | | | | | | |
| | DOWSIL TM4-7081 (Methacrylate-modified Polysiloxane) | | | | | | | | | | | | | | | | | | | | | | | | | | | | | | |
| Foam Stabilizer | Silicon-based Surfactant (PDMS-PEG/PPG Graft Polymer) | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 |
| | Organic Surfactant (Acrylic-PEG Copolymer) | | | | | | | | | | | | | | | | | | | | | | | | | | | | | | |
| Catalyst — Resinization Catalyst | Bismuth 2-ethylhexanoate (Bi-based catalyst) | | | | | | | | | | | | | | | | | | | | | | | | | | | | | | |
| | Dibutyltin Dimercaptide (Sn-based catalyst) | | | | | | | | | | | | | | | | | | | | | | | | | | | | | | |
| | Titanium-tetra (2-ethylhexoside) (Ti-based catalyst) | | | | | | | | | | | | | | | | | | | | | | | | | | | | | | |
| | N,N-dimethylaminoethanol | | | | | | | | | | | | | | | | | | | | | | | | | | | | | | |
| | TEDA (Triethylenediamine) | | | | | | | | | | | | | | | | | | | | | | | | | | | | | | |
| | BDMAEE (Bis(dimethylaminoethyl) ether) | | | | | | | | | | | | | | | | | | | | | | | | | | | | | | |
| | 1,2-Dimethylimidazole | | | | | | | | | | | | | | | | | | | | | | | | | | | | | | |
| | PMDETA (Pentamethyldiethyltriamine) | | | | | | | | | | | | | | | | | | | | | | | | | | | | | | |
| Catalyst — Trimerization catalyst | TOYOCAT TRX (Quaternary ammonium salt) | | | | | | | | | | | | | | | | | | | | | | | | | | | | | | |
| | U-CAT 18X (Quaternary ammonium salt) | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 |
| | DBU | | | | | | | | | | | | | | | | | | | | | | | | | | | | | | |
| | 1,3,5-tris(dimethylaminopropyl) hexahydro-s-triazine | | | | | | | | | | | | | | | | | | | | | | | | | | | | | | |
| | Potassium Octylate | | | | | | | | | | | | | | | | | | | | | | | | | | | | | | |
| Foaming Agent | HFO (b.p. 33°C) | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 | 28.6 | 5.9 |
| | HFO (b.p. 7°C) | | | | | | | | | | | | | | | | | | | | | | | | | | | | | | |
| | Cyclopentane (b.p. 49°C) | | | | | | | | | | | | | | | | | | | | | | | | | | | | | | |
| | Water (b.p. 100°C) | | | | | | | | | | | | | | | | | | | | | | | | | | | | | | |

Table 6

| Type | Product Name | Example 76 pbw | Example 76 wt% | Example 77 pbw | Example 77 wt% | Example 78 pbw | Example 78 wt% | Example 79 pbw | Example 79 wt% | Example 80 pbw | Example 80 wt% | Example 81 pbw | Example 81 wt% | Example 82 pbw | Example 82 wt% | Example 83 pbw | Example 83 wt% | Example 84 pbw | Example 84 wt% | Example 85 pbw | Example 85 wt% | Example 86 pbw | Example 86 wt% | Example 87 pbw | Example 87 wt% | Example 88 pbw | Example 88 wt% | Example 89 pbw | Example 89 wt% | Example 90 pbw | Example 90 wt% |
|---|---|---|---|---|---|---|---|---|---|---|---|---|---|---|---|---|---|---|---|---|---|---|---|---|---|---|---|---|---|---|---|
| Polyamine Compound | ETHACURE 420 (Amine Value: 562 mgKOH/g) | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 | 100 | 20.7 |
| | ELASMER 250P (Amine Value: 254 mgKOH/g) | | | | | | | | | | | | | | | | | | | | | | | | | | | | | | |
| | ANCAMINE 2049 (Amine Value: 484 mgKOH/g) | | | | | | | | | | | | | | | | | | | | | | | | | | | | | | |
| | ELASMER 1000P (Amine Value: 93 mgKOH/g) | | | | | | | | | | | | | | | | | | | | | | | | | | | | | | |
| Polyisocyanate | MILLIONATE MR-200 (NCO%: 30.9%, Crude MDI) | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 | 383 | 79.3 |
| | FOAMLITE MI (NCO%: 33.3%, Monomeric MDI) | | | | | | | | | | | | | | | | | | | | | | | | | | | | | | |
| | TM-50 (NCO%: 39.5%, TDI+MDI Mixed product) | | | | | | | | | | | | | | | | | | | | | | | | | | | | | | |
| | Company Prepolymer (NCO: 27.0%, NCO-terminated prepolymer) | | | | | | | | | | | | | | | | | | | | | | | | | | | | | | |
| Polyol Compound | MAXIMOL RLK-505 (Hydroxyl Value: 250 mgKOH/g) | | | | | | | | | | | | | | | | | | | | | | | | | | | | | | |
| | Subtotal | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 | | 100.0 |
| | INDEX | | 300 | | 300 | | 300 | | 300 | | 300 | | 300 | | 300 | | 300 | | 300 | | 300 | | 300 | | 300 | | 300 | | 300 | | 300 |
| Flame Retardant | Red Phosphorus | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 32.9 | 6.8 | 35.2 | 6.8 | 42.2 | 6.8 |
| | IMCPP (Chlorine-containing Phosphate) | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 13.1 | 2.7 | 14.0 | 2.7 | 16.7 | 2.7 |
| | PFR (Phosphate Ester) | | | | | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 65.7 | 13.6 | 70.3 | 13.6 | 84.3 | 13.6 |
| | APP (Ammonium Polyphosphate) | | | | | | | | | | | | | | | | | | | | | | | | | | | | | | |
| | Aluminum Hypophosphite (Phosphinate) | | | | | | | | | | | | | | | | | | | | | | | | | | | | | | |
| | Sodium Hypophosphite (Phosphinate) | | | | | | | | | | | | | | | | | | | | | | | | | | | | | | |
| | Decabromodiphenyl Oxide (Bromine system) | | | | | | | | | | | | | | | | | | | | | | | | | | | | | | |
| | Zinc Borate | | | | | | | | | | | | | | | | | | | | | | | | | | | | | | |
| | Antimony Trioxide | | | | | | | | | | | | | | | | | | | | | | | | | | | | | | |
| | Aluminium Hydroxide | | | | | | | | | | | | | | | | | | | | | | | | | | | | | | |
| | Expanded Graphite | 65.7 | 13.6 | | | | | | | | | | | | | | | | | | | | | | | | | | | | |
| | DOWSIL TM4-7081 (Methacrylate-modified Polysiloxane) | | | 65.7 | 13.6 | | | | | | | | | | | | | | | | | | | | | | | | | | |
| Foam Stabilizer | Silicon-based Surfactant (PDMS-PEG/PPG Graft Polymer) | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 28.5 | 5.9 | 30.5 | 5.9 | 36.6 | 5.9 |
| | Organic Surfactant (Acrylic-PEG Copolymer) | | | | | | | | | | | | | | | | | | | | | | | | | | | | | | |
| Catalyst | Resinization Catalyst — Bismuth 2-ethylhexanoate (Bi-based catalyst) | | | | | | | | | | | | | | | | | | | | | | | | | | | | | | |
| | Dibutyltin Dimercaptide (Sn-based catalyst) | | | | | | | | | | | | | | | | | | | | | | | | | | | | | | |
| | Titanium-tetra (2-ethylhexoxide) (Ti-based catalyst) | | | | | | | | | | | | | | | | | | | | | | | | | | | | | | |
| | N,N-dimethylaminoethanol | | | | | | | | | | | | | | | | | | | | | | | | | | | | | | |
| | TEDA (Triethylenediamine) | | | | | | | | | | | | | | | | | | | | | | | | | | | | | | |
| | BDMAEE (Bis(dimethylaminoethyl) ether) | | | | | | | | | | | | | | | | | | | | | | | | | | | | | | |
| | 1,2-Dimethylimidazole | | | | | | | | | | | | | | | | | | | | | | | | | | | | | | |
| | PMDETA (Pentamethyldiethyltriamine) | | | | | | | | | | | | | | | | | | | | | | | | | | | | | | |
| | Trimerization catalyst — TOYOCAT TRX (Quaternary ammonium salt) | | | | | | | | | | | | | | | | | | | | | | | | | | | | | | |
| | U-CAT 18X (Quaternary ammonium salt) | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 | 10.0 | 2.1 |
| | DBU | | | | | | | | | | | | | | | | | | | | | | | | | | | | | | |
| | 1,3,5-tris(dimethylaminopropyl) hexahydro-s-triazine | | | | | | | | | | | | | | | | | | | | | | | | | | | | | | |
| | Potassium Octylate | | | | | | | | | | | | | | | | | | | | | | | | | | | | | | |
| Foaming Agent | HFO (b.p. 33°C) | 28.6 | 5.9 | 25.7 | 5.3 | 25.7 | 5.3 | 42.9 | 8.9 | 100.0 | 20.7 | 122.9 | 25.4 | 137.1 | 28.4 | 70.0 | 14.5 | 50.0 | 10.4 | 30.0 | 6.2 | 21.4 | 4.4 | | | | | 51.4 | 10.7 | 51.4 | 10.7 |
| | HFO (b.p. 7°C) | | | | | | | | | | | | | | | 30.0 | 6.2 | 50.0 | 10.4 | 12.9 | 2.7 | 21.4 | 4.4 | | | | | | | | |
| | Cyclopentane (b.p. 49°C) | | | | | | | | | | | | | | | | | | | | | | | 100.0 | 20.7 | 42.9 | 8.9 | | | | |
| | Water (b.p. 100°C) | | | | | | | | | | | | | | | | | | | | | | | | | | | 0.6 | 0.12 | 2.9 | 0.6 |

Table 7

Table 8

| Type | Product Name | | Example 91 | | Example 92 | | Example 93 | | Example 94 | | Comparative Example 1 | | Comparative Example 2 | | Comparative Example 3 | | Comparative Example 4 | | Comparative Example 5 | |
|---|---|---|---|---|---|---|---|---|---|---|---|---|---|---|---|---|---|---|---|---|
| | | | pbw | wt% | pbw | wt% | pbw | wt% | pbw | wt% | pbw | wt% | pbw | wt% | pbw | wt% | pbw | wt% | pbw | wt% |
| Polyamine Compound | ETHACURE 420 (Amine Value: 562 mgKOH/g) | | 100 | 20.7 | 100 | 19.3 | 100 | 36.8 | 100 | 31.3 | | | | | 20.7 | 20.7 | 20.7 | 20.7 | | |
| | ELASMER 250P (Amine Value: 254 mgKOH/g) | | | | | | | | | | | | | | | | | | | |
| | ANCAMINE 2049 (Amine Value: 484 mgKOH/g) | | | | | | | | | | | | | | | | | | | |
| | ELASMER 1000P (Amine Value: 93 mgKOH/g) | | | | | | | | | | | | | | | | | | | |
| Polyisocyanate | MILLIONATE MR-200 (NCO%: 30.9%, Crude MDI) | | 383 | 79.3 | 209 | 40.3 | 171 | 63.2 | 220 | 68.8 | 65.2 | 65.2 | 65 | 65.2 | 79.3 | 79.3 | 79.3 | 79.3 | 65.2 | 65.2 |
| | FOAMLITE MI (NCO%: 33.3%, Monomeric MDI) | | | | | | | | | | | | | | | | | | | |
| | TM-50 (NCO%: 39.5%, TDI+MDI Mixed product) | | | | | | | | | | | | | | | | | | | |
| | Company Prepolymer (NCO: 27.0%, NCO-terminated prepolymer) | | | | 209 | 40.3 | | | | | | | | | | | | | | |
| Polyol Compound | MAXIMOL RLK-505 (Hydroxyl Value: 250 mgKOH/g) | | | | | | | | | | 34.8 | 34.8 | 34.8 | 34.8 | | | | | 34.8 | 34.8 |
| | Subtotal | | | 100.0 | | 100.0 | | 100.0 | | 100.0 | | 100.0 | | 100.0 | | 100.0 | | 100.0 | | 100.0 |
| | INDEX | | | 300 | | 300 | | 150 | | 120 | | 300 | | 300 | | 300 | | 300 | | 300 |
| Flame Retardant | Red Phosphorus | | 49.3 | 6.8 | 49.3 | 6.8 | 49.3 | 6.8 | 49.3 | 6.8 | 6.0 | 6.8 | 0.0 | 0.0 | 49.3 | 6.8 | 0.0 | 0.0 | 6.0 | 6.8 |
| | TMCPP (Chlorine-containing Phosphate) | | 19.6 | 2.7 | 19.6 | 2.7 | 19.6 | 2.7 | 19.6 | 2.7 | 2.4 | 2.7 | 2.4 | 2.7 | 19.6 | 2.7 | 0.0 | 0.0 | | |
| | PFR (Phosphate Ester) | | 98.7 | 13.6 | 98.7 | 13.6 | 98.7 | 13.6 | 98.7 | 13.6 | 12.0 | 13.6 | 12.0 | 13.6 | 98.7 | 13.6 | 0.0 | 0.0 | | |
| | APP (Ammonium Polyphosphate) | | | | | | | | | | | | | | | | | | | |
| | Aluminum Hypophosphite (Phosphinate) | | | | | | | | | | | | | | | | | | | |
| | Sodium Hypophosphite (Phosphinate) | | | | | | | | | | | | | | | | | | | |
| | Decabromodiphenyl Oxide (Bromine system) | | | | | | | | | | | | | | | | | | | |
| | Zinc Borate | | | | | | | | | | | | | | | | | | | |
| | Antimony Trioxide | | | | | | | | | | | | | | | | | | | |
| | Aluminium Hydroxide | | | | | | | | | | | | | | | | | | | |
| | Expanded Graphite | | | | | | | | | | | | | | | | | | | |
| | DOWSIL TM4-7081 (Methacrylate-modified Polysiloxane) | | | | | | | | | | | | | | | | | | | |
| Foam Stabilizer | Silicon-based Surfactant (PDMS-PEG/PPG Graft Polymer) | | 42.8 | 5.9 | 42.8 | 5.9 | 50.1 | 6.9 | 57.3 | 7.9 | 5.2 | 5.9 | 6.1 | 6.9 | 57.3 | 7.9 | 64.6 | 8.9 | 8.8 | 9.9 |
| | Organic Surfactant (Acrylic-PEG Copolymer) | | | | | | | | | | | | | | | | | | | |
| Catalyst | Resinization Catalyst | Bismuth 2-ethylhexanoate (Bi-based catalyst) | | | | | | | | | | | | | | | | | | |
| | | Dibutyltin Dimercaptide (Sn based catalyst) | | | | | | | | | | | | | | | | | | |
| | | Titanium-tetra (2-ethylhexoside) (Ti-based catalyst) | | | | | | | | | | | | | | | | | | |
| | | N,N-dimethylaminoethanol | | | | | | | | | | | | | | | | | | |
| | | TEDA (Triethylenediamine) | | | | | | | | | | | | | | | | | | |
| | | BDMAEE (Bis(dimethylaminoethyl) ether) | | | | | | | | | | | | | | | | | | |
| | | 1,2-Dimethylimidazole | | | | | | | | | | | | | | | | | | |
| | | PMDETA (Pentamethyldiethyltriamine) | | | | | | | | | | | | | | | | | | |
| | Trimerization catalyst | TOYOCAT TRX (Quaternary ammonium salt) | | | | | | | | | | | | | | | | | | |
| | | U-CAT 18X (Quaternary ammonium salt) | 10.0 | 2.1 | 10.0 | 1.9 | 10.0 | 3.7 | 10.0 | 3.1 | 1.2 | 1.2 | 1.2 | 1.2 | 0.0 | 0.0 | 10.0 | 2.1 | 1.2 | 1.2 |
| | | DBU | | | | | | | | | | | | | | | | | | |
| | | 1,3,5-tris(dimethylaminopropyl) hexahydro-s-triazine | | | | | | | | | | | | | | | | | | |
| | | Potassium Octylate | | | | | | | | | | | | | | | | | | |
| Foaming Agent | HFO (b.p. 33°C) | | 51.4 | 10.7 | 52.3 | 10.1 | 52.3 | 19.3 | 52.3 | 16.3 | 6.3 | 6.3 | 6.3 | 6.3 | 51.4 | 10.7 | 51.4 | 10.7 | 6.3 | 6.3 |
| | HFO (b.p. 7°C) | | | | | | | | | | | | | | | | | | | |
| | Cyclopentane (b.p. 49°C) | | | | | | | | | | | | | | | | | | | |
| | Water (b.p. 100°C) | | 5.1 | 1.1 | 5.1 | 1.0 | 5.1 | 1.9 | 5.1 | 1.6 | 0.6 | 0.6 | 0.6 | 0.6 | 5.1 | 1.1 | 5.1 | 1.1 | 0.6 | 0.6 |

| Type | Item | | Unit | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|
| Properties of Resin Composition | Cream Time (Reactivity in Foaming) | Raw Material Temperature: 5°C | s | 10 | 10 | 10 | 7 | 90 | 60 | 25 | 15 | 10 | 7 | 5 | 3 | 3 | 3 | 3 |
| | | Raw Material Temperature: 20°C | s | 2 | 2 | 3 | 2 | 30 | 15 | 10 | 10 | 7 | 5 | 3 | 2 | 1 | 1 | 1 |
| Properties of Foam | Isocyanurate Rate | | % | 38.7 | 39.2 | 38.1 | 38.7 | 32.4 | 36.7 | 37.7 | 32.2 | 33.6 | 39.1 | 40.6 | 41.4 | 41.7 | 40.7 | 35.3 |
| | Density | | kg/m³ | 47 | 50 | 50 | 47 | 55 | 52 | 51 | 48 | 46 | 49 | 50 | 49 | 50 | 52 | 47 |
| | Cell Diameter (10-Point Average) | MD | μm | 123 | 154 | 133 | 143 | 134 | 158 | 167 | 167 | 158 | 153 | 144 | 138 | 149 | 133 | 145 |
| | | CD | μm | 113 | 122 | 154 | 128 | 166 | 121 | 120 | 143 | 144 | 140 | 132 | 155 | 134 | 122 | 127 |
| | | MD/CD Ratio | – | 1.1 | 1.3 | 0.9 | 1.1 | 0.8 | 1.3 | 1.4 | 1.2 | 1.1 | 1.1 | 1.1 | 0.9 | 1.1 | 1.1 | 1.1 |
| | Cell Shape (Oval/Round) | | – | Oval | Oval | Oval | Oval | Oval | Oval | Oval | Oval | Oval | Oval | Oval | Oval | Oval | Oval | Oval |
| | Closed Cell Rate | | % | 88.0 | 88.2 | 88.4 | 88.7 | 87.9 | 87.6 | 88.0 | 85.7 | 87.2 | 89.3 | 90.3 | 91.5 | 88.6 | 88.3 | 86.8 |
| | 5% Weight-Loss Temperature | | °C | 200 | 210 | 198 | 210 | 188 | 194 | 192 | 194 | 198 | 205 | 210 | 220 | 225 | 234 | 188 |
| | 600°C Ash Content | | % | 46.8 | 47.2 | 46.6 | 46.8 | 46.6 | 46.5 | 45.3 | 42.7 | 44.1 | 46.4 | 47.6 | 47.9 | 48.4 | 49.0 | 36.7 |
| | 700°C Ash Content | | % | 27.3 | 28.5 | 26.6 | 28.5 | 24.3 | 25.2 | 25.5 | 22.3 | 23.6 | 24.6 | 28.5 | 26.6 | 26.8 | 27.2 | 22.3 |
| | 300°C × 30 min. Retained Amount | | % | 77.8 | 78.2 | 74.3 | 78.2 | 72.8 | 73.7 | 73.9 | 68.5 | 70.2 | 72.3 | 78.2 | 78.3 | 78.3 | 78.4 | 68.3 |
| | 500°C × 30 min. Retained Amount | | % | 46.8 | 48.1 | 45.0 | 48.1 | 42.7 | 44.2 | 44.6 | 39.8 | 40.1 | 42.4 | 48.1 | 47.5 | 48.0 | 48.2 | 39.4 |
| | Compressive Strength | | kPa | 468 | 523 | 498 | 523 | 432 | 456 | 465 | 427 | 441 | 467 | 523 | 530 | 533 | 532 | 489 |
| | Adhesive Strength (Material: Wood Board) | | kPa | 102 | 115 | 104 | 115 | 85 | 91 | 97 | 83 | 86 | 97 | 115 | 111 | 107 | 100 | 89 |
| | Thermal Conductivity | | W/(m·K) | 0.020 | 0.021 | 0.021 | 0.021 | 0.022 | 0.021 | 0.021 | 0.022 | 0.021 | 0.022 | 0.021 | 0.021 | 0.022 | 0.023 | 0.023 |
| | Compressive Modulus | | MPa | 20.7 | 22.6 | 19.7 | 22.6 | 14.5 | 16.7 | 17.9 | 17.7 | 19.3 | 20.4 | 22.6 | 22.8 | 22.9 | 23.1 | 23.1 |
| | Moisture Permeability Coefficient | | ng/(m·s·Pa) | 4.5 | 4.2 | 4.4 | 4.2 | 5.1 | 5.5 | 5.3 | 4.4 | 4.3 | 4.2 | 4.2 | 4.2 | 4.1 | 4.2 | 4.7 |
| | Tensile Strength | | MPa | 0.95 | 1.02 | 0.95 | 1.02 | 0.87 | 0.93 | 0.98 | 0.88 | 0.91 | 0.96 | 1.02 | 1.14 | 1.21 | 1.24 | 1.34 |
| | Tensile Elongation | | % | 85 | 93 | 88 | 93 | 75 | 95 | 103 | 84 | 90 | 102 | 93 | 125 | 122 | 107 | 107 |
| | Bending Strength | | N/cm² | 60 | 65 | 62 | 65 | 45 | 53 | 58 | 48 | 53 | 60 | 65 | 54 | 51 | 45 | 38 |
| | Charpy Impact Strength | | kg·cm/cm³ | 1.91 | 2.13 | 1.96 | 2.13 | 1.82 | 1.89 | 1.93 | 1.79 | 1.82 | 1.99 | 2.13 | 2.16 | 2.18 | 2.2 | 2.07 |
| | Water Absorption Rate | | % | 0.024 | 0.022 | 0.027 | 0.022 | 0.031 | 0.038 | 0.032 | 0.024 | 0.026 | 0.023 | 0.022 | 0.027 | 0.022 | 0.021 | 0.021 |
| | Punching Shear Strength | | N/cm² | 13.4 | 15.2 | 13.8 | 15.2 | 9.3 | 12.4 | 13.3 | 9.3 | 10.4 | 13.1 | 15.2 | 14.6 | 14.5 | 14.2 | 13.3 |
| | Durrometer Hardness (C Hardness) | | – | 42 | 45 | 44 | 46 | 41 | 41 | 42 | 41 | 41 | 42 | 45 | 45 | 46 | 46 | 46 |
| | Specific Heat | | kJ/(kg·°C) | 0.22 | 0.21 | 0.21 | 0.21 | 0.23 | 0.22 | 0.22 | 0.23 | 0.22 | 0.22 | 0.21 | 0.21 | 0.21 | 0.2 | 0.2 |

Table 9

| Type | Item | | Unit | Example 16 | Example 17 | Example 18 | Example 19 | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|---|---|---|---|
| Properties of Resin Composition | Cream Time (Reactivity in Foaming) | Raw Material Temperature: 5°C | s | 3 | 3 | 3 | 3 | 10 | 10 | 25 | 25 | 20 | 20 | 20 | 20 | 20 | 10 | 10 |
| | | Raw Material Temperature: 20°C | s | 1 | 1 | 1 | 1 | 2 | 2 | 5 | 5 | 3 | 3 | 2 | 2 | 2 | 5 | 2 |
| | Isocyanurate Rate | | % | 42.5 | 34.6 | 39.4 | 44.3 | 37.5 | 38.7 | 35.2 | 36.4 | 37.1 | 36.5 | 37.4 | 37.5 | 35.8 | 40.4 | 39.8 |
| | Density | | kg/m³ | 49 | 50 | 51 | 52 | 48 | 47 | 50 | 52 | 49 | 48 | 48 | 51 | 53 | 53 | 51 |
| | Cell Diameter (10-Point Average) | MD | μm | 140 | 133 | 141 | 140 | 155 | 154 | 122 | 138 | 154 | 122 | 140 | 132 | 151 | 148 | 154 |
| | | CD | μm | 122 | 122 | 132 | 128 | 133 | 122 | 145 | 150 | 139 | 133 | 133 | 120 | 143 | 122 | 122 |
| | | MD/CD Ratio | - | 1.1 | 1.1 | 1.1 | 1.1 | 1.2 | 1.3 | 0.8 | 0.9 | 1.1 | 0.9 | 1.1 | 1.1 | 1.1 | 1.2 | 1.3 |
| Properties of Foam | Cell Shape (Oval/Round) | | - | Oval | Oval | Oval | Oval | Oval | Oval | Oval | Oval | Oval | Oval | Oval | Oval | Oval | Oval | Oval |
| | Closed Cell Rate | | % | 89 | 88.3 | 88.7 | 88.6 | 87.2 | 88.2 | 88.4 | 87.3 | 86.9 | 85.4 | 84.7 | 86.3 | 87.1 | 88.2 | 88.2 |
| | 5% Weight-Loss Temperature | | °C | 214 | 190 | 196 | 208 | 197 | 210 | 194 | 196 | 193 | 190 | 188 | 190 | 192 | 206 | 210 |
| | 600°C Ash Content | | % | 39.8 | 36.6 | 38.1 | 39.2 | 47.8 | 46.8 | 45.5 | 45.5 | 46.4 | 46.2 | 45.9 | 46.3 | 46.6 | 45.3 | 46.2 |
| | 700°C Ash Content | | % | 26.9 | 23.1 | 24.4 | 28.4 | 26.9 | 28.5 | 27.9 | 27.3 | 26.4 | 26.3 | 25.7 | 25.1 | 26.3 | 27.6 | 28.5 |
| | 300°C × 30 min. Retained Amount | | % | 73.4 | 69.4 | 70.3 | 73.6 | 76.8 | 78.2 | 72.2 | 73.6 | 74.5 | 75.1 | 74.8 | 74.2 | 75.6 | 75.8 | 78.2 |
| | 500°C × 30 min. Retained Amount | | % | 48.2 | 41.2 | 48.2 | 50.2 | 47.6 | 48.1 | 47.4 | 48.3 | 45.2 | 45.0 | 43.7 | 41.9 | 42.7 | 46.6 | 48.1 |
| | Compressive Strength | | kPa | 532 | 478 | 512 | 528 | 503 | 523 | 490 | 497 | 498 | 492 | 512 | 504 | 502 | 497 | 523 |
| | Adhesive Strength (Material: Wood Board) | | kPa | 93 | 88 | 92 | 97 | 102 | 115 | 95 | 93 | 104 | 100 | 108 | 102 | 101 | 80 | 115 |
| | Thermal Conductivity | | W/(m·K) | 0.021 | 0.022 | 0.022 | 0.021 | 0.023 | 0.021 | 0.021 | 0.02 | 0.021 | 0.021 | 0.022 | 0.021 | 0.02 | 0.02 | 0.021 |
| | Compressive Modulus | | MPa | 25.6 | 19.2 | 20.4 | 22.8 | 19.8 | 20.8 | 18.2 | 17.5 | 19.1 | 18.4 | 19.9 | 19.3 | 19.0 | 17.4 | 22.6 |
| | Moisture Permeability Coefficient | | ng/(m·s·Pa) | 4.5 | 4.6 | 4.5 | 4.4 | 4.3 | 4.2 | 4.1 | 4.4 | 4.6 | 5.0 | 5.2 | 5.1 | 4.8 | 4.3 | 4.5 |
| | Tensile Strength | | MPa | 1.44 | 1.24 | 1.27 | 1.35 | 0.99 | 1.02 | 0.95 | 0.93 | 0.97 | 0.95 | 0.99 | 0.97 | 0.96 | 0.85 | 1.02 |
| | Tensile Elongation | | % | 100 | 112 | 98 | 90 | 85 | 93 | 85 | 80 | 81 | 83 | 78 | 77 | 82 | 75 | 93 |
| | Bending Strength | | N/cm² | 45 | 36 | 41 | 47 | 61 | 65 | 52 | 50 | 52 | 58 | 57 | 60 | 56 | 47 | 65 |
| | Charpy Impact Strength | | kg·cm/cm² | 2.13 | 2.02 | 2.09 | 2.18 | 2.08 | 2.13 | 2.04 | 1.88 | 1.95 | 1.94 | 2.00 | 1.96 | 1.96 | 1.78 | 2.13 |
| | Water Absorption Rate | | % | 0.017 | 0.021 | 0.018 | 0.016 | 0.024 | 0.022 | 0.024 | 0.023 | 0.033 | 0.033 | 0.034 | 0.034 | 0.032 | 0.023 | 0.022 |
| | Punching Shear Strength | | N/cm² | 16.7 | 12.8 | 15.6 | 18.8 | 14.7 | 15.2 | 11.1 | 9.8 | 10.2 | 12.2 | 13.5 | 11.7 | 12.9 | 9.3 | 15.2 |
| | Durometer Hardness (C Hardness) | | - | 50 | 44 | 46 | 51 | 43 | 45 | 44 | 45 | 46 | 47 | 47 | 45 | 46 | 45 | 45 |
| | Specific Heat | | kJ/(kg·°C) | 0.2 | 0.2 | 0.2 | 0.2 | 0.19 | 0.21 | 0.22 | 0.23 | 0.18 | 0.19 | 0.2 | 0.21 | 0.22 | 0.23 | 0.21 |

Table 10

| Type | Item | | Unit | Example 31 | Example 32 | Example 33 | Example 34 | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|---|---|---|---|---|---|
| Properties of Resin Composition | Cream Time (Reactivity in Foaming) | Raw Material Temperature: 5°C | s | 10 | 10 | 10 | 30 | 5 | 60 | 20 | 25 | 35 | 40 | 10 | 15 | 10 | 30 | 15 |
| | | Raw Material Temperature: 20°C | s | 2 | 2 | 2 | 15 | 2 | 30 | 5 | 10 | 20 | 25 | 2 | 5 | 5 | 15 | 10 |
| Properties of Foam | Isocyanurate Rate | | % | 38.7 | 37.5 | 36.5 | 36.1 | 37.0 | 36.2 | 37.2 | 37 | 36.6 | 36.8 | 38.7 | 37.7 | 36.8 | 36.8 | 28.2 |
| | Density | | kg/m³ | 47 | 49 | 48 | 49 | 51 | 47 | 48 | 42 | 46 | 40 | 47 | 53 | 56 | 56 | 54 |
| | Cell Diameter (10-Point Average) | MD | μm | 150 | 151 | 148 | 143 | 118 | 168 | 136 | 138 | 142 | 156 | 154 | 168 | 122 | 134 | 203 |
| | | CD | μm | 137 | 133 | 124 | 167 | 103 | 194 | 144 | 128 | 132 | 184 | 122 | 183 | 157 | 163 | 175 |
| | | MD/CD Ratio | - | 1.1 | 1.1 | 1.2 | 0.9 | 1.1 | 0.9 | 0.9 | 1.1 | 1.1 | 0.8 | 1.3 | 0.9 | 0.8 | 0.8 | 1.2 |
| | Cell Shape (Oval/Round) | | - | Oval | Oval | Oval | Oval | Oval | Oval | Oval | Oval | Oval | Oval | Oval | Oval | Oval | Oval | Oval |
| | Closed Cell Rate | | % | 88.3 | 85.4 | 83.2 | 84.5 | 88.4 | 88.2 | 89.4 | 91.2 | 90.7 | 90.2 | 88.2 | 87.3 | 87.1 | 86.4 | 84.3 |
| | 5% Weight-Loss Temperature | | °C | 209 | 208 | 209 | 193 | 194 | 187 | 199 | 196 | 195 | 190 | 210 | 205 | 203 | 193 | 187 |
| | 600°C Ash Content | | % | 46.8 | 45.5 | 45.7 | 44.3 | 32.5 | 29.8 | 43.7 | 40.5 | 42.2 | 37.5 | 46.8 | 44.3 | 41.8 | 41.8 | 33.2 |
| | 700°C Ash Content | | % | 27.7 | 27.4 | 27.5 | 21.3 | 22.6 | 18.5 | 26.1 | 24.8 | 25.2 | 23.7 | 28.5 | 26.7 | 26.9 | 26.2 | 23.2 |
| | 300°C×30 min. Retained Amount | | % | 78.5 | 78.7 | 79 | 68.9 | 70.3 | 64.5 | 74.3 | 71.7 | 72.2 | 68.4 | 78.2 | 77.4 | 74.5 | 72.3 | 66.4 |
| | 500°C×30 min. Retained Amount | | % | 48.3 | 48.3 | 48.5 | 32.2 | 35.4 | 27.8 | 44.5 | 41.7 | 42.5 | 39.8 | 48.1 | 47.1 | 45.8 | 42.6 | 38.4 |
| | Compressive Strength | | kPa | 530 | 533 | 534 | 470 | 512 | 465 | 520 | 517 | 515 | 510 | 523 | 502 | 490 | 498 | 468 |
| | Adhesive Strength (Material: Wood Board) | | kPa | 110 | 106 | 95 | 87 | 85 | 85 | 120 | 123 | 125 | 128 | 115 | 94 | 86 | 110 | 91 |
| | Thermal Conductivity | | W/(m·K) | 0.021 | 0.022 | 0.022 | 0.02 | 0.021 | 0.021 | 0.022 | 0.023 | 0.022 | 0.023 | 0.021 | 0.022 | 0.022 | 0.022 | 0.021 |
| | Compressive Modulus | | MPa | 23.5 | 24.4 | 25.3 | 18.2 | 19.3 | 17.4 | 19.2 | 20.3 | 18.6 | 19.7 | 22.6 | 19.1 | 18.6 | 20.2 | 17.5 |
| | Moisture Permeability Coefficient | | ng/(m·s·Pa) | 4.5 | 4.4 | 4.6 | 4.4 | 4.5 | 4.7 | 4.7 | 4.5 | 4.6 | 4.4 | 4.2 | 4.4 | 4.3 | 4.2 | 4.3 |
| | Tensile Strength | | MPa | 1.11 | 1.23 | 1.28 | 0.89 | 1.12 | 0.93 | 1.12 | 1.21 | 1.15 | 1.25 | 1.02 | 0.98 | 0.91 | 1.00 | 0.78 |
| | Tensile Elongation | | % | 95 | 96 | 96 | 102 | 87 | 112 | 97 | 105 | 105 | 118 | 93 | 90 | 85 | 105 | 90 |
| | Bending Strength | | N/cm² | 78 | 85 | 92 | 58 | 64 | 53 | 67 | 70 | 65 | 63 | 65 | 55 | 53 | 63 | 55 |
| | Charpy Impact Strength | | kg·cm/cm³ | 2.22 | 2.31 | 2.42 | 1.78 | 2.08 | 1.65 | 2.16 | 2.22 | 2.23 | 2.35 | 2.13 | 1.98 | 1.87 | 2.02 | 1.97 |
| | Water Absorption Rate | | % | 0.021 | 0.025 | 0.024 | 0.022 | 0.023 | 0.022 | 0.024 | 0.024 | 0.023 | 0.024 | 0.022 | 0.019 | 0.018 | 0.021 | 0.021 |
| | Punching Shear Strength | | N/cm² | 16.6 | 18.2 | 20.3 | 12.5 | 14.7 | 10.3 | 14.7 | 14.4 | 14.3 | 14 | 15.2 | 13.8 | 12.6 | 14.1 | 13.7 |
| | Durometer Hardness (C Hardness) | | - | 47 | 49 | 52 | 40 | 47 | 38 | 44 | 42 | 43 | 40 | 45 | 46 | 46 | 44 | 44 |
| | Specific Heat | | kJ/(kg·°C) | 0.23 | 0.22 | 0.22 | 0.24 | 0.22 | 0.24 | 0.22 | 0.23 | 0.23 | 0.24 | 0.21 | 0.22 | 0.23 | 0.24 | 0.23 |

Table 11

| Type | Item | | Unit | Example 46 | Example 47 | Example 48 | Example 49 | Example 50 | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|---|---|---|---|
| Properties of Resin Composition | Cream Time (Reactivity in Foaming) | Raw Material Temperature: 5°C | s | 10 | 10 | 15 | 20 | 25 | 10 | 10 | 10 | 10 | 10 | 10 | 10 | 10 | 7 | 10 |
| | | Raw Material Temperature: 20°C | s | 5 | 2 | 5 | 10 | 15 | 2 | 2 | 2 | 2 | 2 | 2 | 2 | 3 | 3 | 5 |
| Properties of Foam | Isocyanurate Rate | | % | 32.4 | 38.7 | 40.0 | 41.2 | 42.7 | 38.7 | 38.3 | 38.7 | 38.7 | 38.7 | 38.7 | 38.7 | 38.7 | 38.6 | 38.1 |
| | Density | | kg/m³ | 52 | 47 | 48 | 47 | 49 | 47 | 49 | 45 | 47 | 47 | 49 | 48 | 50 | 47 | 48 |
| | Cell Diameter (10-Point Average) | MD | μm | 189 | 154 | 156 | 157 | 122 | 154 | 221 | 161 | 158 | 152 | 154 | 140 | 138 | 153 | 157 |
| | | CD | μm | 171 | 122 | 130 | 134 | 154 | 122 | 164 | 154 | 134 | 135 | 122 | 122 | 118 | 147 | 144 |
| | | MD/CD Ratio | – | 1.1 | 1.3 | 1.2 | 1.2 | 1.1 | 1.3 | 1.3 | 1.1 | 1.2 | 1.1 | 1.3 | 1.1 | 1.2 | 1.0 | 1.1 |
| | Cell Shape (Oval/Round) | | – | Oval | Oval | Oval | Oval | Oval | Oval | Oval | Oval | Oval | Oval | Oval | Oval | Oval | Oval | Oval |
| | Closed Cell Rate | | % | 85.1 | 88.2 | 89.4 | 89.2 | 89.0 | 88.2 | 86.3 | 84.5 | 85.5 | 87.2 | 88.2 | 88.5 | 88.4 | 85.3 | 87.3 |
| | 5% Weight-Loss Temperature | | °C | 194 | 210 | 215 | 220 | 227 | 210 | 201 | 209 | 209 | 210 | 210 | 210 | 210 | 175 | 181 |
| | 600°C Ash Content | | % | 38.4 | 46.8 | 46.3 | 45.9 | 45.2 | 46.8 | 45.9 | 46.2 | 45.8 | 46.8 | 46.6 | 46.1 | 45.6 | 10.5 | 20.7 |
| | 700°C Ash Content | | % | 24.6 | 28.5 | 28.7 | 29.1 | 29.2 | 28.5 | 26.3 | 28.3 | 28.4 | 28.1 | 28.5 | 28.6 | 28.4 | 5.6 | 22.1 |
| | 300°C × 30 min. Retained Amount | | % | 70.3 | 78.2 | 79.3 | 80.3 | 81.2 | 78.2 | 73.7 | 77.8 | 77.9 | 78.5 | 78.2 | 78.4 | 78.1 | 10.2 | 34.4 |
| | 500°C × 30 min. Retained Amount | | % | 41.2 | 48.1 | 49.3 | 50.4 | 51.5 | 48.1 | 44.2 | 47.2 | 47.5 | 47.7 | 48.1 | 48.2 | 48 | 2.1 | 11.5 |
| | Compressive Strength | | kPa | 488 | 523 | 530 | 540 | 545 | 523 | 515 | 520 | 518 | 522 | 523 | 522 | 520 | 500 | 504 |
| | Adhesive Strength (Material: Wood Board) | | kPa | 93 | 115 | 102 | 95 | 83 | 115 | 98 | 75 | 82 | 94 | 115 | 114 | 114 | 91 | 93 |
| | Thermal Conductivity | | W/(m·K) | 0.022 | 0.021 | 0.022 | 0.023 | 0.023 | 0.021 | 0.021 | 0.022 | 0.021 | 0.021 | 0.021 | 0.021 | 0.02 | 0.022 | 0.022 |
| | Compressive Modulus | | MPa | 18.3 | 22.6 | 23.1 | 23.3 | 23.4 | 22.6 | 21.9 | 21.7 | 21.6 | 21.8 | 22.6 | 22 | 21.9 | 20.2 | 20.8 |
| | Moisture Permeability Coefficient | | ng/(m·s·Pa) | 4.3 | 4.2 | 4.4 | 4.6 | 4.6 | 4.2 | 4.5 | 4.4 | 4.7 | 4.5 | 4.2 | 4.3 | 4.4 | 4.5 | 4.7 |
| | Tensile Strength | | MPa | 0.91 | 1.02 | 1.16 | 1.22 | 1.28 | 1.02 | 1.01 | 0.97 | 0.95 | 0.98 | 1.02 | 1.00 | 1.03 | 0.95 | 0.98 |
| | Tensile Elongation | | % | 92 | 93 | 90 | 82 | 75 | 93 | 90 | 88 | 90 | 92 | 93 | 92 | 92 | 85 | 90 |
| | Bending Strength | | N/cm² | 60 | 65 | 65 | 64 | 63 | 65 | 65 | 65 | 65 | 65 | 65 | 65 | 65 | 70 | 67 |
| | Charby Impact Strength | | kg·cm/cm³ | 2.06 | 2.13 | 2.18 | 2.24 | 2.35 | 2.13 | 2.11 | 2.12 | 2.11 | 2.1 | 2.13 | 2.11 | 2.09 | 2.05 | 2.07 |
| | Water Absorption Rate | | % | 0.021 | 0.022 | 0.022 | 0.022 | 0.021 | 0.022 | 0.021 | 0.021 | 0.021 | 0.023 | 0.024 | 0.024 | 0.022 | 0.021 | 0.021 |
| | Punching Shear Strength | | N/cm² | 14.1 | 15.2 | 15.5 | 15.7 | 15.8 | 15.2 | 14.7 | 15 | 15.1 | 14.9 | 15.2 | 15.2 | 15 | 14.6 | 14.8 |
| | Durometer Hardness (C Hardness) | | – | 45 | 45 | 46 | 47 | 41 | 45 | 45 | 46 | 44 | 44 | 45 | 44 | 43 | 47 | 46 |
| | Specific Heat | | kJ/(kg·°C) | 0.23 | 0.21 | 0.22 | 0.23 | 0.24 | 0.21 | 0.24 | 0.22 | 0.23 | 0.23 | 0.21 | 0.24 | 0.22 | 0.21 | 0.21 |

Table 12

| Type | Item | | Unit | Example 61 | Example 62 | Example 63 | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|---|---|---|---|---|
| Properties of Resin Composition | Cream Time (Reactivity in Foaming) | Raw Material Temperature: 5°C | s | 10 | 10 | 10 | 10 | 10 | 10 | 10 | 10 | 10 | 10 | 10 | 10 | 10 | 10 | 10 |
| | | Raw Material Temperature: 20°C | s | 5 | 5 | 5 | 5 | 5 | 5 | 5 | 5 | 5 | 5 | 5 | 5 | 5 | 5 | 5 |
| Properties of Foam | Isocyanurate Rate | | % | 38.1 | 37.8 | 37.7 | 38.1 | 37.6 | 38.3 | 38.1 | 38.4 | 37.3 | 37.8 | 37.4 | 37.9 | 38.1 | 38.3 | 38.5 |
| | Density | | kg/m³ | 47 | 50 | 49 | 52 | 51 | 53 | 56 | 58 | 55 | 52 | 53 | 49 | 52 | 50 | 53 |
| | Cell Diameter (10-Point Average) | MD | μm | 163 | 151 | 147 | 146 | 150 | 152 | 140 | 144 | 137 | 143 | 155 | 133 | 138 | 155 | 167 |
| | | CD | μm | 138 | 122 | 156 | 173 | 143 | 138 | 150 | 129 | 168 | 156 | 142 | 146 | 149 | 138 | 122 |
| | | MD/CD Ratio | - | 1.2 | 1.2 | 0.9 | 0.8 | 1.0 | 1.1 | 0.9 | 1.1 | 0.8 | 0.9 | 1.1 | 0.9 | 0.9 | 1.1 | 1.4 |
| | Cell Shape (Oval/Round) | | - | Oval | Oval | Oval | Oval | Oval | Oval | Oval | Oval | Oval | Oval | Oval | Oval | Oval | Oval | Oval |
| | Closed Cell Rate | | % | 88.2 | 88.3 | 88.6 | 89.3 | 88.2 | 87.8 | 88.4 | 88.8 | 88.2 | 89.3 | 89.4 | 90.2 | 87.7 | 86.5 | 84.3 |
| | 5% Weight-Loss Temperature | | °C | 192 | 215 | 222 | 227 | 193 | 195 | 197 | 202 | 203 | 205 | 200 | 195 | 197 | 202 | 194 |
| | 600°C Ash Content | | % | 27.8 | 45.2 | 46.5 | 47.0 | 28.2 | 46.3 | 47.4 | 47.8 | 46.6 | 47.1 | 47.3 | 46.8 | 46.3 | 47.4 | 47.7 |
| | 700°C Ash Content | | % | 24.2 | 29.3 | 30.1 | 30.5 | 12.3 | 18.4 | 24.5 | 26.7 | 26.7 | 26.3 | 25.3 | 25.5 | 26.1 | 25.8 | 26.3 |
| | 300°C×30 min. Retained Amount | | % | 61.2 | 79.3 | 82.1 | 83.4 | 12.3 | 34.5 | 50.2 | 65.3 | 73.4 | 71.2 | 68.7 | 74.2 | 75.3 | 74.8 | 72.9 |
| | 500°C×30 min. Retained Amount | | % | 23.4 | 48.4 | 50.1 | 52.3 | 5.2 | 12.3 | 22.4 | 35.4 | 41.2 | 39.3 | 37.5 | 44.5 | 46.2 | 43.5 | 44.2 |
| | Compressive Strength | | kPa | 508 | 515 | 518 | 520 | 505 | 510 | 512 | 518 | 517 | 520 | 516 | 517 | 520 | 522 | 518 |
| | Adhesive Strength (Material: Wood Board) | | kPa | 96 | 102 | 105 | 106 | 102 | 98 | 96 | 93 | 93 | 95 | 97 | 103 | 98 | 104 | 102 |
| | Thermal Conductivity | | W/(m·K) | 0.022 | 0.023 | 0.023 | 0.023 | 0.022 | 0.021 | 0.021 | 0.021 | 0.023 | 0.023 | 0.023 | 0.021 | 0.023 | 0.022 | 0.021 |
| | Compressive Modulus | | MPa | 21 | 21.2 | 21.4 | 21.5 | 20.5 | 20.7 | 20.9 | 21 | 19.7 | 19.8 | 19.5 | 20.1 | 21.4 | 20.4 | 21.2 |
| | Moisture Permeability Coefficient | | ng/(m·s·Pa) | 4.8 | 4.3 | 4.4 | 4.5 | 4.6 | 4.3 | 4.6 | 4.2 | 4.5 | 4.7 | 4.5 | 4.4 | 4.2 | 4.3 | 4.7 |
| | Tensile Strength | | MPa | 0.99 | 0.99 | 1 | 0.99 | 0.97 | 0.95 | 0.94 | 0.94 | 0.99 | 0.97 | 0.95 | 0.97 | 0.95 | 0.99 | 1.01 |
| | Tensile Elongation | | % | 91 | 91 | 90 | 90 | 85 | 87 | 87 | 88 | 90 | 87 | 88 | 90 | 92 | 88 | 89 |
| | Bending Strength | | N/cm² | 67 | 63 | 60 | 60 | 60 | 57 | 55 | 53 | 58 | 60 | 57 | 60 | 62 | 63 | 65 |
| | Charpy Impact Strength | | kg·cm/cm³ | 2.09 | 2.1 | 2.12 | 2.14 | 2.00 | 2.03 | 2.05 | 2.07 | 1.98 | 1.97 | 1.96 | 1.94 | 1.95 | 1.93 | 1.97 |
| | Water Absorption Rate | | % | 0.021 | 0.021 | 0.021 | 0.021 | 0.021 | 0.021 | 0.021 | 0.021 | 0.021 | 0.021 | 0.024 | 0.021 | 0.021 | 0.021 | 0.021 |
| | Punching Shear Strength | | N/cm² | 15 | 15.1 | 15.2 | 15.3 | 14.7 | 14.9 | 15 | 15.1 | 14.5 | 15.3 | 14.7 | 15.4 | 16.2 | 15.4 | 15.8 |
| | Durometer Hardness (C Hardness) | | - | 45 | 45 | 44 | 45 | 46 | 44 | 45 | 46 | 47 | 47 | 45 | 46 | 46 | 44 | 45 |
| | Specific Heat | | kJ/(kg·°C) | 0.2 | 0.22 | 0.21 | 0.23 | 0.24 | 0.22 | 0.22 | 0.23 | 0.23 | 0.24 | 0.24 | 0.22 | 0.23 | 0.22 | 0.24 |

Table 13

| Type | Item | | | Unit | Example 76 | Example 77 | Example 78 | Example 79 | Example 80 | Example 81 | Example 82 | Example 83 | Example 84 | Example 85 | Example 86 | Example 87 | Example 88 | Example 89 | Example 90 |
|---|---|---|---|---|---|---|---|---|---|---|---|---|---|---|---|---|---|---|---|
| Properties of Resin Composition | Cream Time (Reactivity in Foaming) | Raw Material Temperature: 5°C | | s | 10 | 10 | 10 | 10 | 10 | 10 | 10 | 10 | 10 | 10 | 10 | 10 | 10 | 10 | 10 |
| | | Raw Material Temperature: 20°C | | s | 5 | 5 | 5 | 5 | 5 | 5 | 5 | 5 | 5 | 5 | 5 | 5 | 5 | 5 | 5 |
| | Isocyanurate Rate | | | % | 38.2 | 38.1 | 38.1 | 37.4 | 37.7 | 37.8 | 38.2 | 37.9 | 37.7 | 38.4 | 38.2 | 37.7 | 37.5 | 38.5 | 38.7 |
| Properties of Foam | Density | | | kg/m³ | 52 | 70 | 70 | 58 | 40 | 32 | 30 | 38 | 35 | 55 | 52 | 40 | 60 | 52 | 45 |
| | Cell Diameter (10-Point Average) | MD | | μm | 138 | 155 | 152 | 164 | 156 | 163 | 134 | 145 | 156 | 158 | 142 | 138 | 145 | 148 | 134 |
| | | CD | | μm | 154 | 167 | 148 | 132 | 140 | 145 | 144 | 137 | 149 | 154 | 156 | 148 | 137 | 167 | 155 |
| | | MD/CD Ratio | | - | 0.9 | 0.9 | 1.0 | 1.2 | 1.1 | 1.1 | 0.9 | 1.1 | 1.0 | 0.9 | 0.9 | 0.9 | 1.1 | 0.9 | 0.9 |
| | Cell Shape (Oval/Round) | | | - | Oval | Oval | Oval | Oval | Oval | Oval | Oval | Oval | Oval | Oval | Oval | Oval | Oval | Oval | Oval |
| | Closed Cell Rate | | | % | 89.6 | 88.2 | 87.4 | 88.1 | 88.3 | 87.6 | 87.9 | 87.4 | 86.6 | 87.8 | 88.3 | 85.4 | 82.7 | 85.5 | 82.3 |
| | 5% Weight-Loss Temperature | | | °C | 200 | 198 | 201 | 194 | 190 | 187 | 184 | 189 | 185 | 195 | 197 | 198 | 199 | 200 | 200 |
| | 600°C Ash Content | | | % | 48.0 | 46.5 | 46.5 | 46.8 | 46.6 | 47.2 | 47.0 | 46.3 | 45.8 | 46.8 | 46.6 | 44.3 | 45.8 | 46.6 | 47.3 |
| | 700°C Ash Content | | | % | 26.4 | 25.7 | 26.3 | 25.2 | 24.4 | 22.7 | 20.5 | 24.5 | 24.7 | 25.5 | 25.7 | 24.7 | 25.3 | 25.5 | 25.1 |
| | 300°C × 30 min. Retained Amount | | | % | 71.6 | 72.0 | 75.3 | 71.8 | 61.1 | 58.7 | 55.7 | 62.3 | 62.5 | 70.7 | 71.4 | 60.7 | 70.5 | 70.8 | 71.4 |
| | 500°C × 30 min. Retained Amount | | | % | 48.4 | 45.7 | 45.6 | 42.3 | 32.5 | 28.7 | 25.6 | 31.7 | 32.2 | 41.7 | 42.3 | 41.8 | 42.2 | 38.9 | 38.3 |
| | Compressive Strength | | | kPa | 522 | 519 | 518 | 523 | 517 | 508 | 502 | 512 | 514 | 517 | 520 | 518 | 520 | 512 | 513 |
| | Adhesive Strength (Material: Wood Board) | | | kPa | 96 | 98 | 102 | 99 | 96 | 93 | 90 | 96 | 97 | 100 | 98 | 97 | 101 | 101 | 103 |
| | Thermal Conductivity | | | W/(m·K) | 0.022 | 0.02 | 0.02 | 0.021 | 0.022 | 0.023 | 0.023 | 0.022 | 0.022 | 0.02 | 0.021 | 0.024 | 0.023 | 0.022 | 0.023 |
| | Compressive Modulus | | | MPa | 19.7 | 19.4 | 19.2 | 18.3 | 17.8 | 17.1 | 16.6 | 17.2 | 16.7 | 17.7 | 16.8 | 16.1 | 18.0 | 17.7 | 18.1 |
| | Moisture Permeability Coefficient | | | ng/(m·s·Pa) | 4.8 | 4.1 | 4.2 | 4.5 | 4.6 | 4.4 | 4.7 | 4.6 | 4.5 | 4.3 | 4.4 | 4.6 | 4.3 | 4.6 | 5 |
| | Tensile Strength | | | MPa | 1.02 | 1.04 | 0.99 | 0.96 | 0.95 | 0.92 | 0.88 | 0.93 | 0.92 | 0.94 | 0.91 | 0.94 | 0.95 | 0.96 | 0.98 |
| | Tensile Elongation | | | % | 90 | 90 | 88 | 92 | 95 | 92 | 90 | 92 | 93 | 94 | 97 | 95 | 90 | 91 | 93 |
| | Bending Strength | | | N/cm² | 65 | 63 | 64 | 63 | 57 | 54 | 52 | 61 | 62 | 64 | 65 | 56 | 58 | 64 | 66 |
| | Charpy Impact Strength | | | kg·cm/cm³ | 2.00 | 1.98 | 2.01 | 1.97 | 1.93 | 1.91 | 1.87 | 1.96 | 1.95 | 1.98 | 1.99 | 1.92 | 2.00 | 1.94 | 1.96 |
| | Water Absorption Rate | | | % | 0.021 | 0.021 | 0.021 | 0.021 | 0.021 | 0.021 | 0.021 | 0.021 | 0.021 | 0.021 | 0.021 | 0.021 | 0.021 | 0.021 | 0.021 |
| | Punching Shear Strength | | | N/cm² | 15.9 | 15.3 | 15.2 | 14.8 | 14.5 | 13.7 | 13.1 | 14.4 | 14.3 | 14.9 | 14.8 | 14.6 | 14.7 | 14.6 | 14.8 |
| | Durometer Hardness (C Hardness) | | | - | 44 | 45 | 47 | 46 | 45 | 43 | 42 | 43 | 41 | 45 | 44 | 40 | 45 | 43 | 41 |
| | Specific Heat | | | kJ/(kg·°C) | 0.21 | 0.22 | 0.23 | 0.22 | 0.23 | 0.22 | 0.22 | 0.21 | 0.22 | 0.21 | 0.23 | 0.22 | 0.23 | 0.23 | 0.21 |

Table 14

| Type | Item | | Unit | Example 91 | Example 92 | Example 93 | Example 94 | Comparative Example 1 | Comparative Example 2 | Comparative Example 3 | Comparative Example 4 | Comparative Example 5 |
|---|---|---|---|---|---|---|---|---|---|---|---|---|
| Properties of Resin Composition | Cream Time (Reactivity in Foaming) | Raw Material Temperature: 5°C | s | 10 | 15 | 10 | 15 | 10 | 10 | 10 | 10 | 10 |
| | | Raw Material Temperature: 20°C | s | 5 | 5 | 5 | 7 | 5 | 5 | 5 | 5 | 5 |
| | Isocyanurate Rate | | % | 39.0 | 39.0 | 23.7 | 25.8 | 29.3 | 29.3 | 0.0 | 30.2 | 29.4 |
| | Density | | kg/m³ | 38 | 46 | 40 | 42 | 32.1 | 44 | 42 | 46 | 35 |
| | Cell Diameter (10-Point Average) | MD | μm | 160 | 155 | 167 | 188 | 145 | 160 | 166 | 160 | 156 |
| | | CD | μm | 148 | 133 | 133 | 133 | 133 | 148 | 139 | 142 | 134 |
| | | MD/CD Ratio | - | 1.1 | 1.2 | 1.3 | 1.4 | 1.1 | 1.1 | 1.2 | 1.1 | 1.2 |
| | Cell Shape (Oval/Round) | | - | Oval | Oval | Oval | Oval | Oval | Oval | Oval | Oval | Oval |
| | Closed Cell Rate | | % | 80.2 | 88.2 | 77.8 | 80.2 | 86.5 | 87.7 | 88.4 | 90.2 | 89.3 |
| | 5% Weight-Loss Temperature | | °C | 200 | 181 | 151 | 155 | 178 | 168 | 168 | 163 | 200 |
| | 600°C Ash Content | | % | 47.5 | 39.4 | 29.8 | 31.2 | 9.3 | 28.1 | 25.3 | 10.2 | 33.1 |
| | 700°C Ash Content | | % | 24.7 | 21.5 | 18.5 | 23.6 | 22.3 | 21.8 | 15.2 | 3.2 | 21.7 |
| | 300°C×30 min. Retained Amount | | % | 72.2 | 70.3 | 70.3 | 71.2 | 72.2 | 34.2 | 31.2 | 12.2 | 29.4 |
| | 500°C×30 min. Retained Amount | | % | 37.7 | 34.5 | 31.1 | 33.8 | 45.3 | 22.5 | 18.4 | 3.5 | 17.3 |
| | Compressive Strength | | kPa | 508 | 496 | 256 | 287 | 467 | 478 | 501 | 512 | 475 |
| Properties of Foam | Adhesive Strength (Material Wood Board) | | kPa | 105 | 102 | 98 | 114 | 92 | 90 | Not measurable (peeling) | Not measurable (peeling) | Not measurable (peeling) |
| | Thermal Conductivity | | W/(m·K) | 0.024 | 0.022 | 0.025 | 0.021 | 0.022 | 0.021 | 0.022 | 0.022 | 0.023 |
| | Compressive Modulus | | MPa | 18.4 | 19.6 | 17.8 | 18.8 | 15.7 | 14.2 | 10.3 | 16.7 | 14.4 |
| | Moisture Permeability Coefficient | | ng/(m·s·Pa) | 5.2 | 5.2 | 9.5 | 7.5 | 6.3 | 6.5 | 4.5 | 4.7 | 6.2 |
| | Tensile Strength | | MPa | 1.00 | 1.06 | 0.98 | 1.12 | 1.11 | 1.23 | 0.92 | 0.9 | 1.03 |
| | Tensile Elongation | | % | 96 | 101 | 83 | 122 | 112 | 125 | 92 | 90 | 105 |
| | Bending Strength | | N/cm² | 67 | 73 | 73 | 80 | 70 | 72 | 45 | 55 | 76 |
| | Charpy Impact Strength | | kg·cm/cm³ | 1.99 | 1.92 | 1.74 | 1.88 | 1.72 | 1.83 | 1.92 | 1.9 | 1.88 |
| | Water Absorption Rate | | % | 0.021 | 0.027 | 0.024 | 0.018 | 0.021 | 0.021 | 0.021 | 0.021 | 0.021 |
| | Punching Shear Strength | | N/cm² | 15 | 14.2 | 15.6 | 17.8 | 14.3 | 14.4 | 15.1 | 15.2 | 14.7 |
| | Durrometer Hardness (C Hardness) | | - | 39 | 40 | 28 | 33 | 39 | 36 | 44 | 46 | 37 |
| | Specific Heat | | kJ/(kg·°C) | 0.19 | 0.2 | 0.19 | 0.21 | 0.22 | 0.2 | 0.21 | 0.22 | 0.21 |

Table 15

| Type | Item | | Unit | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|
| Physical Properties of Foam After Wet Heat Treatment | 5% Weight-Loss Temperature | | °C | 198 | 209 | 197 | 209 | 185 | 191 | 187 | 205 | 209 | 214 | 225 | 226 | 227 | 227 | 184 |
| | 600°C Ash Content | | % | 44.3 | 45.8 | 44.2 | 45.8 | 42.1 | 43.7 | 44.1 | 42.1 | 42.7 | 43.6 | 45.8 | 46.2 | 46.3 | 46.4 | 36.1 |
| | 700°C Ash Content | | % | 27.4 | 27.9 | 26.8 | 27.9 | 24.1 | 25.7 | 26.5 | 21.8 | 23.0 | 24.0 | 27.9 | 25.8 | 25.5 | 25.4 | 21.4 |
| | 300°C×30 min. Retained Amount | | % | 75.4 | 77.1 | 75.4 | 77.1 | 74.3 | 75.2 | 75.8 | 66.6 | 68.9 | 69.4 | 72.1 | 73.0 | 73.8 | 75.2 | 67.7 |
| | 500°C×30 min. Retained Amount | | % | 44.3 | 44.8 | 43.8 | 44.8 | 40.8 | 41.8 | 42.5 | 36.3 | 37.7 | 40.5 | 44.8 | 45.5 | 46.3 | 47.0 | 39. |
| | Compressive Strength | Measured Value | kPa | 443 | 513 | 478 | 513 | 402 | 439 | 429 | 393 | 414 | 453 | 513 | 504 | 507 | 510 | 466 |
| | | Change Before and After Treatment | % | 3.3 | 1.9 | 4.0 | 1.9 | 6.9 | 3.7 | 7.7 | 6.8 | 6.1 | 3.0 | 1.9 | 4.9 | 4.9 | 4.1 | 4.7 |
| | Adhesive Strength | Measured Value | kPa | 98 | 112 | 97 | 112 | 73 | 88 | 90 | 67 | 74 | 90 | 112 | 107 | 102 | 93 | 82 |
| | | Change Before and After Treatment | % | 3.9 | 2.6 | 6.7 | 2.6 | 14.1 | 3.3 | 7.2 | 19.3 | 14.0 | 7.2 | 2.6 | 3.6 | 4.7 | 7.0 | 7.9 |
| | Thermal Conductivity | Measured Value | W/(m·K) | 0.021 | 0.022 | 0.022 | 0.022 | 0.024 | 0.023 | 0.021 | 0.023 | 0.022 | 0.023 | 0.022 | 0.022 | 0.023 | 0.024 | 0.024 |
| | | Change Before and After Treatment | % | 5.0 | 4.8 | 4.8 | 4.8 | 9.1 | 9.5 | 0.0 | 4.5 | 4.8 | 4.5 | 4.8 | 4.8 | 4.5 | 4.3 | 4.3 |
| | Compressive Modulus | Measured Value | MPa | 15.4 | 20.5 | 18.6 | 20.5 | 10.3 | 14.5 | 16 | 13 | 12.5 | 14.5 | 20.5 | 19.9 | 20.1 | 20.5 | 22 |
| | | Change Before and After Treatment | % | 25.6 | 9.3 | 15.7 | 9.3 | 29.0 | 13.2 | 10.6 | 26.6 | 35.2 | 28.9 | 9.3 | 12.7 | 12.2 | 11.3 | 4.8 |
| | Dimensional Change | Change Before and After Treatment | % | 10 | 12 | 15 | 12 | 35 | 25 | 21 | 30 | 25 | 15 | 12 | 10 | 10 | 10 | 12 |
| Combustion Properties | Volume Change (vol%@600°C, Electric Furnace) | | % | -17.2 | -20.5 | -21.8 | -17.2 | -56.3 | -36.8 | -28.8 | -44.5 | -34.8 | -26.3 | -25.2 | -24.5 | -23.8 | -22.2 | -45.3 |
| | Flame Contact Test | Presence or Absence of Cross-sectional Cracks | -- | Absence | Absence | Absence | Absence | Absence | Absence | Absence | Absence | Absence | Absence | Absence | Absence | Absence | Absence | Absence |
| | | Depth of Carbonized Layer | mm | 3 | 3 | 3 | 3 | 8 | 7 | 5 | 9 | 7 | 3 | 4 | 3 | 3 | 3 | 3 |
| | Cone Calorimeter Test | Total Calorific Value /10min. | MJ/m² | 4.7 | 4.9 | 5.1 | 4.7 | 6.7 | 6.2 | 5.8 | 6.6 | 6.3 | 5.5 | 4.9 | 4.8 | 4.9 | 5.0 | 5.1 |
| | | Total Calorific Value /20min. | MJ/m² | 6.1 | 6.8 | 7.5 | 6.1 | 9.1 | 8.4 | 7.7 | 9.5 | 9.1 | 7.8 | 8.1 | 8.4 | 8.8 | 9.1 | 9.1 |
| | UL94 Standard Combustibility (Standard: 5V-A) | Combustion Distance | mm | 3 | 2 | 3 | 2 | 8 | 7 | 5 | 15 | 12 | 5 | 2 | 2 | 2 | 2 | 5 |
| | | Burning Time | s | 5 | 3 | 5 | 3 | 15 | 12 | 10 | 30 | 15 | 10 | 3 | 3 | 3 | 3 | 10 |
| | | Presence or Absence of Drip and Cotton Ignition | -- | Absence | Absence | Absence | Absence | Absence | Absence | Absence | Absence | Absence | Absence | Absence | Absence | Absence | Absence | Absence |
| | | Presence or Absence of Penetration of the Flame | -- | Absence | Absence | Absence | Absence | Absence | Absence | Absence | Absence | Absence | Absence | Absence | Absence | Absence | Absence | Absence |
| | | Size of Through Hole | mm | 0 | 0 | 0 | 0 | 0 | 0 | 0 | 0 | 0 | 0 | 0 | 0 | 0 | 0 | 0 |
| Physical Properties of Foam | Adhesivity (Presence or Absence of Floating) | | -- | O | O | O | O | O | O | O | O | O | O | O | O | O | O | O |

## Table 16

| Type | Item | | Unit | Example 16 | Example 17 | Example 18 | Example 19 | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|---|---|---|---|
| Physical Properties of Foam After Wet Heat Treatment | 5% Weight-Loss Temperature | | °C | 212 | 188 | 195 | 104 | 195 | 209 | 194 | 196 | 193 | 190 | 188 | 190 | 192 | 195 | 209 |
| | 600°C Ash Content | | % | 39.3 | 36.5 | 39.1 | 44 | 45.6 | 45.8 | 44.3 | 43.3 | 45.7 | 45.5 | 40.4 | 45.2 | 42.7 | 42.1 | 45.8 |
| | 700°C Ash Content | | % | 23.9 | 22 | 24 | 28.2 | 25.8 | 27.9 | 27.9 | 27.3 | 26.4 | 26.3 | 25.7 | 25.1 | 26.3 | 25.5 | 27.9 |
| | 300°C × 30 min. Retained Amount | | % | 72.8 | 69 | 69.6 | 73 | 73.3 | 77.1 | 71.2 | 71.7 | 73.5 | 72.8 | 70.2 | 72.2 | 73.8 | 73.1 | 77.1 |
| | 500°C × 30 min. Retained Amount | | % | 47.8 | 40.4 | 47.8 | 49.9 | 44.7 | 44.8 | 45.4 | 44.3 | 43.7 | 40.2 | 38.9 | 39.2 | 38.6 | 39.3 | 44.8 |
| | Compressive Strength | Measured Value | kPa | 522 | 460 | 500 | 518 | 493 | 513 | 478 | 470 | 475 | 460 | 455 | 453 | 463 | 467 | 513 |
| | | Change Before and After Treatment | % | 1.9 | 3.8 | 2.3 | 1.9 | 2.0 | 1.9 | 2.4 | 3.5 | 4.6 | 6.5 | 11.1 | 9.1 | 7.8 | 4.1 | 1.9 |
| | Adhesive Strength | Measured Value | kPa | 90 | 83 | 88 | 95 | 96 | 112 | 90 | 88 | 95 | 93 | 98 | 91 | 92 | 67 | 112 |
| | | Change Before and After Treatment | % | 3.2 | 5.7 | 4.3 | 2.1 | 5.9 | 2.6 | 5.3 | 5.4 | 8.7 | 7.0 | 9.3 | 10.8 | 8.9 | 16.3 | 2.6 |
| | Thermal Conductivity | Measured Value | W/(m·K) | 0.022 | 0.024 | 0.023 | 0.022 | 0.025 | 0.022 | 0.023 | 0.022 | 0.022 | 0.022 | 0.023 | 0.023 | 0.023 | 0.024 | 0.022 |
| | | Change Before and After Treatment | % | 4.8 | 9.1 | 4.5 | 4.8 | 8.7 | 4.8 | 9.5 | 10.0 | 4.8 | 4.8 | 4.5 | 9.5 | 12.5 | 20.0 | 4.8 |
| | Compressive Modulus | Measured Value | MPa | 25 | 17 | 19 | 22.6 | 19.3 | 20.5 | 16.7 | 15.8 | 18.4 | 16.5 | 17.7 | 17.4 | 17.0 | 15.2 | 20.5 |
| | | Change Before and After Treatment | % | 2.3 | 11.5 | 6.9 | 0.9 | 2.5 | 1.4 | 8.2 | 9.7 | 3.7 | 10.3 | 11.1 | 9.8 | 10.5 | 12.6 | 9.3 |
| | Dimensional Change | Change Before and After Treatment | % | 10 | 12 | 10 | 8 | 16 | 12 | 18 | 20 | 25 | 25 | 23 | 30 | 27 | 25 | 12 |
| | Volume Change (vol%@600°C, Electric Furnace) | | % | -20.4 | -39.4 | -33.5 | -27.4 | -26.7 | -17.2 | -23.8 | -24.6 | -20.4 | -31.2 | -35.3 | -33.4 | -34.7 | -42.4 | -27.9 |
| Combustion Properties | Flame Contact Test | Presence or Absence of Cross-sectional Cracks | | Absence | Absence | Absence | Absence | Absence | Absence | Absence | Absence | Absence | Absence | Absence | Absence | Absence | Absence | Absence |
| | | Depth of Carbonized Layer | mm | 3 | 3 | 3 | 3 | 3 | 3 | 3 | 3 | 7 | 12 | 10 | 9 | 9 | 7 | 5 |
| | Cone Calorimeter Test | Total Calorific Value /10min | MJ/m² | 4.5 | 5.3 | 4.8 | 4.6 | 5.4 | 4.3 | 5.7 | 5.6 | 5.3 | 6.4 | 6.3 | 6.3 | 6.4 | 4.8 | 4.3 |
| | | Total Calorific Value /20min | MJ/m² | 7.3 | 9.4 | 8.1 | 7.4 | 7.7 | 8.1 | 8.3 | 8.1 | 7.7 | 10.3 | 9.8 | 9.3 | 9.6 | 8.6 | 8.3 |
| | | Combustion Distance | mm | 2 | 7 | 5 | 2 | 2 | 2 | 5 | 5 | 7 | 15 | 10 | 10 | 12 | 2 | 2 |
| | | Burning Time | s | 3 | 12 | 8 | 3 | 3 | 3 | 7 | 8 | 10 | 20 | 15 | 15 | 15 | 3 | 3 |
| | UL94 Standard Combustibility (Standard 5V-A) | Presence or Absence of Drip and Cotton Ignition | | Absence | Absence | Absence | Absence | Absence | Absence | Absence | Absence | Absence | Absence | Absence | Absence | Absence | Absence | Absence |
| | | Presence or Absence of Penetration of the Flame | | Absence | Absence | Absence | Absence | Absence | Absence | Absence | Absence | Absence | Absence | Absence | Absence | Absence | Absence | Absence |
| | | Size of Through Hole | mm | 0 | 0 | 0 | 0 | 0 | 0 | 0 | 0 | 0 | 0 | 0 | 0 | 0 | 0 | 0 |
| Physical Properties of Foam | Adhesivity (Presence or Absence of Floating) | | - | ○ | ○ | ○ | ○ | ○ | ○ | ○ | ○ | ○ | ○ | ○ | ○ | ○ | ○ | ○ |

Table 17

| Type | Item | | Unit | Example 31 | Example 32 | Example 33 | Example 34 | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|---|---|---|---|---|---|
| Physical Properties of Foam After Wet Heat Treatment | 5% Weight-Loss Temperature | | °C | 204 | 205 | 205 | 185 | 190 | 180 | 195 | 192 | 191 | 187 | 210 | 205 | 203 | 193 | 186 |
| | 600°C Ash Content | | % | 44.6 | 44.3 | 44.0 | 38.6 | 40.3 | 35.2 | 43.2 | 42.5 | 42.2 | 41.8 | 45.8 | 44.7 | 43.5 | 42.8 | 42.5 |
| | 700°C Ash Content | | % | 26.3 | 26.4 | 26.1 | 17.5 | 19.7 | 16.3 | 26.1 | 24.8 | 25.2 | 23.7 | 27.9 | 26 | 25.8 | 25.6 | 14.3 |
| | 300°C × 30 min Retained Amount | | % | 75.2 | 75.0 | 75.1 | 68.9 | 70.3 | 64.5 | 74.3 | 71.7 | 72.2 | 68.4 | 77.1 | 75.1 | 73.2 | 70.1 | 65.3 |
| | 500°C × 30 min Retained Amount | | % | 41.2 | 40.8 | 40.5 | 32.2 | 35.4 | 27.8 | 44.5 | 41.7 | 42.5 | 39.8 | 44.8 | 47.1 | 45.8 | 42.6 | 40.3 |
| | Compressive Strength | Measured Value | kPa | 510 | 512 | 514 | 395 | 500 | 360 | 502 | 495 | 493 | 478 | 513 | 462 | 455 | 456 | 432 |
| | | Change Before and After Treatment | % | 3.8 | 3.9 | 3.7 | 16.0 | 2.3 | 22.6 | 3.5 | 4.3 | 4.3 | 6.3 | 1.9 | 4.0 | 7.1 | 8.4 | 7.7 |
| | Adhesive Strength | Measured Value | kPa | 107 | 104 | 92 | 80 | 81 | 78 | 110 | 108 | 111 | 114 | 112 | 80 | 81 | 102 | 83 |
| | | Change Before and After Treatment | % | 2.7 | 1.9 | 3.2 | 8.0 | 4.7 | 8.2 | 8.3 | 12.2 | 11.2 | 10.9 | 2.6 | 14.9 | 5.8 | 7.3 | 8.8 |
| | Thermal Conductivity | Measured Value | W/(m·K) | 0.021 | 0.022 | 0.022 | 0.023 | 0.022 | 0.023 | 0.023 | 0.024 | 0.024 | 0.025 | 0.022 | 0.024 | 0.024 | 0.023 | 0.022 |
| | | Change Before and After Treatment | % | 0.0 | 0.0 | 0.0 | 15.0 | 4.8 | 9.5 | 4.5 | 4.3 | 9.1 | 8.7 | 4.8 | 9.1 | 9.1 | 4.5 | 4.8 |
| | Compressive Modulus | Measured Value | MPa | 21.2 | 22.3 | 22.4 | 15.8 | 18.1 | 16.8 | 17.2 | 16.1 | 15.3 | 14.1 | 20.5 | 17.8 | 16.2 | 18.1 | 16.7 |
| | | Change Before and After Treatment | % | 9.8 | 8.6 | 11.5 | 13.2 | 6.2 | 4.6 | 10.4 | 20.7 | 17.7 | 28.4 | 9.3 | 6.8 | 12.9 | 10.4 | 4.6 |
| | Dimensional Change | Change Before and After Treatment | % | 10 | 12 | 11 | 26 | 10 | 30 | 15 | 18 | 20 | 25 | 12 | 13 | 15 | 15 | 23 |
| | Volume Change (vol% @600°C, Electric Furnace) | | % | -17.2 | -16.8 | -17 | -30 | -30 | -45 | -33 | -40 | -41 | -56 | -17.2 | -23.4 | -21.7 | -21.7 | -51.2 |
| Combustion Properties | Flame Contact Test | Presence or Absence of Cross-sectional Cracks | | Absence | Absence | Absence | Absence | Absence | Absence | Absence | Absence | Absence | Absence | Absence | Absence | Absence | Absence | Absence |
| | | Depth of Carbonized Layer | mm | 3 | 3 | 4 | 5 | 7 | 9 | 6 | 8 | 8 | 11 | 3 | 4 | 6 | 6 | 10 |
| | Cone Calorimeter Test | Total Calorific Value /10min | MJ/m² | 4.9 | 4.1 | 4.6 | 7.2 | 6.1 | 7.4 | 4.3 | 4.5 | 4.4 | 4.9 | 4.3 | 4.8 | 5.1 | 4.6 | 6.4 |
| | | Total Calorific Value /20min | MJ/m² | 8.1 | 6.5 | 7.3 | 14.4 | 12.5 | 14.7 | 7.1 | 7.7 | 7.6 | 8.8 | 6.8 | 7.9 | 8.5 | 8.5 | 11.1 |
| | | Combustion Distance | mm | 2 | 2 | 2 | 10 | 5 | 15 | 3 | 3 | 5 | 7 | 2 | 2 | 5 | 2 | 2 |
| | | Burning Time | s | 3 | 3 | 3 | 20 | 10 | 30 | 5 | 5 | 10 | 15 | 3 | 3 | 7 | 3 | 3 |
| | UL94 Standard Combustibility (Standard: 5V-A) | Presence or Absence of Drip and Cotton Ignition | | Absence | Absence | Absence | Absence | Absence | Absence | Absence | Absence | Absence | Absence | Absence | Absence | Absence | Absence | Absence |
| | | Presence or Absence of Penetration of the Flame | | Absence | Absence | Absence | Absence | Absence | Absence | Absence | Absence | Absence | Absence | Absence | Absence | Absence | Absence | Absence |
| | | Size of Through Hole | mm | 0 | 0 | 0 | 0 | 0 | 0 | 0 | 0 | 0 | 0 | 0 | 0 | 0 | 0 | 0 |
| Physical Properties of Foam | Adhesivity (Presence or Absence of Floating) | | | O | O | O | O | O | O | O | O | O | O | O | O | O | O | O |

# Table 18

| Type | Item | | Unit | Example 46 | Example 47 | Example 48 | Example 49 | Example 50 | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|---|---|---|---|
| Physical Properties of Foam After Wet Heat Treatment | 5% Weight-Loss Temperature | | °C | 194 | 209 | 212 | 213 | 215 | 209 | 206 | 208 | 209 | 209 | 210 | 209 | 209 | 174 | 179 |
| | 600°C Ash Content | | % | 32.1 | 45.8 | 46.3 | 46.9 | 47.3 | 45.8 | 44.5 | 45.6 | 45.8 | 46.1 | 45.8 | 44.8 | 44.1 | 9.7 | 19.8 |
| | 700°C Ash Content | | % | 21.5 | 27.9 | 28.4 | 28.9 | 29.3 | 27.9 | 27.1 | 28.1 | 28 | 27.9 | 28.2 | 28.1 | 28 | 5.4 | 21.8 |
| | 300°C×30 min Retained Amount | | % | 69.3 | 77.1 | 78.2 | 79.5 | 80.3 | 77.1 | 76.3 | 77.8 | 77.9 | 78.5 | 77.7 | 78 | 77.5 | 10.2 | 33.8 |
| | 500°C×30 min Retained Amount | | % | 42.5 | 44.8 | 45.2 | 45.7 | 46.1 | 44.8 | 42.7 | 47.2 | 47.5 | 47.7 | 48.1 | 48.2 | 48 | 1.9 | 11.1 |
| | Compressive Strength | Measured Value | kPa | 467 | 513 | 520 | 524 | 530 | 513 | 505 | 500 | 498 | 505 | 513 | 496 | 501 | 490 | 485 |
| | | Change Before and After Treatment | % | 4.3 | 1.9 | 1.9 | 3.0 | 2.8 | 1.9 | 1.9 | 3.8 | 3.9 | 3.3 | 1.9 | 5.0 | 3.7 | 2.0 | 3.8 |
| | Adhesive Strength | Measured Value | kPa | 90 | 112 | 97 | 93 | 80 | 112 | 96 | 72 | 79 | 90 | 112 | 109 | 108 | 84 | 87 |
| | | Change Before and After Treatment | % | 8.2 | 2.6 | 4.9 | 2.1 | 3.6 | 2.6 | 2.0 | 4.0 | 3.7 | 4.3 | 2.6 | 4.4 | 5.3 | 7.7 | 6.5 |
| | Thermal Conductivity | Measured Value | W/(m·K) | 0.023 | 0.022 | 0.023 | 0.024 | 0.025 | 0.022 | 0.024 | 0.023 | 0.022 | 0.022 | 0.022 | 0.023 | 0.024 | 0.023 | 0.023 |
| | | Change Before and After Treatment | % | 4.5 | 4.8 | 4.5 | 4.3 | 8.7 | 4.8 | 14.3 | 4.5 | 4.8 | 4.8 | 4.8 | 9.5 | 20.0 | 4.5 | 4.5 |
| | Compressive Modulus | Measured Value | MPa | 17.2 | 20.5 | 21.1 | 21.5 | 21.8 | 20.5 | 19.9 | 19.7 | 20.1 | 20 | 20.5 | 20.3 | 20.5 | 19.9 | 20.4 |
| | | Change Before and After Treatment | % | 6.0 | 9.3 | 8.7 | 7.7 | 6.8 | 9.3 | 9.1 | 9.2 | 6.9 | 8.3 | 9.3 | 7.7 | 6.4 | 1.5 | 1.9 |
| | Dimensional Change | Change Before and After Treatment | % | 18 | 12 | 10 | 9 | 9 | 12 | 15 | 15 | 13 | 12 | 12 | 10 | 10 | 15 | 12 |
| | Volume Change (volume at 600°C, Electric Furnace) | | % | -37.3 | -17.2 | -15.7 | -14.2 | -13.9 | -17.2 | -20.2 | -35.8 | -32.6 | -26.3 | -17.2 | -17.8 | -18.1 | -110 | -83.3 |
| Combustion Properties | Flame Contact Test | Presence or Absence of Cross-sectional Cracks | - | Absence | Absence | Absence | Absence | Absence | Absence | Absence | Absence | Absence | Absence | Absence | Absence | Absence | Presence | Absence |
| | | Depth of Carbonized Layer | mm | 7 | 3 | 3 | 3 | 2 | 3 | 5 | 3 | 3 | 3 | 3 | 3 | 3 | 11 | 10 |
| | Cone Calorimeter Test | Total Calorific Value /10min | MJ/m² | 5.5 | 4.3 | 5.1 | 5.5 | 6.1 | 4.3 | 4.5 | 4.8 | 4.7 | 4.6 | 4.3 | 4.3 | 3.3 | 7.1 | 8.4 |
| | | Total Calorific Value /20min | MJ/m² | 9.3 | 6.8 | 8.3 | 8.1 | 8.5 | 6.8 | 7.4 | 8.0 | 7.8 | 7.6 | 6.8 | 6.9 | 6.9 | 14.8 | 11.6 |
| | | Combustion Distance | mm | 2 | 2 | 2 | 2 | 3 | 2 | 3 | 3 | 2 | 2 | 2 | 2 | 2 | 10 | 7 |
| | UL94 Standard Combustibility (Standard 5V-A) | Burning Time | s | 3 | 3 | 3 | 3 | 5 | 3 | 5 | 5 | 3 | 3 | 3 | 3 | 3 | 15 | 10 |
| | | Presence or Absence of Drip and Cotton Ignition | - | Absence | Absence | Absence | Absence | Absence | Absence | Absence | Absence | Absence | Absence | Absence | Absence | Absence | Absence | Absence |
| | | Presence or Absence of Penetration of the Flame | - | Absence | Absence | Absence | Absence | Absence | Absence | Absence | Absence | Absence | Absence | Absence | Absence | Absence | Absence | Absence |
| | | Size of Through Hole | mm | 0 | 0 | 0 | 0 | 0 | 0 | 0 | 0 | 0 | 0 | 0 | 0 | 0 | 0 | 0 |
| Physical Properties of Foam | Adhesivity (Presence or Absence of Floating) | | - | ○ | ○ | ○ | ○ | ○ | ○ | ○ | ○ | ○ | ○ | ○ | ○ | ○ | ○ | ○ |

Table 19

EP 4 174 101 A1

| Type | Item | | Unit | Example 61 | Example 62 | Example 63 | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|---|---|---|---|---|
| Physical Properties of Foam After Wet Heat Treatment | 5% Weight-Loss Temperature | | °C | 190 | 211 | 219 | 224 | 190 | 192 | 194 | 199 | 203 | 204 | 200 | 195 | 196 | 200 | 193 |
| | 600°C Ash Content | | % | 27 | 42.5 | 46.0 | 46.3 | 27.7 | 45.8 | 46.9 | 47 | 46.1 | 46.8 | 46.9 | 46.0 | 45.8 | 46.2 | 46.3 |
| | 700°C Ash Content | | % | 22.4 | 29 | 29.4 | 30 | 11.9 | 17.6 | 24 | 26.1 | 26 | 25.7 | 24.8 | 25.3 | 25.7 | 25.7 | 26.1 |
| | 300°C×30 min. Retained Amount | | % | 60.3 | 78.6 | 81.2 | 82.8 | 11.9 | 34.1 | 49.7 | 65 | 72.7 | 70.1 | 66.8 | 73.7 | 75 | 73.8 | 71.4 |
| | 500°C×30 min. Retained Amount | | % | 23 | 48 | 49.6 | 50.7 | 4.4 | 11.6 | 22.4 | 35.4 | 40.8 | 39.1 | 37.2 | 43.6 | 45.8 | 42.9 | 43.7 |
| | Compressive Strength | Measured Value | kPa | 482 | 485 | 490 | 493 | 488 | 489 | 485 | 487 | 500 | 502 | 497 | 495 | 497 | 493 | 488 |
| | | Change Before and After Treatment | % | 5.1 | 5.8 | 5.4 | 5.2 | 3.4 | 4.1 | 5.3 | 6.0 | 3.3 | 3.5 | 3.7 | 4.3 | 4.4 | 5.6 | 5.8 |
| | Adhesive Strength | Measured Value | kPa | 90 | 95 | 97 | 100 | 96 | 92 | 90 | 87 | 82 | 87 | 86 | 93 | 90 | 95 | 96 |
| | | Change Before and After Treatment | % | 6.3 | 6.9 | 7.6 | 5.7 | 5.9 | 6.1 | 6.3 | 6.5 | 11.8 | 8.4 | 11.3 | 9.7 | 8.2 | 8.7 | 5.9 |
| | Thermal Conductivity | Measured Value | W/(m·K) | 0.023 | 0.024 | 0.024 | 0.024 | 0.024 | 0.023 | 0.022 | 0.022 | 0.025 | 0.024 | 0.024 | 0.024 | 0.025 | 0.023 | 0.022 |
| | | Change Before and After Treatment | % | 4.5 | 4.3 | 4.3 | 4.3 | 9.1 | 9.5 | 4.8 | 4.8 | 8.7 | 4.3 | 4.3 | 14.3 | 8.7 | 4.5 | 4.8 |
| | Compressive Modulus | Measured Value | MPa | 20.1 | 20.4 | 20.4 | 20.3 | 19.7 | 20 | 20 | 20.4 | 19 | 19 | 18.8 | 19.2 | 19.6 | 19.4 | 19.6 |
| | | Change Before and After Treatment | % | 4.3 | 3.8 | 4.7 | 5.6 | 3.9 | 3.4 | 4.3 | 2.9 | 3.6 | 4.0 | 3.6 | 4.5 | 8.4 | 4.9 | 7.5 |
| | Dimensional Change | Change Before and After Treatment | % | 10 | 10 | 10 | 10 | 10 | 10 | 10 | 10 | 13 | 15 | 12 | 15 | 10 | 10 | 10 |
| Combustion Properties | Volume Change (vol%@600°C, Electric Furnace) | | % | −30.4 | −18.4 | −17.4 | −16.4 | −38.8 | −31.7 | −17.7 | −16.1 | +122 | −28.4 | −30.4 | −20.3 | −24.7 | −23.6 | −20.9 |
| | Flame Contact Test | Presence or Absence of Cross-sectional Cracks | − | Absence | Absence | Absence | Absence | Absence | Absence | Absence | Absence | Absence | Absence | Absence | Absence | Absence | Absence | Absence |
| | | Depth of Carbonized Layer | mm | 8 | 3 | 3 | 2 | 8 | 4 | 3 | 3 | 8 | 4 | 7 | 4 | 6 | 3 | 4 |
| | Cone Calorimeter Test | Total Calorific Value /10min. | MJ/m² | 5 | 4.5 | 4.3 | 4 | 6.6 | 5.5 | 5.1 | 4.9 | 5 | 4.6 | 4.9 | 4.4 | 4.5 | 4.3 | 4.2 |
| | | Total Calorific Value /20min. | MJ/m² | 8.3 | 6.6 | 6.2 | 5.9 | 12.1 | 9.1 | 8.6 | 8 | 8.6 | 7.8 | 8.4 | 7.3 | 7.6 | 7.2 | 7 |
| | UL94 Standard Combustibility (Standard: 5V-A) | Combustion Distance | mm | 5 | 3 | 2 | 2 | 10 | 7 | 5 | 5 | 5 | 5 | 5 | 2 | 2 | 2 | 2 |
| | | Burning Time | s | 10 | 5 | 3 | 3 | 15 | 10 | 10 | 10 | 10 | 10 | 10 | 3 | 3 | 3 | 3 |
| | | Presence or Absence of Drip and Cotton Ignition | − | Absence | Absence | Absence | Absence | Absence | Absence | Absence | Absence | Absence | Absence | Absence | Absence | Absence | Absence | Absence |
| | | Presence or Absence of Penetration of the Flame | − | Absence | Absence | Absence | Absence | Absence | Absence | Absence | Absence | Absence | Absence | Absence | Absence | Absence | Absence | Absence |
| | | Size of Through Hole | mm | 0 | 0 | 0 | 0 | 0 | 0 | 0 | 0 | 0 | 0 | 0 | 0 | 0 | 0 | 0 |
| Physical Properties of Foam | Adhesivity (Presence or Absence of Floating) | | − | ○ | ○ | ○ | ○ | ○ | ○ | ○ | ○ | ○ | ○ | ○ | ○ | ○ | ○ | ○ |

Table 20

| Type | | | Item | Unit | Example 76 | Example 77 | Example 78 | Example 79 | Example 80 | Example 81 | Example 82 | Example 83 | Example 84 | Example 85 | Example 86 | Example 87 | Example 88 | Example 89 | Example 90 |
|---|---|---|---|---|---|---|---|---|---|---|---|---|---|---|---|---|---|---|---|
| Physical Properties of Foam After Wet Heat Treatment | | | 5% Weight-Loss Temperature | °C | 199 | 199 | 200 | 193 | 190 | 186 | 183 | 187 | 183 | 195 | 197 | 197 | 198 | 199 | 199 |
| | | | 600°C Ash Content | % | 47.6 | 48.0 | 46 | 48 | 46.2 | 46.6 | 46.6 | 46.7 | 45.3 | 45.7 | 46.2 | 44 | 45.2 | 46.1 | 46.8 |
| | | | 700°C Ash Content | % | 26.1 | 25.5 | 26 | 24.8 | 24 | 22.2 | 20 | 24 | 24.2 | 25 | 25.1 | 24.4 | 24.8 | 24.9 | 24.7 |
| | | | 300°C×30 min Retained Amount | % | 70.7 | 71.1 | 74.8 | 71.2 | 60.7 | 58.1 | 55.1 | 61.8 | 61.9 | 70.1 | 70.8 | 60.0 | 70.0 | 70.0 | 71.0 |
| | | | 500°C×30 min Retained Amount | % | 47.9 | 45.2 | 45.1 | 41.8 | 31.6 | 28.0 | 25.0 | 31.3 | 31.6 | 41.2 | 41.7 | 31.1 | 41.6 | 39.2 | 37.5 |
| | Compressive Strength | Measured Value | | kPa | 485 | 493 | 495 | 488 | 492 | 475 | 482 | 478 | 475 | 492 | 494 | 492 | 520 | 512 | 513 |
| | | Change Before and After Treatment | | % | 7.1 | 5.0 | 4.4 | 4.8 | 4.8 | 6.5 | 4.0 | 6.6 | 7.6 | 4.8 | 5.0 | 5.0 | 0.0 | 0.0 | 0.0 |
| | Adhesive Strength | Mesured Value | | kPa | 90 | 92 | 98 | 95 | 91 | 88 | 86 | 89 | 91 | 92 | 92 | 92 | 93 | 93 | 95 |
| | | Change Before and After Treatment | | % | 6.3 | 6.1 | 3.9 | 4.0 | 5.2 | 5.4 | 4.4 | 6.3 | 8.2 | 8.0 | 6.1 | 5.2 | 7.9 | 7.9 | 7.8 |
| | Thermal Conductivity | Measured Value | | W/(m·K) | 0.023 | 0.022 | 0.021 | 0.022 | 0.023 | 0.024 | 0.024 | 0.023 | 0.023 | 0.021 | 0.022 | 0.025 | 0.024 | 0.023 | 0.024 |
| | | Change Before and After Treatment | | % | 4.5 | 10.0 | 5.0 | 4.8 | 4.5 | 4.3 | 4.3 | 4.5 | 4.5 | 5.0 | 4.8 | 4.2 | 4.3 | 4.5 | 4.3 |
| | Compressive Modulus | Measured Value | | MPa | 19.1 | 19.4 | 18.5 | 17.8 | 17.4 | 16.5 | 16 | 16.4 | 16.2 | 17.2 | 16.2 | 15.2 | 17.2 | 17 | 17.3 |
| | | Change Before and After Treatment | | % | 3.0 | 5.2 | 3.6 | 2.7 | 2.2 | 3.5 | 3.6 | 4.7 | 3.0 | 2.8 | 3.6 | 5.6 | 4.4 | 4.0 | 4.4 |
| | Dimensional Change | Change Before and After Treatment | | % | 12 | 12 | 10 | 22 | 27 | 35 | 45 | 25 | 23 | 17 | 20 | 28 | 16 | 12 | 11 |
| | Volume Change (vol%, 600°C, Electric Furnace) | | | % | -17.5 | -22.5 | -22.5 | -23.0 | -22.4 | -23.2 | -32.5 | -28.9 | -30.4 | -26.4 | -27.0 | -67.1 | -45.2 | -23.8 | -35.5 |
| Combustion Properties | Flame Contact Test | Presence or Absence of Cross-sectional Cracks | | — | Absence | Absence | Absence | Absence | Absence | Absence | Absence | Absence | Absence | Absence | Absence | Absence | Absence | Absence | Absence |
| | | Depth of Carbonized Layer | | mm | 4 | 4 | 4 | 4 | 4 | 5 | 7 | 5 | 4 | 4 | 6 | 9 | 6 | 3 | 6 |
| | Cone Calorimeter Test | Total Calorific Value /10min | | MJ/m² | 4.1 | 6.2 | 6.1 | 5.8 | 4.3 | 4.4 | 5.6 | 4.3 | 4.4 | 4.6 | 4.5 | 4.7 | 5.7 | 4.3 | 4.9 |
| | | Total Calorific Value /20min | | MJ/m² | 6.8 | 11.3 | 11.3 | 9.2 | 7.1 | 7.8 | 9.5 | 7.4 | 7.7 | 8.4 | 8.2 | 8.8 | 10.4 | 7.3 | 8 |
| | | Combustion Distance | | mm | 2 | 2 | 5 | 5 | 2 | 2 | 3 | 2 | 2 | 3 | 3 | 5 | 10 | 2 | 3 |
| | | Burning Time | | s | 3 | 3 | 10 | 10 | 3 | 3 | 5 | 3 | 3 | 5 | 5 | 10 | 15 | 3 | 5 |
| | UL94 Standard Combustibility (Standard 5V-A) | Presence or Absence of Drip and Cotton Ignition | | — | Absence | Absence | Absence | Absence | Absence | Absence | Absence | Absence | Absence | Absence | Absence | Absence | Absence | Absence | Absence |
| | | Presence or Absence of Penetration of the Flame | | — | Absence | Absence | Absence | Absence | Absence | Absence | Absence | Absence | Absence | Absence | Absence | Absence | Absence | Absence | Absence |
| | | Size of Through Hole | | mm | 0 | 0 | 0 | 0 | 0 | 0 | 0 | 0 | 0 | 0 | 0 | 0 | 0 | 0 | 0 |
| Physical Properties of Foam | | | Adhesivity (Presence or Absence of Floating) | — | O | O | O | O | O | O | O | O | O | O | O | O | O | O | O |

Table 21

| Type | Item | | Unit | Example 91 | Example 92 | Example 93 | Example 94 | Comparative Example 1 | Comparative Example 2 | Comparison Example 3 | Comparative Example 4 | Comparative Example 5 |
|---|---|---|---|---|---|---|---|---|---|---|---|---|
| Physical Properties of Foam After Wet Heat Treatment | 5% Weight-Loss Temperature | | °C | 198 | 172 | 151 | 155 | 172 | 160 | 166 | 163 | 192 |
| | 600°C Ash Content | | % | 47 | 36.4 | 29.8 | 31.2 | 22.1 | 19.4 | 24.8 | 9.9 | 29.3 |
| | 700°C Ash Content | | % | 24.2 | 19.3 | 18.5 | 23.6 | 23.1 | 21.5 | 15 | 2.5 | 20.3 |
| | 300°C×30 min. Retained Amount | | % | 71.7 | 66.4 | 70.3 | 71.2 | 71.6 | 33.8 | 30.7 | 11.8 | 29 |
| | 500°C×30 min. Retained Amount | | % | 37.1 | 32.1 | 31.1 | 33.8 | 45.3 | 22.5 | 18.4 | 3.5 | 17.3 |
| | Compressive Strength | Mesured Value | kPa | 508 | 405 | 230 | 248 | 420 | 403 | 482 | 488 | 411 |
| | | Change Before and After Treatment | % | 0.0 | 20.3 | 54.7 | 51.2 | 10.1 | 15.7 | 3.8 | 4.7 | 13.5 |
| | Adhesive Strength | Mesured Value | kPa | 96 | 92 | 95 | 108 | 72 | 61 | Not measurable (peeling) | Not measurable (peeling) | Not measurable (peeling) |
| | | Change Before and After Treatment | % | 8.6 | 12.4 | 9.5 | -2.9 | 21.7 | 32.2 | Not measurable (peeling) | Not measurable (peeling) | Not measurable (peeling) |
| | Thermal Conductivity | Mesured Value | W/(m·K) | 0.025 | 0.025 | 0.026 | 0.024 | 0.024 | 0.025 | 0.023 | 0.024 | 0.025 |
| | | Change Before and After Treatment | % | 4.2 | 4.2 | 8.3 | 0.0 | 9.1 | 19.0 | 4.5 | 9.1 | 8.7 |
| | Compressive Modulus | Mesured Value | MPa | 17.5 | 16.7 | 17.2 | 18.3 | 9.8 | 9.2 | 9 | 14.5 | 10 |
| | | Change Before and After Treatment | % | 4.9 | 9.2 | 6.5 | 0.5 | 37.6 | 35.2 | 12.6 | 13.2 | 30.6 |
| | Dimensional Change | Change Before and After Treatment | % | 10 | 18 | 12 | 18 | 25 | 35 | 15 | 12 | 20 |
| Combustion Properties | Volume Change (vol%@500°C, Electric Furnace) | | % | -45.6 | -45.6 | -61.4 | -46 | -53 | -50 | -28 | -51 | -5 |
| | Flame Contact Test | Presence or Absence of Cross-sectional Cracks | - | Absence | Absence | Absence | Absence | Absence | Absence | Absence | Absence | Absence |
| | | Depth of Carbonized Layer | mm | 8 | 10 | 13 | 10 | 8 | 8 | 8 | 8 | 8 |
| | Cone Calorimeter Test | Total Calorific Value /10min | MJ/m² | 5.1 | 5.0 | 7.8 | 7.6 | 4.6 | 6.4 | 5.4 | 6.2 | 5.4 |
| | | Total Calorific Value /20min | MJ/m² | 9.1 | 8.3 | 16.7 | 14.6 | 22.3 | 11.2 | Not measurable | Not measurable | Not measurable |
| | UL94 Standard Combustibility (Standard: 5V-A) | Combustion Distance | mm | 3 | 3 | 10 | 7 | 3 | 15 | 7 | 15 | 7 |
| | | Burning Time | s | 5 | 5 | 5 | 3 | 5 | 60 | 15 | 60 | 15 |
| | | Presence or Absence of Drip and Cotton Ignition | - | Absence | Absence | Absence | Absence | Presence | Presence | Presence | Presence | Presence |
| | | Presence or Absence of Penetration of the Flame | - | Absence | Absence | Absence | Absence | Presence | Presence | Presence | Presence | Presence |
| | | Size of Through Hole | mm | 0 | 0 | 5 | 3 | 5 | 20 | 12 | 15 | 3 |
| Physical Properties of Foam | Adhesivity (Presence or Absence of Floating) | | - | ○ | ○ | ○ | ○ | ○ | ○ | × | × | × |

**Claims**

1.  A urea resin composition comprising a polyisocyanate compound (A), a polyamine compound (B), a trimerization catalyst, a foaming agent, a foam stabilizer and a flame retardant.

2.  A polyurea foam containing a flame retardant and having an isocyanurate structure.

3.  A urea resin composition comprising a polyisocyanate compound (A), a polyamine compound (B), a trimerization catalyst, a foaming agent and a foam stabilizer, wherein the urea resin composition does not contain a polyol compound, or a content of the polyol compound is 1/5 or less in mass ratio to a content of the polyamine compound (B).

4.  A composition for producing a polyurea foam, comprising a polyamine compound (B), a trimerization catalyst, a foaming agent, a foam stabilizer and a flame retardant.

5.  A composition for producing a polyurea foam, comprising a polyamine compound (B), a trimerization catalyst, a foaming agent, and a foam stabilizer, wherein the composition does not contain a polyol compound, or a content of the polyol compound is 1/5 or less in mass ratio to a content of the polyamine compound (B).

6.  A urea resin composition comprising a polyisocyanate compound (A), a polyamine compound (B), a trimerization catalyst, a foaming agent, a foam stabilizer, and a flame retardant, wherein a content of the polyamine compound (B) is 2.0% by mass or more based on 100% by mass of a total amount of the urea resin composition and a content of the trimerization catalyst is from 5 to 20 parts by mass, based on 100 parts by mass of the polyamine compound (B) in the urea resin composition.

7.  A polyurea foam obtained by foaming and curing the urea resin composition according to claim 6.

8.  A polyurea foam having an isocyanurate structure, wherein the polyurea foam has an isocyanurate ratio of 25 to 50%. The isocyanurate ratio is a value calculated by the following formula (1) based on an absorption spectrum obtained by an infrared spectroscopic analysis method of the polyurea foam.

(Formula 1)

$$\text{Isocyanurate ratio}(\%) = P1/(P1+P2+P3+P4)\times 100$$

P1: peak area derived from an isocyanurate structure contained in the absorption spectrum of the polyurea foam obtained by infrared spectroscopic analysis
P2: peak area derived from C=O of a urea structure contained in the absorption spectrum of the polyurea foam obtained by infrared spectroscopic analysis
P3: peak area derived from C=O of a urethane structure and the isocyanurate structure contained in the absorption spectrum of the polyurea foam obtained by infrared spectroscopic analysis
P4: peak area derived from N-H contained in the urethane structure and the urea structure contained in the absorption spectrum of the polyurea foam obtained by infrared spectroscopic analysis

# FIG. 1

Mold

Foaming and Curing →

Urea Resin
Composition

Foam Flow Direction Mold
(Rise Direction)

Mold Release ↓

Polyurea Foam

Foam Flow Direction
(Rise Direction)

CD Surface

Test Piece

← Processing

MD Surface

Polyurea Foam

## INTERNATIONAL SEARCH REPORT

International application No.

PCT/JP2021/024879

### A. CLASSIFICATION OF SUBJECT MATTER

C08G 18/09(2006.01)i; C08G 18/00(2006.01)i; C08G 18/32(2006.01)i; C08G 18/64(2006.01)i; C08G 18/76(2006.01)i; C08K 3/016(2018.01)i; C08K 3/02(2006.01)i; C08K 5/521(2006.01)i; C08L 75/02(2006.01)i; C08G 101/00(2006.01)n

FI: C08G18/09 020; C08G18/32 025; C08G18/64 015; C08G18/76; C08G18/00 K; C08G18/00 L; C08L75/02; C08K3/016; C08K5/521; C08K3/02; C08G18/00 J; C08G18/00 H; C08G101:00

According to International Patent Classification (IPC) or to both national classification and IPC

### B. FIELDS SEARCHED

Minimum documentation searched (classification system followed by classification symbols)
C08G18/00-18/87;71/00-71/04; C08K3/00-13/08;C08L1/00-101/14; C08G101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | JP 8-120048 A (NIPPON POLYURETHANE INDUSTRY CO., LTD.) 14 May 1996 (1996-05-14) claims, paragraphs [0016], [0028], examples | 1-5, 7<br>6, 8 |
| X<br>A | JP 8-183832 A (NIPPON POLYURETHANE INDUSTRY CO., LTD.) 16 July 1996 (1996-07-16) claims, paragraphs [0015], [0027], examples | 1-5, 7<br>6, 8 |
| X<br>A | JP 2014-125623 A (SANYO CHEMICAL INDUSTRIES, LTD.) 07 July 2014 (2014-07-07) claims, paragraphs [0038], [0043], examples | 1-5, 7<br>6, 8 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 August 2021 (16.08.2021) | 24 August 2021 (24.08.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2021/024879 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-052042 A (SANYO CHEMICAL INDUSTRIES, LTD.) 19 March 2015 (2015-03-19) entire text | 1-8 |
| A | JP 2-082420 A (MITSUBISHI ELECTRIC CORP.) 23. March 1990 (1990-03-23) entire text | 1-8 |
| A | JP 9-071628 A (SANYO CHEMICAL INDUSTRIES, LTD.) 18 March 1997 (1997-03-18) entire text | 1-8 |
| A | JP 2000-512331 A (IMPERIAL CHEMICAL INDUSTRIES PLC) 19 September 2000 (2000-09-19) entire text | 1-8 |
| A | JP 57-151613 A (ASAHI-OLIN, LTD.) 18 September 1982 (1982-09-18) entire text | 1-8 |
| A | JP 4-356518 A (KOBE STEEL, LTD.) 10 December 1992 (1992-12-10) entire text | 1-8 |
| A | JP 10-195225 A (SANYO CHEMICAL INDUSTRIES, LTD.) 28 July 1998 (1998-07-28) entire text | 1-8 |
| A | JP 10-219015 A (TOSOH CORP.) 18 August 1998 (1998-08-18) entire text | 1-8 |

Form PCT/ISA/210 (continuation of second sheet) (January 2015)

INTERNATIONAL SEARCH REPORT
Information on patent family members

International application No.

PCT/JP2021/024879

| Patent Documents referred in the Report | Publication Date | Patent Family | Publication Date |
|---|---|---|---|
| JP 8-120048 A | 14 May 1996 | (Family: none) | |
| JP 8-183832 A | 16 Jul. 1996 | (Family: none) | |
| JP 2014-125623 A | 07 Jul. 2014 | (Family: none) | |
| JP 2015-052042 A | 19 Mar. 2015 | (Family: none) | |
| JP 2-082420 A | 23 Mar. 1990 | (Family: none) | |
| JP 9-071628 A | 18 Mar.1997 | (Family: none) | |
| JP 2000-512331 A | 19 Sep. 2000 | US 6339110 B1 entire text KR 10-2000-0010856 A CN 1222168 A | |
| JP 57-151613 A | 18 Sep. 1982 | (Family: none) | |
| JP 4-356518 A | 10 Dec. 1992 | US 5:37470:3 A entire text GB 2249792 A | |
| JP 10-195225 A | 28 Jul. 1998 | (Family: none) | |
| JP 10-219015 A | 18 Aug. 1998 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013023510 A
- JP 2017075326 A